# EUROPEAN PATENT SPECIFICATION

(11) **EP 1 702 962 B1**
(45) Date of publication and mention of the grant of the patent: **24.12.2008**
(21) Application number: 06003312.3
(22) Date of filing: 17.02.2006
(51) Int. Cl.: C09D 11/10

(54) **Ink composition containing a photo-acid and a photo-base generator and processes using them**
Tintenzusammensetzung enthaltend einen Photosäure- und einen Photobase-Erzeuger und Verfahren mit dessen Verwendung
Composition d'encre contenant un générateur photo-acide et photo-base et procedures l'utilisant

(30) Priority: 17.03.2005 JP 2005076196
(43) Date of publication of application: 20.09.2006
(73) Proprietor: FUJIFILM Corporation, Minato-ku Tokyo (JP)
(72) Inventor: Aoai, Toshiaki, Yoshida-cho Haibara-gun (JP)
(74) Representative: HOFFMANN EITLE

(56) References cited:
- EP-A- 0 633 502
- US-A- 5 204 218
- US-A1- 2004 052 968
- US-A1- 2004 201 659
- DATABASE WPI Section Ch, Week 200423 Derwent Publications Ltd., London, GB; Class A89, AN 1998-256610 XP002387733 & JP 03 514590 B2 (SHINETSU CHEM IND CO LTD) 31 March 2004 (2004-03-31)

## Description

The present invention relates to an ink composition suitably used for inkjet recording, an inkjet recording method, a printed material employing same, a lithographic printing plate obtained using the ink composition, and a process for producing a lithographic printing plate. More particularly, it relates to an ink composition suitable for inkjet recording that cures with high sensitivity upon exposure to radiation, can form a high quality image, has good storage stability, and does not degrade image quality or a substrate due to acid remaining in an image area after forming an image, an inkjet recording method, a printed material employing same, a lithographic printing plate obtained using the ink composition, and a process for producing a lithographic printing plate.

With regard to an image recording method for forming an image on a recording medium such as paper based on an image data signal, there are an electrophotographic system, sublimation type and melt type thermal transfer systems, an inkjet system, etc. Among these, the inkjet system can be carried out using inexpensive equipment and, since an image is formed directly on a recording medium by discharging an ink only on a required image area, the ink can be used efficiently and the running cost is low. Furthermore, there is little noise and it is excellent as an image recording system.

In accordance with the inkjet system, it is possible to print not only on plain paper but also on a non-water absorbing recording medium such as a plastic sheet or a metal sheet, but achieving a higher printing speed and higher image quality is an important object, and the time required for drying and curing droplets after printing greatly influences the productivity of a printed material and the sharpness of a printed image.

As one inkjet system, there is a recording system using an inkjet recording ink that can be cured by exposure to radiation. In accordance with this method, by irradiating with radiation immediately after printing or after a certain period of time so as to cure an ink droplet, it is possible to improve the printing productivity and form a sharp image.

By achieving higher sensitivity for an inkjet recording ink that can be cured by exposure to radiation such as ultraviolet rays, a large number of benefits are provided, such as high curability toward radiation, improvement in the productivity of inkjet recording, a reduction in power consumption, longer lifetime due to a decrease in the load on a radiation generator, and prevention of volatilization of a low molecular weight material originating from insufficient curing. Furthermore, higher sensitivity particularly improves the strength of an image formed using the inkjet recording ink, and when it is applied to the formation of a lithographic printing plate in particular, the cure strength of an image area increases, and high plate life can be obtained.

Such an inkjet system of a type that is cured by radiation such as, for example, ultraviolet rays, generates a relatively low degree of odor and can be applied to recording on a recording medium that does not have quick drying properties or ink absorbing properties; the system has therefore attracted attention in recent years, and an inkjet ultraviolet-curable ink composition employing radical polymerization has been disclosed (ref., for example, JP-A-63-235382, JP-A-3-216379, JP-A-5-214280, JP-B-6-21256, and JP-B-6-62905; JP-A denotes a Japanese unexamined patent application publication, and JP-B denotes a Japanese examined patent application publication). Furthermore, for the purpose of providing an inkjet recording ink that enables an image having high adhesion to a recording medium to be recorded with high sensitivity without spreading, even for a support for which it is usually difficult to carry out direct recording by the inkjet recording method, and where the inkjet recording ink has little skin irritation or sensitization and has high safety, there has been proposed a composition containing a color material and a polymerizable compound comprising a group of specified radically polymerizable acrylate compounds (ref., for example, JP-A-2003-192943 and JP-A-2003-192944). These radically polymerizable inks have excellent curing speed and can form an image without spreading, but they have the problem that the adhesion to the recording medium is degraded due to volume shrinkage during curing.

Because of this, in order to improve the adhesion to the recording medium, cationically polymerizable ink compositions having a low shrinkage ratio during ultraviolet curing have been proposed (ref., for example, JP-A-9-183928). However, these cationically polymerizable inks do not have sufficient storage stability due to a reaction involving an acid generated over time, and this is a big barrier to their actual application. Because of this, as an attempt to improve the storage stability, there has been proposed a technique in which a basic compound or an agent that generates a base on heating is added (ref., for example, JP-A-2003-312121, JP-A-2003-341217, and JP-A-2004-91558), but it has been found that there is the new problem that, since the basic compound inhibits the function of an acid generated on exposure to light, the curing sensitivity of the ink is degraded. Because of this, there has been a desire for the achievement of storage stability and high sensitivity at the same time.

Furthermore, in the case of a cationically polymerizable ink, since an acid of a polymerization catalyst remains after an image is formed and causes degradation of the image quality or deterioration of the substrate, there has been a strong desire to prevent acid from remaining.

It is an object of the present invention, which has been accomplished under the above-mentioned circumstances, to provide an ink composition that cures with high sensitivity upon exposure to radiation, can form a high quality image, has excellent adhesion to a recording medium, and has good storage stability, and an inkjet recording method employing the ink composition.

It is another object of the present invention to provide an ink composition that suppresses degradation of the image quality of a printed material or a lithographic printing plate formed using a cationically polymerizable ink composition, and degradation of a substrate, and an inkjet recording method employing the ink composition.

Furthermore, it is yet another object of the present invention to provide a printed material and a lithographic printing plate obtained using an ink composition that has excellent storage stability and can be cured with high sensitivity upon exposure to ultraviolet rays, and a process for producing a lithographic printing plate.

As a result of an intensive investigation by the present inventors, it has been found that, by adding a compound that generates a compound having a basic nitrogen atom upon exposure to radiation, it is possible to obtain an ink composition in which the storage stability is improved while maintaining high sensitivity, the discharge properties, the particle shape retention, and the adhesion to a recording medium of the ink composition are enhanced, and degradation of the image quality and degradation of a substrate after an image is formed are suppressed, and the present invention has thus been accomplished.

That is, the present invention is as described in <1> and <6> to <9> below. <2> to <5>, which are preferred embodiments, are also shown below.
<1> An ink composition comprising a cationically polymerizable compound (a), a compound (b) that generates an acid when exposed to radiation, and a compound (c) that generates a compound having a basic nitrogen atom when exposed to radiation, selected from UV rays, visible light and an electron beam, wherein the compound (c) that generates a compound having a basic nitrogen atom when exposed to radiation is at least one selected from the group consisting of compounds represented by Formulae (I) to (IX) below; 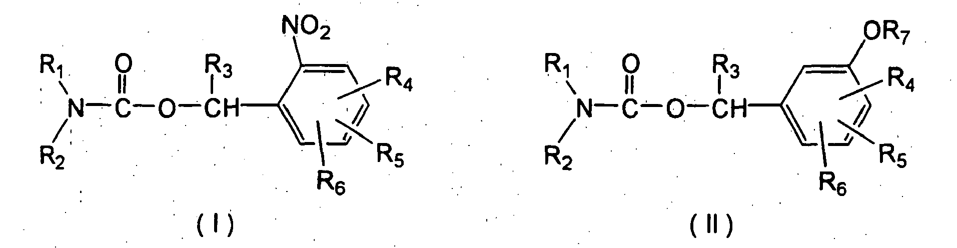 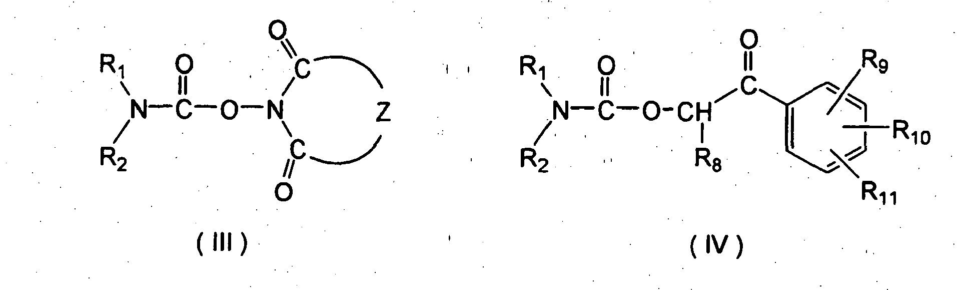 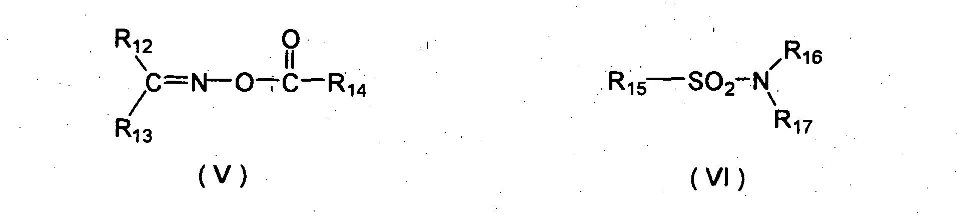 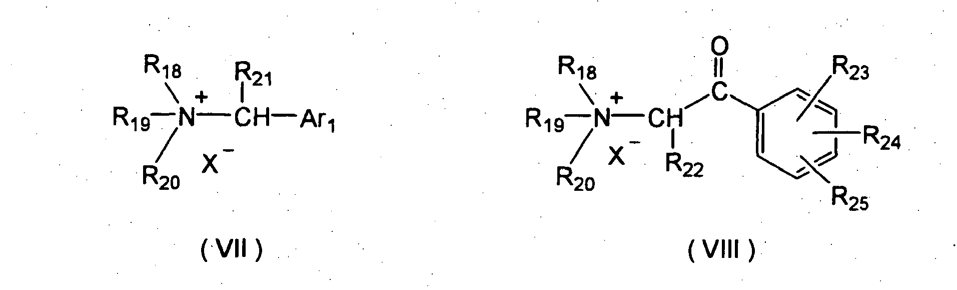 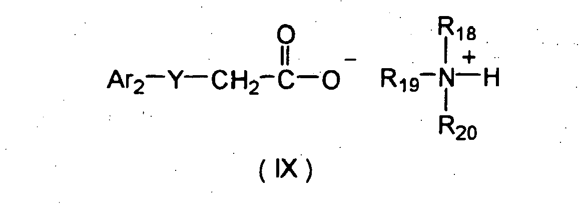 in Formulae (I) to (IX), R₁, R₂, R₁₆, R₁₇, R₁₈, R₁₉, and R₂₀ independently denote a hydrogen atom, an alkyl group, a cycloalkyl group, an aralkyl group, or an aryl group, R₃, R₈, R₂₁, and R₂₂ independently denote a hydrogen atom, an alkyl group, or an aryl group, R₄, R₅, and R₆ independently denote a hydrogen atom, a halogen atom, an alkyl group, a cycloalkyl group, an aralkyl group, an aryl group, an -NO₂ group, or an -OR₇ group, R₇ denotes an alkyl group, R₉, R₁₀, R₁₁, R₂₃, R₂₄, and R₂₅ independently denote a hydrogen atom, a halogen atom, an alkyl group, a cycloalkyl group, an aralkyl group, or an -OR₇ group, R₁₂ and R₁₃ independently denote an alkyl group, a cycloalkyl group, an aralkyl group, an aryl group, an acyl group, or a -CN group, R₁₄ denotes an alkyl group, a cycloalkyl group, an aralkyl group, an aryl group, or an -N(R₁)(R₂) group, R₁₅ denotes an alkyl group, a cycloalkyl group, an aralkyl group, or an aryl group, Ar₁ and Ar₂ denote aryl groups, Z denotes an atomic group that, together with an imide group in Formula (III), forms a monocyclic or polycyclic aliphatic ring, aromatic ring, or hetero ring, Y denotes an NH group, a sulfur atom, or an oxygen atom, X⁻ denotes a monovalent or polyvalent anion and, furthermore, R₁ and R₂ in Formulae (I) to (IV), two of R₄ to R₆ in Formulae (I) and (II), two of R₉ to R₁₁ in Formula (IV), R₁₂ and R₁₃ in Formula (V), R₁₆ and R₁₇ in Formula (VI), two of R₁₈ to R₂₀ in Formulae (VII) to (IX), Ar₁ and R₂₁ in Formula (VII), and two of R₂₃ to R₂₅ in Formula (VIII) may be bonded together to form an aliphatic ring, an aromatic ring, or a hetero ring,
<2> the ink composition according to <1> above, wherein the efficiency of the compound (b) in generating an acid when exposed to radiation is higher than the efficiency of the compound (c) in generating a compound having a basic nitrogen atom when exposed to radiation,
<3> the ink composition according to any one of <1> to <2> above, wherein it further comprises a colorant (d),
<4> the ink composition according to <3> above, wherein the colorant (d) is a pigment or an oil-soluble dye,
<5> the ink composition according to any one of <1> to <4> above, wherein it is for inkjet recording use,
<6> an inkjet recording method comprising a step (a) of discharging an ink composition onto a recording medium, and a step (b) of irradiating the discharged ink composition with radiation so as to cure the ink composition, the ink composition being the ink composition according to any one of <1> to <5> above,
<7> a printed material recorded by the inkjet recording method according to <6> above,
<8> a process for producing a lithographic printing plate, the process comprising a step (a) of discharging the ink composition according to any one of <1> to <5> above onto a hydrophilic support, and a step (b) of irradiating the discharged ink composition with radiation so as to cure the ink composition, thus forming a hydrophobic image on the hydrophilic support by curing the ink composition, and
<9> a lithographic printing plate produced by the lithographic printing plate production process according to <8> above.

The ink composition of the present invention can not only give a high quality printed material by forming an image having high image quality and excellent strength when used in normal printing, but can also be used suitably for production of a resist, a color filter, or an optical disk, and is useful as a stereolithographic material.

Furthermore, by employing an inkjet recording method, since by curing with high sensitivity an image area having high strength can be formed directly on a non-absorbing recording medium based on digital data, the ink composition of the present invention can be used suitably for production of a lithographic printing plate, in particular, a large area lithographic printing plate equal to or larger than A2 size, and the lithographic printing plate thus obtained has excellent plate life.

In accordance with the present invention, it is possible to provide an inkjet recording ink composition that cures with high sensitivity when exposed to radiation, can form a high quality image, has excellent adhesion to a recording medium, and has good storage stability, and an inkjet recording method employing the ink composition.

Furthermore, a printed material obtained using the ink composition having excellent storage stability and capable of curing with high sensitivity when exposed to ultraviolet rays has high image quality, excellent strength for an image area, and has suppressed degradation of image quality and deterioration of a substrate over time. Similarly, in accordance with use of the ink composition of the present invention, there is exhibited the effect that a lithographic printing plate having high plate life and high image quality can be produced based on digital data.

The ink composition of the present invention can be cured when exposed to radiation, and comprises a cationically polymerizable compound (a), a compound (b) that generates an acid when exposed to radiation (hereinafter, also called a 'photo-acid generator'), and a compound (c) that generates a compound having a basic nitrogen atom when exposed to radiation (hereinafter, also called 'photo-base generator'), and may further comprise a colorant (d) as desired. In the ink composition of the present invention, it is preferable that the compounds (b) and (c) are selected so that the efficiency of the compound (b) in generating an acid when exposed to radiation (hereinafter, also called the generating efficiency of (b)) is higher than the efficiency of the compound (c) in generating a compound having a basic nitrogen atom when exposed to radiation (hereinafter, also called the generating efficiency of (c)); this enables the sensitivity of the ink composition to be prevented from deteriorating, and the effects of the present invention can be exhibited well. The generating efficiencies of (b) and (c) are of course compared under the same conditions.

The 'radiation' referred to in the present invention includes ultraviolet rays, visible rays, and electron beams and, among these, ultraviolet rays and electron beams are preferable from the viewpoint of curing sensitivity and the availability of equipment, and ultraviolet rays are particularly preferable. With regard to the ink composition of the present invention, an ink composition that can be cured when exposed to ultraviolet rays as radiation is therefore preferable.

The light source for the radiation for component (c) includes room lighting such as a fluorescent lamp and sunlight, to which the printed material is exposed over time.

Components used in the ink composition of the present invention are now explained in turn.

### Cationically_polymerizable compound (a)

The cationically polymerizable compound (a) used in the present invention is not particularly limited as long as it is a compound that undergoes a polymerization reaction by virtue of an acid generated by the photo-acid generator (b), which will be described later, and is cured, and various types of cationically polymerizable monomers known as photo-cationically polymerizable monomers may be used. Examples of the cationically polymerizable monomer include epoxy compounds, vinyl ether compounds, oxetane compounds described in JP-A-6-9714, JP-A-2001-31892, JP-A-2001-40068, JP-A-2001-55507, JP-A-2001-310938, JP-A-2001-310937, JP-A-2001-220526, etc.

Examples of the epoxy compounds include aromatic epoxides, alicyclic epoxides, and aliphatic epoxides, and examples of the aromatic epoxide include di- or polyglycidyl ethers produced by a reaction between epichlorohydrin and a polyhydric phenol having at least one aromatic nucleus or an alkylene oxide adduct thereof; specific examples include di- or polyglycidyl ethers of bisphenol A or an alkylene oxide adduct thereof, di- or polyglycidyl ethers of hydrogenated bisphenol A or an alkylene oxide adduct thereof, and novolac type epoxy resins. Examples of the alkylene oxide above include ethylene oxide and propylene oxide.

Examples of the alicyclic epoxides include cyclohexene oxide- and cyclopentene oxide-containing compounds obtained by epoxidizing a compound having at least one cycloalkene ring such as a cyclohexene ring or a cyclopentene ring with an appropriate oxidizing agent such as hydrogen peroxide or a peracid.

Examples of the aliphatic epoxides include di- or polyglycidyl ethers of an aliphatic polyhydric alcohol or an alkylene oxide adduct thereof, and representative examples thereof include diglycidyl ethers of an alkylene glycol such as the diglycidyl ether of ethylene glycol, the diglycidyl ether of propylene glycol, and the diglycidyl ether of 1,6-hexanediol, polyglycidyl ethers of a polyhydric alcohol such as the di- or triglycidyl ether of glycerol or an alkylene oxide adduct thereof, and diglycidyl ethers of a polyalkylene glycol such as the diglycidyl ether of polyethylene glycol or an alkylene oxide adduct thereof and the diglycidyl ether of polypropylene glycol or an alkylene oxide adduct thereof. Examples of the alkylene oxide above include ethylene oxide and propylene oxide.

Examples of monofunctional epoxy compounds used in the present invention include phenyl glycidyl ether, *p*-*tert-*butylphenyl glycidyl ether, butyl glycidyl ether, 2-ethylhexyl glycidyl ether, allyl glycidyl ether, 1,2-butylene oxide, 1,3-butadiene monooxide, 1,2-epoxydodecane, epichlorohydrin, 1,2-epoxydecane, styrene oxide, cyclohexene oxide, 3-methacryloyloxymethylcyclohexene oxide, 3-acryloyloxymethylcyclohexene oxide, and 3-vinylcyclohexene oxide.

Furthermore, examples of polyfunctional epoxy compounds include bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolac resins, hydrogenated bisphenol A diglycidyl ether, hydrogenated bisphenol F diglycidyl ether, hydrogenated bisphenol S diglycidyl ether, 3,4-epoxycyclohexenylmethyl-3',4'-epoxycyclohexenecarboxylate,2-(3,4-epoxycyclohexyl-5,5-spiro-3,4-epoxy)cyclohexane-meta-dioxane, bis(3,4-epoxycyclohexylmethyl) adipate, vinylcyclohexene dioxide, 4-vinylepoxycyclohexane, bis(3,4-epoxy-6-methylcyclohexylmethyl) adipate, 3,4-epoxy-6-methylcyclohexenyl 3',4'-epoxy-6'-methylcyclohexenecarboxylate,methylenebis(3,4-epoxycyclohexane) dicyclopentadiene diepoxide, the di(3,4-epoxycyclohexylmethyl) ether of ethylene glycol, ethylene bis(3,4-epoxycyclohexanecarboxylate), dioctyl epoxyhexahydrophthalate, di-2-ethylhexyl epoxyhexahydrophthalate, 1,4-butanediol diglycidyl ether, 1,6-hexanediol diglycidyl ether, glycerol triglycidyl ether, trimethylolpropane triglycidyl ether, polyethylene glycol diglycidyl ether, polypropylene glycol diglycidyl ether, 1,13-tetradecadiene dioxide, limonene dioxide, 1,2,7,8-diepoxyoctane, and 1,2,5,6-diepoxycyclooctane.

Among these epoxy compounds, the aromatic epoxides and the alicyclic epoxides are preferable from the viewpoint of excellent curing speed, and the alicyclic epoxides are particularly preferable.

Examples of the vinyl ether compounds include di- or tri-vinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether, and monovinyl ether compounds such as ethyl vinyl ether, *n*-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, *n*-propyl vinyl ether, isopropyl vinyl ether, isopropenyl vinyl ether, dodecyl vinyl ether, and diethylene glycol monovinyl ether.

Specific examples of monofunctional vinyl ethers include methyl vinyl ether, ethyl vinyl ether, propyl vinyl ether, *n*-butyl vinyl ether, *t*-butyl vinyl ether, 2-ethylhexyl vinyl ether, *n*-nonyl vinyl ether, lauryl vinyl ether, cyclohexyl vinyl ether, cyclohexylmethyl vinyl ether, 4-methylcyclohexylmethyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethylcyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether, and phenoxypolyethylene glycol vinyl ether.

Furthermore, examples of polyfunctional vinyl ethers include divinyl ethers such as ethylene glycol divinyl ether, diethylene glycol divinyl ether, polyethylene glycol divinyl ether, propylene glycol divinyl ether, butylene glycol divinyl ether, hexanediol divinyl ether, bisphenol A alkylene oxide divinyl ether, and bisphenol F alkylene oxide divinyl ether; and polyfunctional vinyl ethers such as trimethylolethane trivinyl ether, trimethylolpropane trivinyl ether, ditrimethylolpropane tetravinyl ether, glycerol trivinyl ether, pentaerythritol tetravinyl ether, dipentaerythritol pentavinyl ether, dipentaerythritol hexavinyl ether, an ethylene oxide adduct of trimethylolpropane trivinyl ether, a propylene oxide adduct of trimethylolpropane trivinyl ether, an ethylene oxide adduct of ditrimethylolpropane tetravinyl ether, a propylene oxide adduct of ditrimethylolpropane tetravinyl ether, an ethylene oxide adduct of pentaerythritol tetravinyl ether, a propylene oxide adduct of pentaerythritol tetravinyl ether, an ethylene oxide adduct of dipentaerythritol hexavinyl ether, and a propylene oxide adduct of dipentaerythritol hexavinyl ether.

As the vinyl ether compound, the di- or tri-vinyl ether compounds are preferable from the viewpoint of curability, adhesion to a recording medium, surface hardness of the image formed, etc., and the divinyl ether compounds are particularly preferable.

The oxetane compound in the present invention means a compound having an oxetane ring, and may be selected freely from known oxetane compounds such as those described in JP-A-2001-220526, JP-A-2001-310937, and JP-A-2003-341217.

As the compound having an oxetane ring that can be used in the ink composition of the present invention, a compound having 1 to 4 oxetane rings in the structure is preferable. In accordance with use of such a compound, it becomes easy to maintain the viscosity of the ink composition in a range that gives good handling properties and, furthermore, the cured ink can be given high adhesion to the recording medium, which is preferable.

Examples of compounds having 1 to 2 oxetane rings in the molecule include compounds represented by Formulae (1) to (3) below.

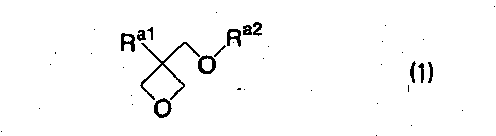

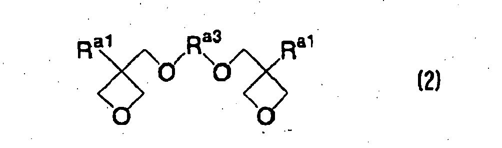

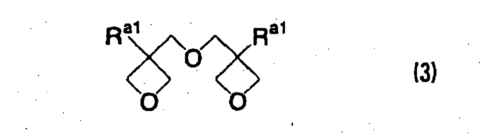

R^{a1} denotes a hydrogen atom, an alkyl group having 1 to 6 carbons, a fluoroalkyl group having 1 to 6 carbons, an allyl group, an aryl group, a furyl group, or a thienyl group. When there are two R^{a1} in the molecule, they may be identical to or different from each other.

Examples of the alkyl group include a methyl group, an ethyl group, a propyl group, and a butyl group, and preferred examples of the fluoroalkyl group include those obtained by substituting any of the hydrogen atoms of the above alkyl groups with a fluorine atom.

R^{a2} denotes a hydrogen atom, an alkyl group having 1 to 6 carbons, an alkenyl group having 2 to 6 carbons, a group having an aromatic ring, an alkylcarbonyl group having 2 to 6 carbons, an alkoxycarbonyl group having 2 to 6 carbons, or an *N*-alkylcarbamoyl group having 2 to 6 carbons. Examples of the alkyl group include a methyl group, an ethyl group, a propyl group, and a butyl group, examples of the alkenyl group include a 1-propenyl group, a 2-propenyl group, a 2-methyl-1-propenyl group, a 2-methyl-2-propenyl group, a 1-butenyl group, a 2-butenyl group, and a 3-butenyl group, and examples of the group having an aromatic ring include a phenyl group, a benzyl group, a fluorobenzyl group, a methoxybenzyl group, and a phenoxyethyl group. Examples of the alkylcarbonyl group include an ethylcarbonyl group, a propylcarbonyl group, and a butylcarbonyl group, examples of the alkoxycarbonyl group include an ethoxycarbonyl group, a propoxycarbonyl group, and a butoxycarbonyl group, and examples of the *N*-alkylcarbamoyl group include an ethylcarbamoyl group, a propylcarbamoyl group, a butylcarbamoyl group, and a pentylcarbamoyl group.

R^{a3} denotes a linear or branched alkylene group, a linear or branched poly(alkyleneoxy) group, a linear or branched unsaturated hydrocarbon group, a carbonyl group, a carbonyl group-containing alkylene group, a carboxyl group-containing alkylene group, a carbamoyl group-containing alkylene group, or a group shown below. Examples of the alkylene group include an ethylene group, a propylene group, and a butylene group, and examples of the poly(alkyleneoxy) group include a poly(ethyleneoxy) group and a poly(propyleneoxy) group. Examples of the unsaturated hydrocarbon group include a propenylene group, a methylpropenylene group, and a butenylene group.

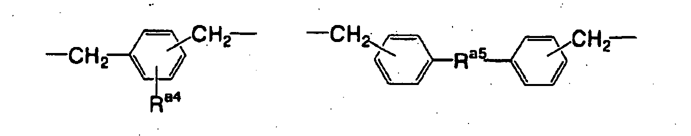

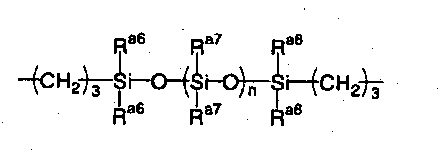

When R^{a3} is the above-mentioned polyvalent group, R^{a4} denotes a hydrogen atom, an alkyl group having 1 to 4 carbons, an alkoxy group having 1 to 4 carbons, a halogen atom, a nitro group, a cyano group, a mercapto group, a lower alkylcarboxyl group, a carboxyl group, or a carbamoyl group.

R^{a5} denotes an oxygen atom, a sulfur atom, a methylene group, NH, SO, SO₂, C(CF₃)₂, or, C(CH₃)₂.

R^{a6} denotes an alkyl group having 1 to 4 carbons or an aryl group, and n is an integer of 0 to 2,000. R^{a7} denotes an alkyl group having 1 to 4 carbons, an aryl group, or a monovalent group having the structure below. In the formula, R^{a8} denotes an alkyl group having 1 to 4 carbons or an aryl group, and m is an integer of 0 to 100.

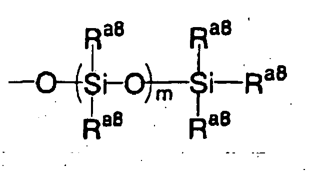

Examples of the compound having 3 to 4 oxetane rings in the molecule include compounds represented by Formula (4) below.

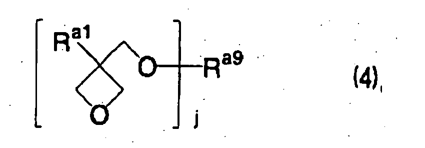

In Formula (4), R^{a1} denotes the same as in Formula (1) above. Furthermore, examples of R^{a9}, which is a polyvalent linking group, include a branched alkylene group having 1 to 12 carbons such as a group represented by A to C below, a branched poly(alkyleneoxy) group such as a group represented by D below, and a branched polysiloxane group such as a group represented by E below. j is 3 or 4.

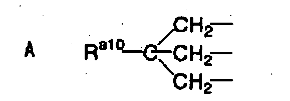

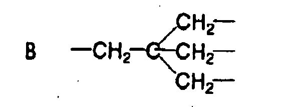

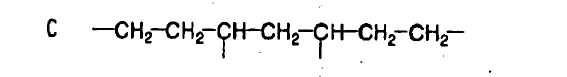

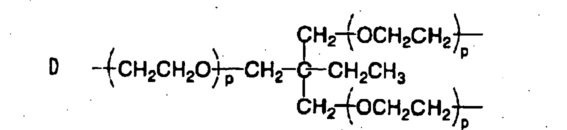

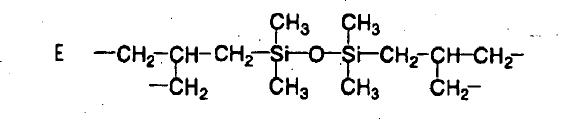

In the above A, R^{a10} denotes a methyl group, an ethyl group, or a propyl group. Furthermore, in the above D, p is an integer of 1 to 10.

Moreover, as another embodiment of the oxetane compound that can be suitably used in the present invention, a compound having an oxetane ring on a side chain, represented by Formula (5) below, can be cited.

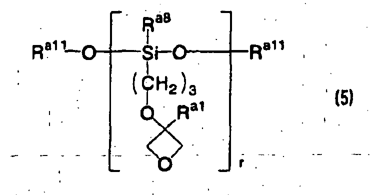

In Formula (5), R^{a1} and R^{a8} denote the same as in the above-mentioned formulae. R^{a11} is an alkyl group having 1 to 4 carbons such as a methyl group, an ethyl group, a propyl group, or a butyl group, or a trialkylsilyl group, and r is 1 to 4.

Such compounds having an oxetane ring are described in detail in paragraph Nos. (0021) to (0084) of JP-A-2003-341217 above, and the compounds described here may be suitably used in the present invention.

Among the oxetane compounds used in the present invention, from the viewpoint of ink composition viscosity and tackiness, it is preferable to use a compound having one oxetane ring.

The ink composition of the present invention may comprise only one type of cationically polymerizable compound or two or more types thereof in combination, but from the viewpoint of suppressing effectively shrinkage during ink curing, it is preferable to use a combination of a vinyl ether compound and at least one type of compound selected from the oxetane compounds and the epoxy compounds.

The content of the cationically polymerizable compound (a) in the ink composition is suitably in the range of 10 to 95 wt % relative to the total solids content of the composition, preferably 30 to 90 wt %, and more preferably 50 to 85 wt %. The solids content in the ink composition referred to in the present invention means components excluding volatile components such as a solvent, which will be described later.

### Compound (b) that generates acid when exposed to radiation

The ink composition of the present invention comprises the compound that generates an acid when exposed to radiation (also called the photo-acid generator as appropriate). As the photo-acid generator used in the present invention, a cationic photopolymerization photoinitiator, a radical photopolymerization photoinitiator, a photo-decolorizing agent or a photo-discoloring agent for a dye, or a compound that generates an acid when exposed to light used in a microresist, etc. (ultraviolet light at 400 to 200 nm, far ultraviolet light, particularly preferably, g-line, h-line, i-line, KrF excimer laser light), ArF excimer laser light, an electron beam, X rays, a molecular beam, or an ion beam, may be used by appropriately selecting therefrom.

Examples of such a photo-acid generator include onium salt compounds such as diazonium salts, phosphonium salts, sulfonium salts, and iodonium salts, and sulfonate compounds such as imidosulfonates, oxime sulfonates, diazodisulfones, disulfones, and *o*-nitrobenzylsulfonates, which generate an acid by decomposition when exposed to radiation.

Other specific examples of the compound that generates an acid when exposed to actinic light or radiation, which can be used in the present invention, include diazonium salts disclosed in, for instance, S. I. Schlesinger, Photogr. Sci. Eng., 1974, 18:387 and T. S. Bal et al., Polymer, 1980, 21:423; ammonium salts disclosed in, for instance, US Pat. Nos. 4,069,055, 4,069,056 and JP-A-3-140140; phosphonium salts disclosed in, for instance, D. C. Necker et al., Macromolecules, 1984, 17:2468, C. S. Wen et al., The. Proc. Conf. Rad. Curing ASIA, p.478, Tokyo, Oct. (1988) and US Pat. Nos. 4,069,055 and 4,069,056; iodonium salts disclosed in, for instance, J. V. Crivello et al., Macromolecules, 10 (6), 1307 (1977), Chem. Eng. News, November 28, p. 31 (1988), European Patent No. 104,143 and JP-A-2-150848 and JP-A-2-296514;
sulfonium salts disclosed in, for instance, J. V. Crivello et al., Polymer J., 1985, 17:73, J. V. Crivello et al., J. Org. Chem., 1978, 43:3055, W.R. Watt et al., J. Polymer Sci., Polymer Chem. Ed., 1984, 22:1789, J. V. Crivello et al., Polymer Bull., 1985, 14:279, J. V. Crivello et al., Macromolecules, 14(5), 1141 (1981), J. V. Crivello et al., J. Polymer Sci., Polymer Chem. Ed., 1979, 17:2877, European Patent Nos. 370,693, 161,811, 410,201, 339,049, 233,567, 297,443 and 297,442, US Pat. Nos. 3,902,114, 4,933,377, 4,760,013, 4,734,444 and 2,833,827 and German Patent Nos. 2,904,626, 3,604,580 and 3,604,581, JP-A-7-28237, and JP-A-8-27102;
selenonium salts disclosed in, for instance, J. V. Crivello et al., Macromolecules, 10(6), 1307 (1977) and J. V. Crivello et al., J. Polymer Sci., Polymer Chem. Ed., 1979, 17:1047; onium salts such as arsonium salts disclosed in, for instance, C. S. Wen et al., The Proc. Conf. Rad. Curing ASIA, p.478, Tokyo, Oct. (1988); organic halogen-containing compounds disclosed in, for instance, US Pat. No. 3,905,815, JP-B-46-4605, JP-A-48-36281, JP-A-55-32070, JP-A-60-239736, JP-A-61-169835, JP-A-61-169837, JP-A-62-58241, JP-A-62-212401, JP-A-63-70243 and JP-A-63-298339; organometallic/organic halogen-containing compounds disclosed in, for instance, K. Meier et al., J. Rad. Curing, 13(4), 26 (1986), T. P. Gill et al., Inorg. Chem., 1980, 19:3007, D. Astruc, Acc. Chem. Res., 19(12), 377 (1896) and JP-A-2-161445;
photo-acid generators comprising *o*-nitrobenzyl type protecting group disclosed in, for instance, S. Hayase et al., J. Polymer Sci., 1987, 25:753, E. Reichmanis et al., J. Polymer Sci., Polymer Chem. Ed., 1985, 23:1, Q. Q. Zhu et al., J. Photochem., 36, 85, 39, 317 (1987), B. Amit et al., Tetrahedron Lett., (24), 2205 (1973), D. H. R. Barton et al., J. Chem. Soc., 3571 (1965), P. M. Collins et al., J. Chem. Soc., Perkin 1, 1695 (1975), M. Rudinstein et al., Tetrahedron Lett., (17), 1445 (1975), J. W. Walker et al., J. Am. Chem. Soc., 110, 7170 (1988), S.C. Busman et al., J. Imaging Technol., 11(4), 191 (1985), H. M. Houlihan et al., Macromolecules, 21, 2001 (1988), P.M. Collins et al., J. Chem. Soc., Chem. Commun., 532 (1972), S. Hayase et al., Macromolecules, 18, 1799 (1985), E. Reichmanis et al., J. Electrochem. Soc., Solid State Sci. Technol., 130(6), F. M. Houlihan et al., Macromolecules, 21, 2001 (1988), European Patent Nos. 0,290,750, 046,083, 156,535, 271,851 and 0,388,343, US Pat. Nos. 3,901,710 and 4,181,531 and JP-A-60-198538 and JP-A-53-133022;
compounds producing sulfonic acids by photolysis which are represented by iminosulfonates described in M. Tunooka et al., Polymer Preprints Japan, 38 (8), G. Berner et al., J. Rad. Curing, 13 (4), W. J. Mijs et al., Coating Technol., 55 (697), 45 (1983), Akzo, H. Adachi et al., Polymer Preprints Japan, 37 (3), European Patents 0,199,672, 84,515, 044,115, 618, 564, and 0,101,122, US Pat. Nos. 4,371,605 and 4,431,774, JP-A-64-18143, JP-A-2-245756 and JP-A-3-140109; and disulfone compounds described in JP-A-61-166544 and JP-A-2-71270; and diazoketosulfone and diazodisulfone compounds described in JP-A-3-103854, JP-A-3-103856, and JP-A-4-210960.

Further, compounds in which these photo-acid generating groups or compounds are introduced into their main chains or side chains can be used. Examples of such compounds are described in M. E. Woodhouse et al., J. Am. Chem. Soc., 104, 5586 (1982), S. P. Pappas et al., J. Imaging Sci., 30 (5), 218 (1986), S. Kondo et al., Makromol. Chem., Rapid Commun., 9, 625 (1988), Y. Yamada et al., Makromol. Chem., 152, 153, 163 (1972), J. V. Crivello et al., J. Polymer Sci., Polymer Chem. Ed., 17, 3845 (1979), US Pat. No. 3,849,137, German Patent 3,914,407, JP-A-63-26653, JP-A-55-164824, JP-A-62-69263, JP-A-63-146038, JP-A-63-163452, JP-A-62-153853 and JP-A-63-146029. Examples thereof include onium salt compounds such as diazonium salts, ammonium salts, phosphonium salts, iodonium salts, sulfonium salts, selenonium salts, and arsonium salts; organic halogen compounds; organometallic/organohalides; photo-acid generators having an *o*-nitrobenzyl type protecting group; compounds that generate a sulfonic acid by photodecomposition, represented by iminosulfonates; disulfone compounds; diazoketosulfones; and diazodisulfone compounds.

Further, there can also be used compounds that generate an acid with light which are described in V. N. R. Pillai, Synthesis, (1) 1 (1980), A. Abad et al., Tetrahedron Lett., (47), 4555 (1971), D. H. R. Barton et al., J. Chem. Soc., (C), 329 (1970), US Pat. No. 3,779,778 and European Patent No. 126,712.

Preferred examples of the photo-acid generator that can be used in the present invention include compounds represented by Formulae (b1), (b2), and (b3) below.

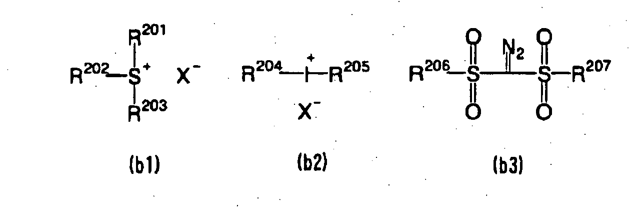

In Formula (b1), R²⁰¹, R²⁰², and R²⁰³ independently denote an organic group.

X⁻ denotes a non-nucleophilic anion; preferred examples thereof include a sulfonic acid anion, a carboxylic acid anion, a bis(alkylsulfonyl)amide anion, a tris(alkylsulfonyl)methide anion, BF₄⁻, PF₆⁻, SbF₆⁻, and groups shown below, and an organic anion having a carbon atom is preferable.

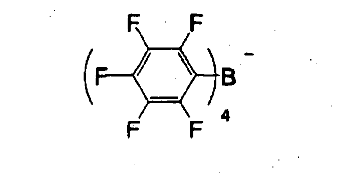

Preferred examples of the organic anion include organic anions represented by the formulae below. '

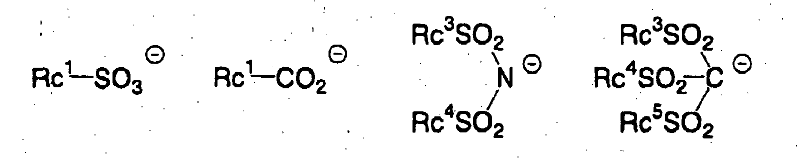

Rc¹ denotes an organic group.

Examples of the organic group denoted by Rc¹ include those having 1 to 30 carbons, and preferred examples thereof include an alkyl group, a cycloalkyl group, an aryl group, and a group formed by connecting a plurality of the above groups via a linking group such as a single bond, -O-, -CO₂- -S-, -SO₃-, or - SO₂N(Rd¹)-.

Rd¹ denotes a hydrogen atom or an alkyl group.

Rc³, Rc⁴, and Rc⁵ independently denote an organic group.

With regard to the organic groups denoted by Rc³, Rc⁴, and Rc⁵, those cited as preferred examples for the organic group denoted by Rc¹ are cited here, and a perfluoroalkyl group having 1 to 4 carbons is most preferable.

Rc³ and Rc⁴ may be bonded to form a ring.

Examples of a group formed by bonding of Rc³ and Rc⁴ include an alkylene group and an arylene group. It is preferably a perfluoroalkylene group having 2 to 4 carbons.

The most preferred examples of the organic groups denoted by Rc¹, and Rc³ to Rc⁵, include an alkyl group whose 1 position has been substituted with a fluorine atom or a fluoroalkyl group, and a phenyl group substituted with a fluorine atom or a fluoroalkyl group. Introducing a fluorine atom or a fluoroalkyl group increases the acidity of an acid generated on exposure to light, thus improving the sensitivity.

The number of carbons of the organic groups denoted by R²⁰¹, R²⁰², and R²⁰³ is preferably 1 to 30, and more preferably 1 to 20.

Furthermore, two of R²⁰¹ to R²⁰³ may be bonded to form a ring structure, and an oxygen atom, a sulfur atom, an ester bond, an amide bond, or a carbonyl group may be contained in the ring. Examples of the group formed by bonding of two of R²⁰¹ to R²⁰³ include alkylene groups (e.g. a butylene group and a pentylene group).

Specific examples of the organic groups denoted by R²⁰¹, R²⁰², and R²⁰³ are the corresponding groups in compounds (b1-1), (b1-2), and (b1-3), which will be described later.

The photo-acid generator may be a compound having a plurality of structures represented by Formula (b1). For example, it may be a compound having a structure in which at least one of R²⁰¹ to R²⁰³ of a compound represented by Formula (b1) is bonded directly or via a linking group to at least one of R²⁰¹ to R²⁰³ of a compound represented by Formula (b1).

Yet more preferred examples of the component (b1) include compounds (b1-1), (b1-2), and (b1-3), which are explained below.

The compound (b1-1) is an arylsulfonium compound in which at least one of R²⁰¹ to R²⁰³ of the Formula (b1) above is an aryl group, that is, a compound having arylsulfonium as a cation.

With regard to the arylsulfonium compound, all of R²⁰¹ to R²⁰³ may be aryl groups, or some of R²⁰¹ to R²⁰³ may be an aryl group and the rest may be an alkyl group or a cycloalkyl group.

Examples of the arylsulfonium compound include a triarylsulfonium compound, a diarylalkylsulfonium compound, an aryldialkylsulfonium compound, a diarylcycloalkylsulfonium compound, and an aryldicycloalkylsulfonium compound.

With regard to the aryl group of the arylsulfonium compound, an aryl group such as a phenyl group or a naphthyl group and a heteroaryl group such as an indole residue or a pyrrole residue are preferable, and a phenyl group and an indole residue are more preferable. When the aryl sulfonium compound has two or more aryl groups, two or more of the aryl groups may be identical to or different from each other.

The alkyl group that the arylsulfonium compound may have as necessary is preferably a straight-chain or branched alkyl group having 1 to 15 carbons, and examples thereof include a methyl group, an ethyl group, a propyl group, an *n-*butyl group, a sec-butyl group, and a *t*-butyl group.

The cycloalkyl group that the arylsulfonium compound may have as necessary is preferably a cycloalkyl group having 3 to 15 carbons, and examples thereof include a cyclopropyl group, a cyclobutyl group, and a cyclohexyl group.

The aryl group, the alkyl group, and the cycloalkyl group denoted by R²⁰¹ to R²⁰³ may have as a substituent an alkyl group (e.g. having 1 to 15 carbons), a cycloalkyl group (e.g. having 3 to 15 carbons), an aryl group (e.g. having 6 to 14 carbons), an alkoxy group (e.g. having 1 to 15 carbons), a halogen atom, a hydroxyl group, or a phenylthio group. Preferred examples of the substituent include a straight-chain or branched alkyl group having 1 to 12 carbons, a cycloalkyl group having 3 to 12 carbons, and a straight-chain, branched, or cyclic alkoxy group having 1 to 12 carbons, and the most preferable examples include an alkyl group having 1 to 4 carbons and an alkoxy group having 1 to 4 carbons. One of R²⁰¹ to R²⁰³ may be substituted or all thereof may be substituted. When R²⁰¹ to R²⁰³ are aryl groups, it is preferable for the substituent to be present at the p-position of the aryl group.

The compound (b1-2) is now explained.

The compound (b1-2) is a compound in which R²⁰¹ to R²⁰³ of Formula (b1) independently denote an organic group having no aromatic ring. The aromatic ring referred to here includes an aromatic ring containing a hetero atom.

The organic group having no aromatic ring denoted by R²⁰¹ to R²⁰³ preferably has 1 to 30 carbons, and more preferably 1 to 20 carbons.

R²⁰¹ to R²⁰³ preferably independently denote an alkyl group, a cycloalkyl group, an allyl group, or a vinyl group, more preferably a straight-chain, branched, or cyclic 2-oxoalkyl group or alkoxycarbonylmethyl group, and particularly preferably a straight-chain or branched 2-oxoalkyl group.

The alkyl group denoted by R²⁰¹ to R²⁰³ may be a straight-chain or branched, is preferably a straight-chain or branched alkyl group having 1 to 10 carbons (e.g. a methyl group, an ethyl group, a propyl group, a butyl group, and a pentyl group), and is more preferably a straight-chain or branched 2-oxoalkyl group or an alkoxycarbonylmethyl group.

The cycloalkyl group denoted by R²⁰¹ to R²⁰³ may preferably be a cycloalkyl group having 3 to 10 carbons (a cyclopentyl group, a cyclohexyl group, or a norbornyl group), and a cyclic 2-oxoalkyl group is more preferable.

The straight-chain, branched, or cyclic 2-oxoalkyl group denoted by R²⁰¹ to R²⁰³ may preferably be the above-mentioned alkyl group or cycloalkyl group in which there is >C = O at the 2-position.

Preferred examples of the alkoxy group of the alkoxycarbonylmethyl group denoted by R²⁰¹ to R²⁰³ include an alkoxy group having 1 to 5 carbons (a methoxy group, an ethoxy group, a propoxy group, a butoxy group, and a pentoxy group).

R²⁰¹ to R²⁰³ may further be substituted with a halogen atom, an alkoxy group (e.g. having 1 to 5 carbons), a hydroxyl group, a cyano group, or a nitro group.

The compound (b1-3) referred to is a compound represented by Formula (b1-3) below and is a compound having a phenacylsulfonium salt structure.

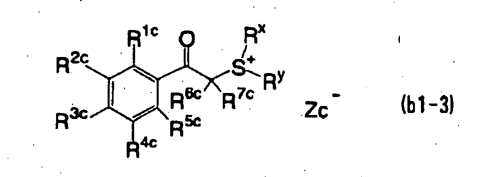

In Formula (b1-3), R^{1c} to R^{5c} independently denote a hydrogen atom, an alkyl group, a cycloalkyl group, an alkoxy group, or a halogen atom.

R^{6c} and R^{7c} independently denote a hydrogen atom, an alkyl group, or a cycloalkyl group.

R^{x} and R^{y} independently denote an alkyl group, a cycloalkyl group, an allyl group, or a vinyl group.

Any two or more of R^{1c} to R^{5c}, R^{6c} and R^{7c}, and R^{x} and R^{y} may be bonded together to form a ring structure.

Zc⁻ denotes a non-nucleophilic anion, and the same examples as those of the non-nucleophilic anion X⁻ in Formula (b1) may be cited.

The alkyl group denoted by R^{1c} to R^{7c} may be either a straight-chain alkyl group or a branched alkyl group, and preferred examples thereof include straight-chain and branched alkyl groups having 1 to 20 carbons, and more preferably 1 to 12 carbons (e.g. a methyl group, an ethyl group, a straight-chain or branched propyl group, a straight-chain or branched butyl group, and a straight-chain or branched pentyl group).

Preferred examples of the cycloalkyl group denoted by R^{1c} to R^{7c} include cycloalkyl groups having 3 to 8 carbons (e.g. a cyclopentyl group and a cyclohexyl group).

The alkoxy group denoted by R^{1c} to R^{5c} may be any of a straight-chain, branched, or cyclic alkoxy group; examples thereof include alkoxy groups having 1 to 10 carbons, and preferably straight-chain or branched alkoxy groups having 1 to 5 carbons (e.g. a methoxy group, an ethoxy group, a straight-chain or branched propoxy group, a straight-chain or branched butoxy group, and a straight-chain or branched pentoxy group), and cyclic alkoxy groups having 3 to 8 carbons (e.g. a cyclopentyloxy group and a cyclohexyloxy group).

Examples of the group formed by bonding any two or more of R^{1c} to R^{5c}, R^{6c} and R^{7c}, and R^{x} and R^{y} include a butylene group and a pentylene group. This cyclic structure may contain an oxygen atom, a sulfur atom, an ester bond, or an amide bond.

It is preferable for any one of R^{1c} to R^{5c} to be a straight-chain or branched alkyl group, a cycloalkyl group, or a straight-chain, branched, or cyclic alkoxy group, and it is more preferable that the sum of the number of carbons of R^{1c} to R^{5c} is 2 to 15. This is preferable since the solvent solubility further improves and the occurrence of particles during storage is suppressed

Examples of the alkyl groups and the cycloalkyl groups denoted by R^{x} and R^{y} may be the same as those of the alkyl groups and the cycloalkyl groups denoted by R^{1c} to R^{7c}.

R^{x} and R^{y} are preferably 2-oxoalkyl groups or alkoxycarbonylmethyl groups.

Examples of the 2-oxoalkyl group include a group in which the alkyl group or the cycloalkyl group denoted by R^{1c} to R^{5c} has >C = O at the 2-position.

Examples of the alkoxy group of the alkoxycarbonylmethyl group may be the same as those of the alkoxy group denoted by R^{1c} to R^{5c}.

R^{x} and R^{y} are preferably alkyl groups or cycloalkyl groups having 4 or more carbons, more preferably alkyl groups or cycloalkyl groups having 6 or more carbons, and yet more preferably 8 or more carbons.

R²⁰⁴ to R²⁰⁷ in Formulae (b2) and (b3) independently denote an aryl group, an alkyl group, or a cycloalkyl group. X⁻ denotes a non-nucleophilic anion, and examples thereof include those that are the same as the non-nucleophilic anion X⁻ in Formula (b1).

The aryl group denoted by R²⁰⁴ to R²⁰⁷ is preferably a phenyl group or a naphthyl group, and more preferably a phenyl group.

The alkyl group denoted by R²⁰⁴ to R²⁰⁷ may be either a straight-chain or a branched alkyl group, and preferred examples thereof include straight-chain or branched alkyl groups having 1 to 10 carbons (e.g. a methyl group, an ethyl group, a propyl group, a butyl group, and a pentyl group). Preferred examples of the cycloalkyl groups denoted by R²⁰⁴ to R²⁰⁷ include cycloalkyl groups having 3 to 10 carbons (a cyclopentyl group, a cyclohexyl group, and a norbornyl group).

Examples of the substituents that are present on R²⁰⁴ to R²⁰⁷ include an alkyl group (e.g. having 1 to 15 carbons), a cycloalkyl group (e.g. having 3 to 15 carbons), an aryl group (e.g. having 6 to 15 carbons), an alkoxy group (e.g. having 1 to 15 carbons), a halogen atom, a hydroxyl group, and a phenylthio group.

Furthermore, R²⁰⁴ and R²⁰⁵, R²⁰⁶ and R²⁰⁷ may be bonded to form a ring structure, and an oxygen atom, a sulfur atom, an ester bond, an amide bond, or a carbonyl group may be contained in the ring. Examples of the groups formed by bonding of R²⁰⁴ and R²⁰⁵ or R²⁰⁶ and R²⁰⁷ include an alkylene group (e.g. a butylene group and a pentylene group).

The photo-acid generator may be a compound having a plurality of the structures represented by Formula (b2) or (b3). For example, it may be a compound having a structure in which R²⁰⁴ or R²⁰⁵ of one compound represented by Formula (b2) is bonded directly or via a linking group to R²⁰⁴ or R²⁰⁵ of another compound represented by Formula (b2).

Examples of the compound that generates an acid when exposed to actinic light or radiation further include compounds represented by Formulae (b4), (b5), and (b6) below.

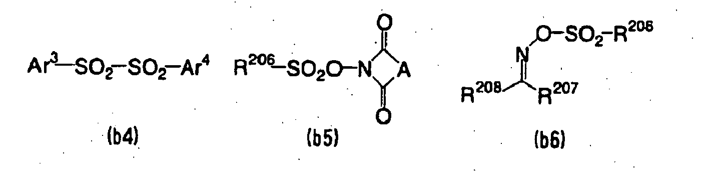

In Formula (b4) to (b6), Ar³ and Ar⁴ independently denote an aryl group.

R²⁰⁶, R²⁰⁷ and R²⁰⁸ independently denote an alkyl group, a cycloalkyl group, an aryl group, or a cyano group.

A denotes an alkylene group, an alkenylene group, or an arylene group.

Ar³ and Ar⁴, R²⁰⁶ to R²⁰⁸, and A may have a substituent, and examples thereof include an alkyl group (e.g. having 1 to 15 carbons), a cycloalkyl group (e.g. having 3 to 15 carbons), an aryl group (e.g. having 6 to 15 carbons), an alkoxy group (e.g. having 1 to 15 carbons), a halogen atom, a hydroxyl group, and a phenylthio group.

The photo-acid generator may be a compound having a plurality of structures represented by Formulae (b4) to (b6). For example, it may be a compound having a structure in which at least one of R²⁰⁶ to R²⁰⁸ of a compound represented by Formula (b6) is bonded directly or via a linking group to at least one of R²⁰⁶ to R²⁰⁸ of another compound represented by Formula (b6).

Among the above-mentioned photo-acid generators, compounds represented by Formulae (b1) to (b3) are preferable.

Preferred compound examples (b-1) to (b-96) of the photo-acid generator (b) used in the present invention are cited below, but the present invention should not be construed by being limited thereto.

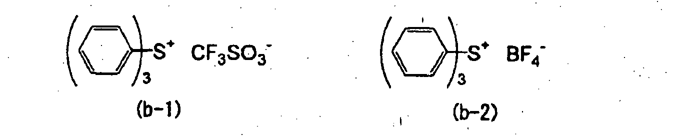

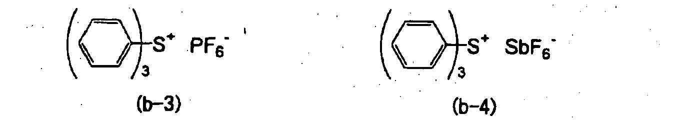

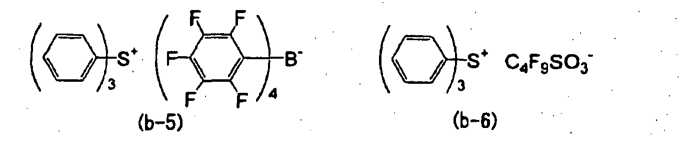

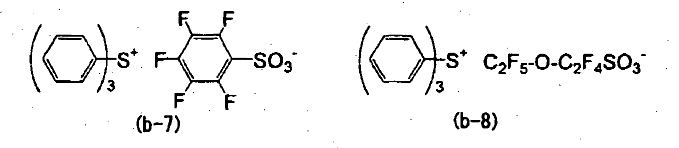

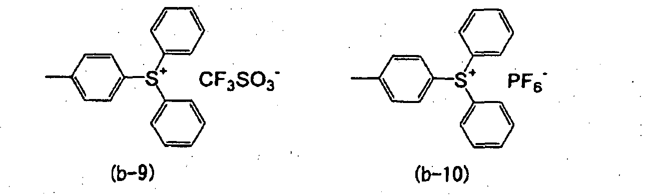

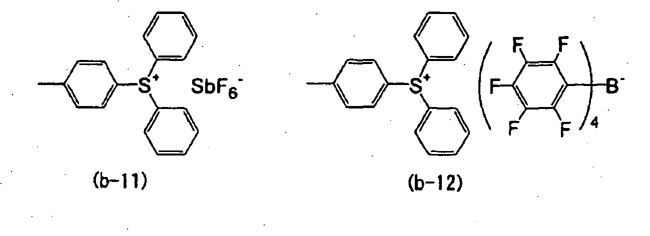

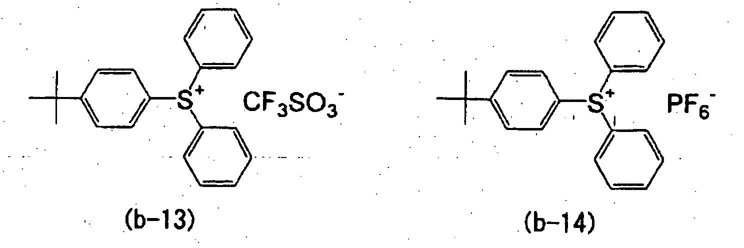

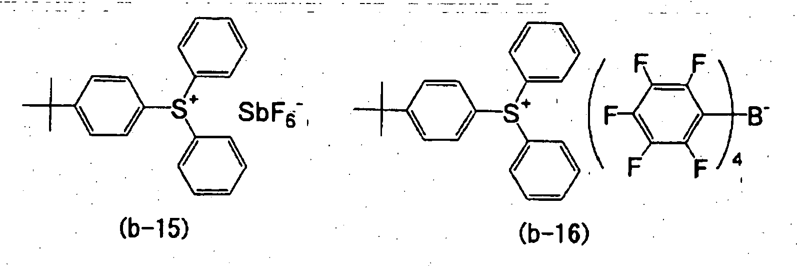

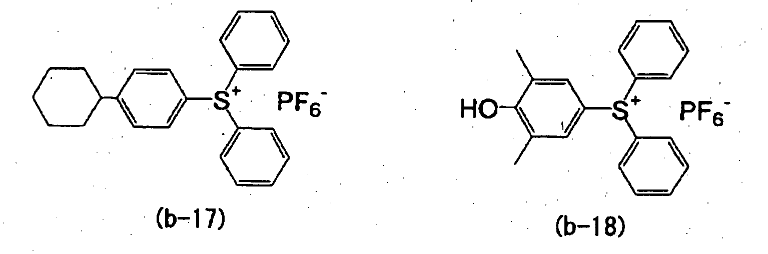

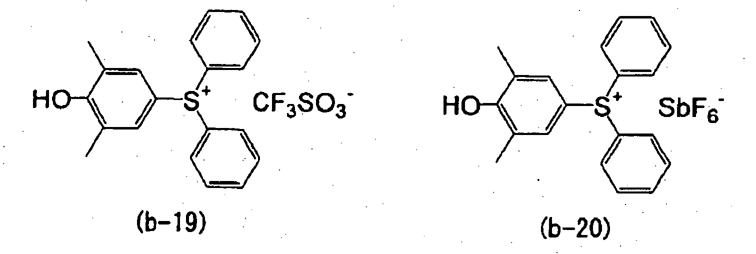

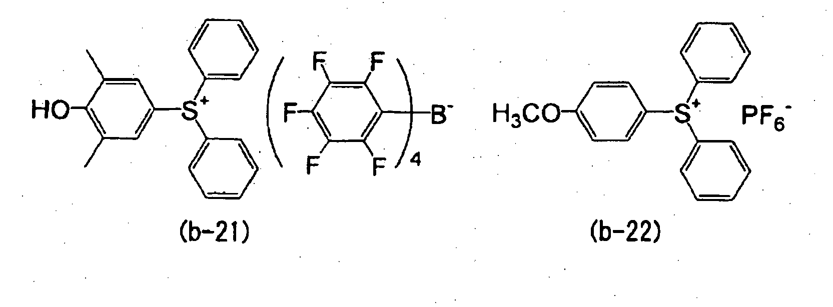

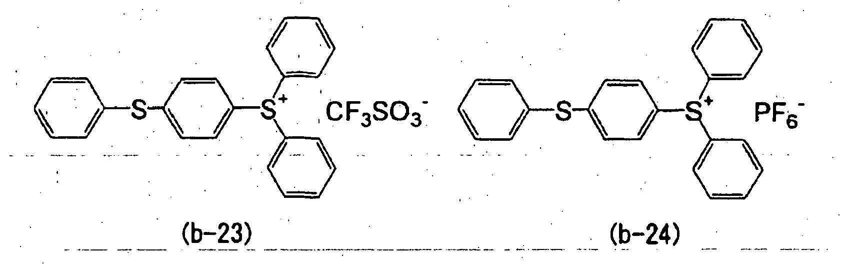

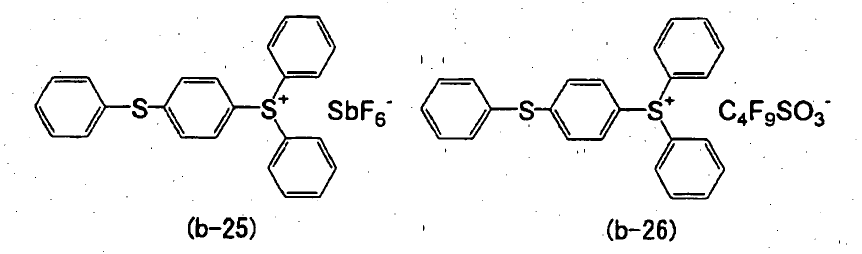

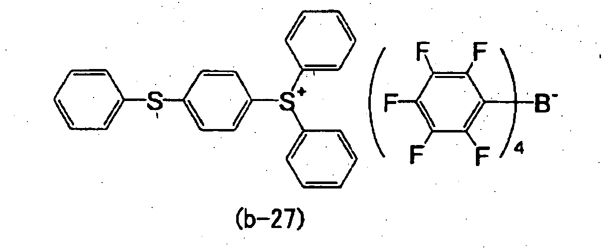

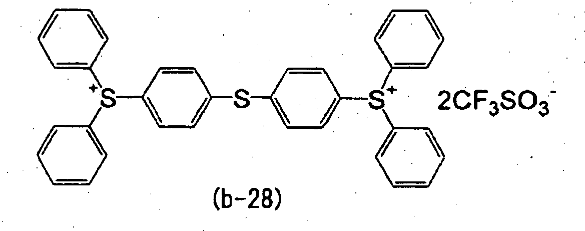

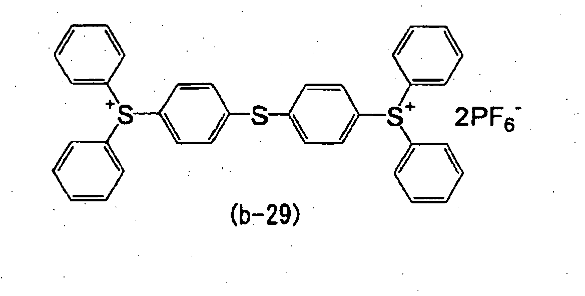

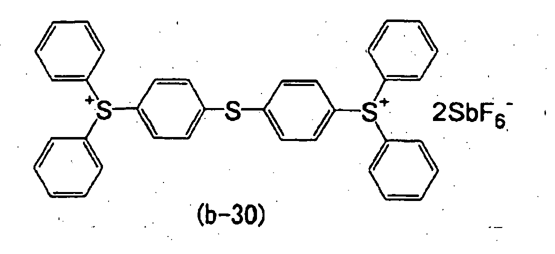

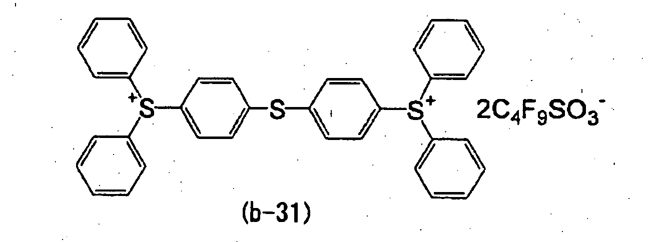

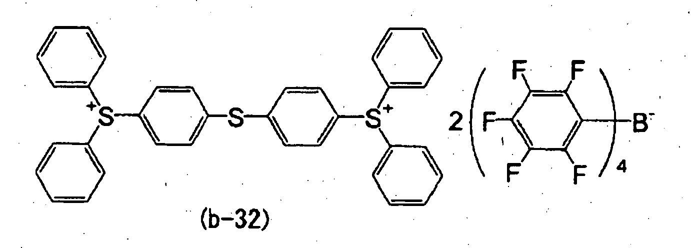

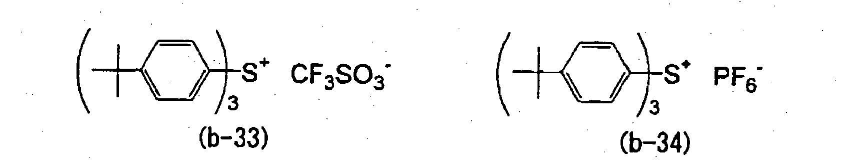

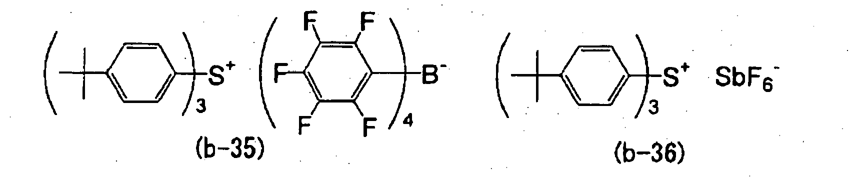

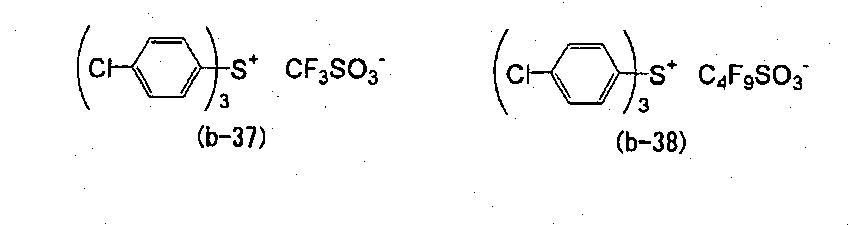

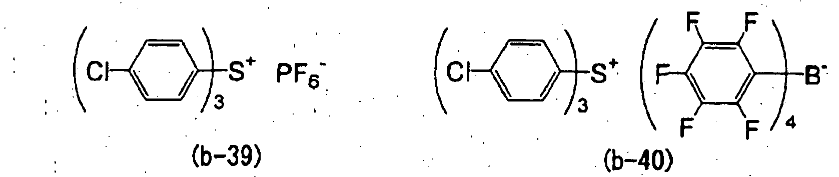

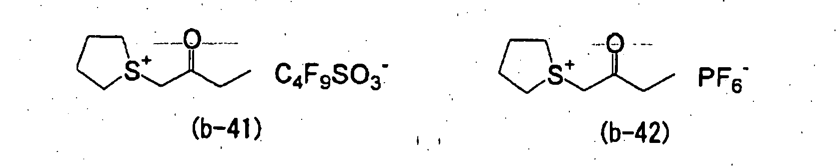

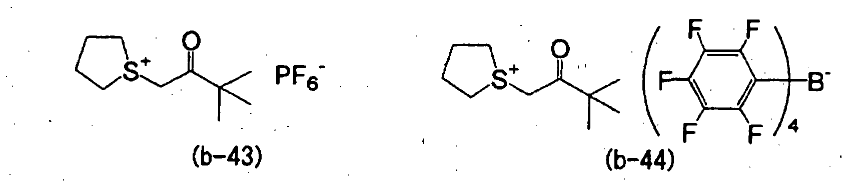

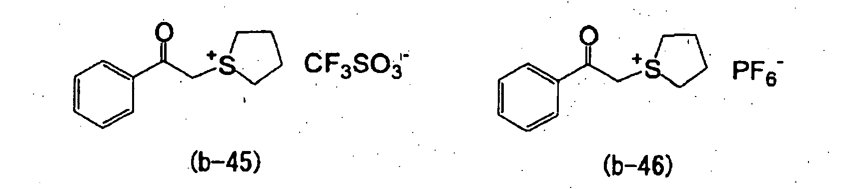

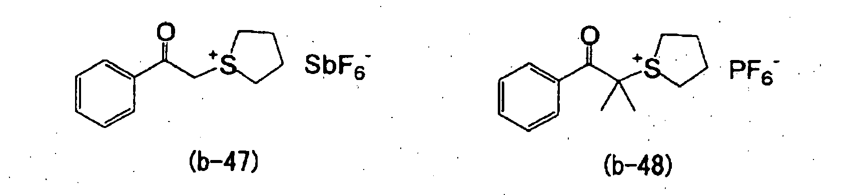

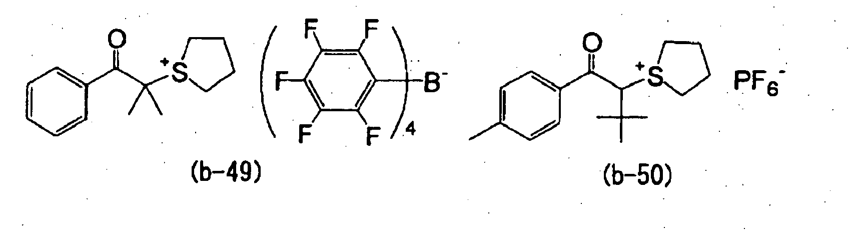

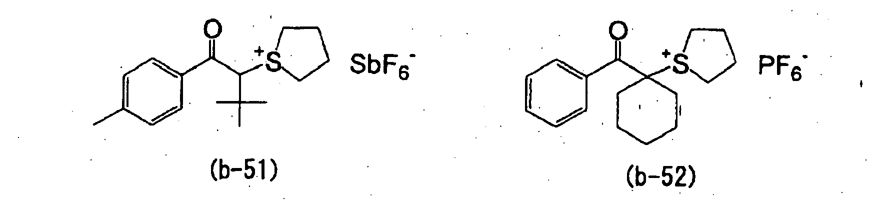

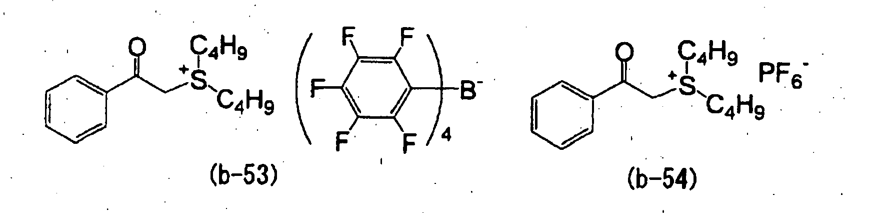

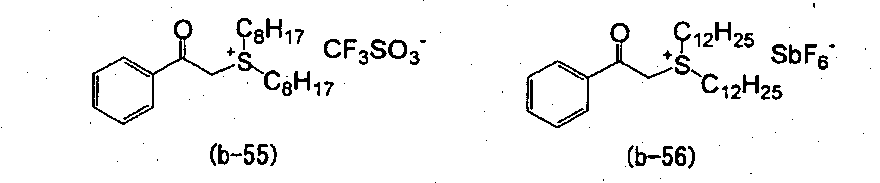

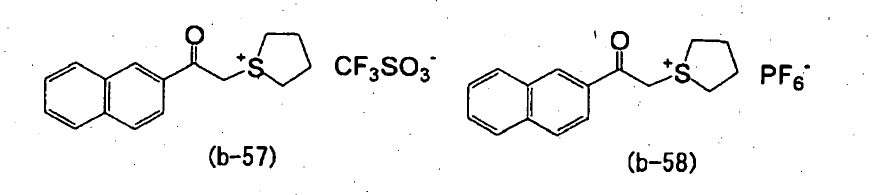

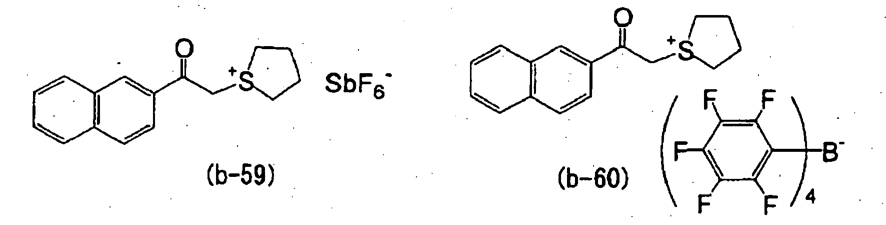

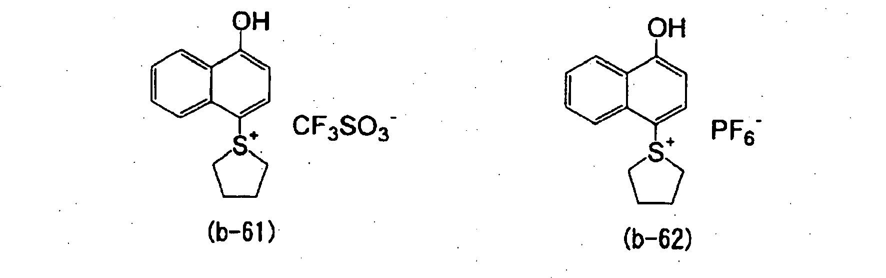

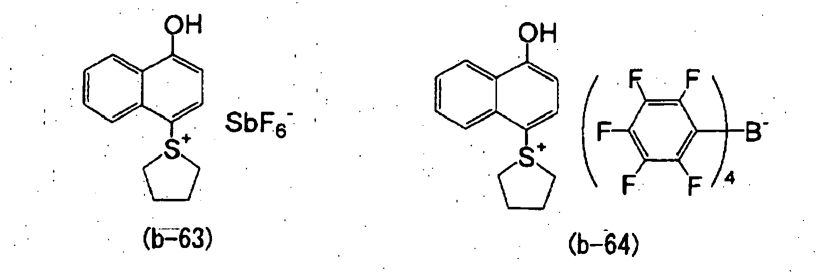

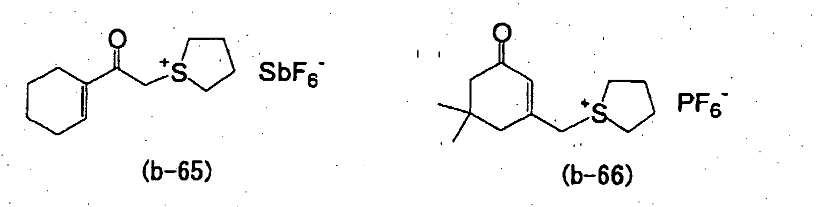

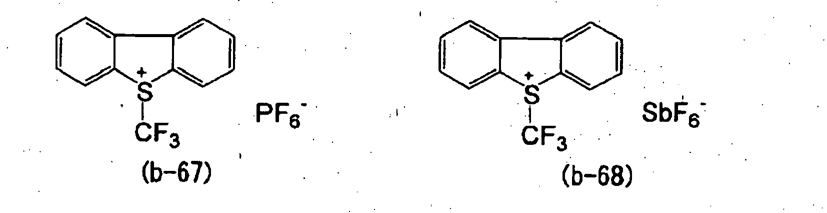

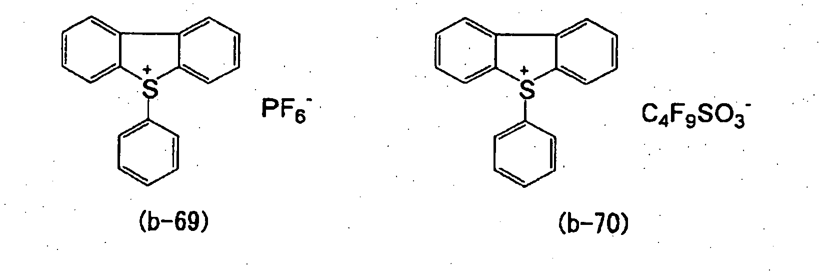

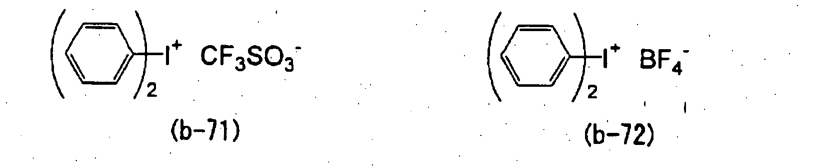

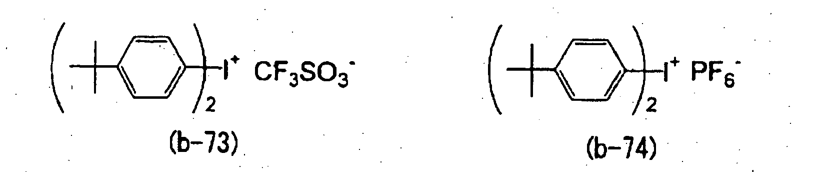

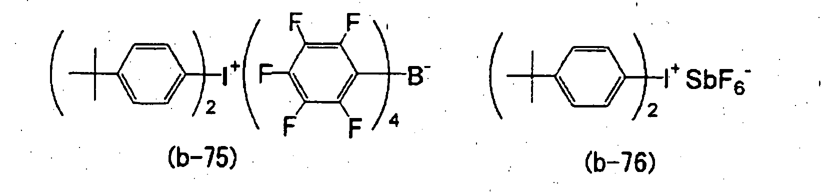

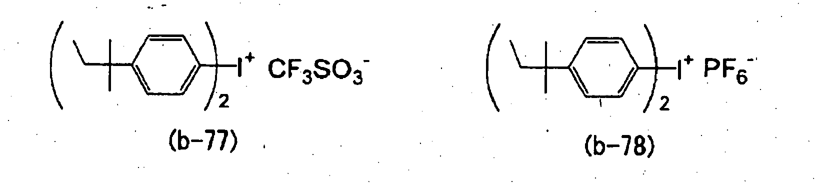

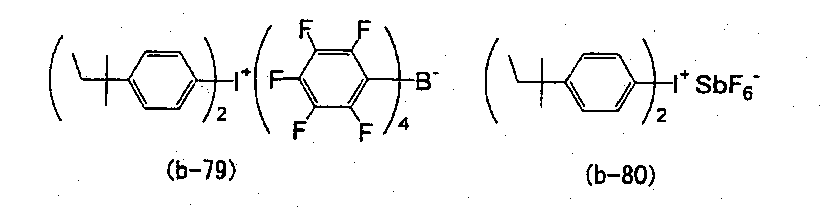

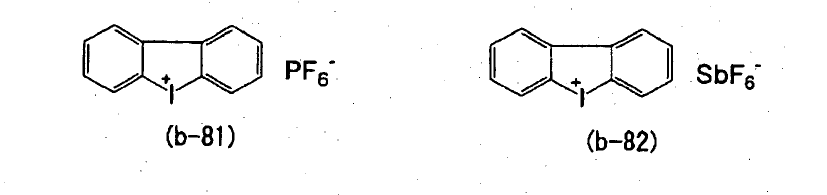

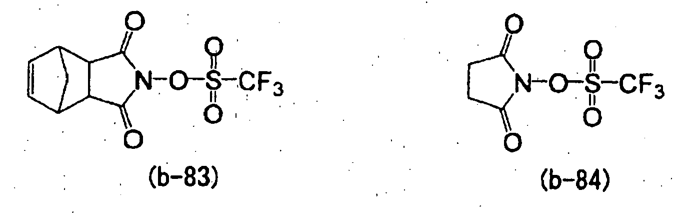

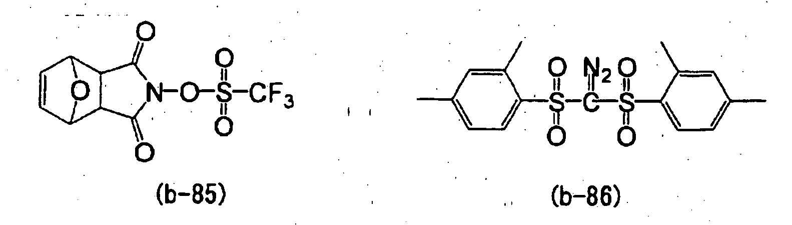

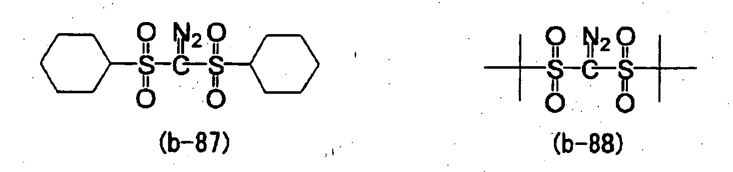

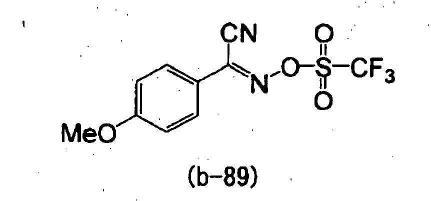

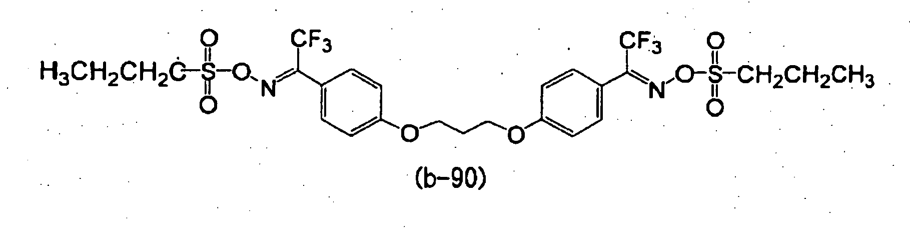

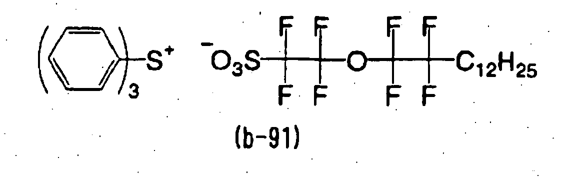

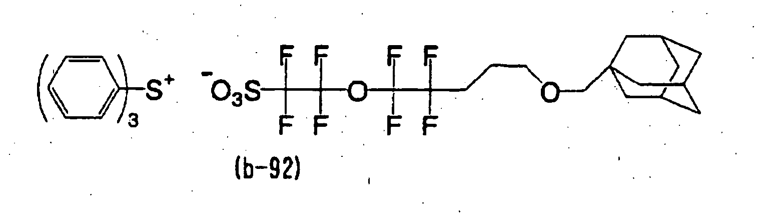

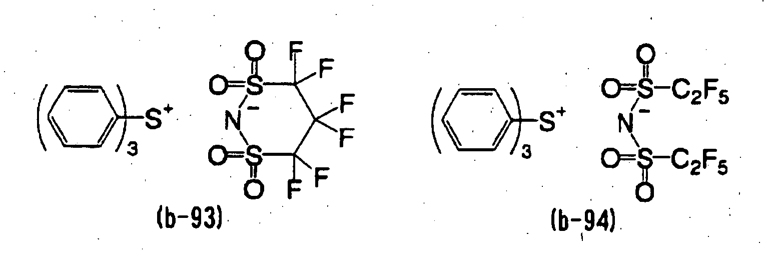

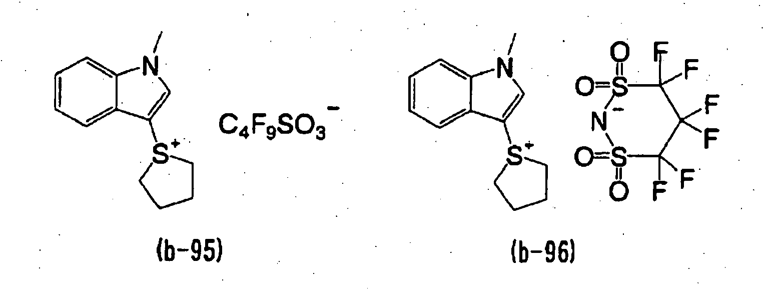

Furthermore, oxazole derivatives and s-triazine derivatives described in Paragraph Nos. (0029) to (0030) of JP-A-2002-122994 may suitably be used.

Onium salt compounds and sulfonate-based compounds cited as examples in Paragraph Nos. (0037) to (0063) of JP-A-2002-122994 may also be suitably used in the present invention.

The photo-acid generator (b) may be used singly or in a combination of two or more types.

The content of the photo-acid generator (b) in the ink composition is preferably 0.1 to 20 wt % on the basis of the total solids content of the ink composition, more preferably 0.5 to 10 wt %, and yet more preferably 1 to 7 wt %.

### Compound (c) that generates compound having basic nitrogen atom when exposed to radiation

The compound (c) that generates a compound having a basic nitrogen atom when exposed to radiation (also called the photo-base generator as appropriate), which is a characteristic component used in the present invention, is a compound that does not originally exhibit basicity in the ink composition or has low level of basicity but, when exposed to radiation, decomposes and generates a compound having a basic nitrogen atom or increases the basicity compared with that of the starting compound. Compounds having such characteristics are disclosed in, for example, JP-A-63-149638, JP-A-2-118650, JP-A-4-330444, JP-A-6-130668, JP-A-6-194834, JP-A-7-134399, and JP-A-10-83079, and it has been found that the above-mentioned object of the present invention can be accomplished by the use of the compound in the ink composition of the present invention. The radiation for irradiating is includes ultraviolet rays, visible light, an electron beam, etc., but room light such as fluorescent light or sunlight may be used. The compound include compounds represented by Formulae (I) to (IX).

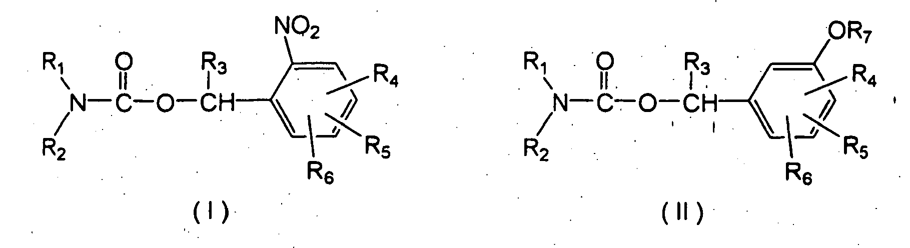

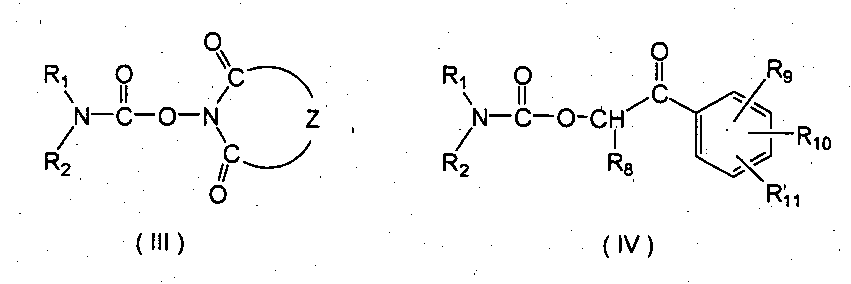

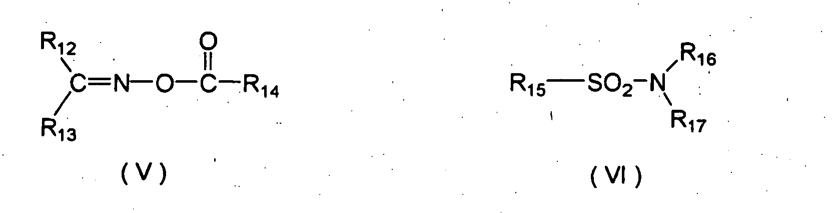

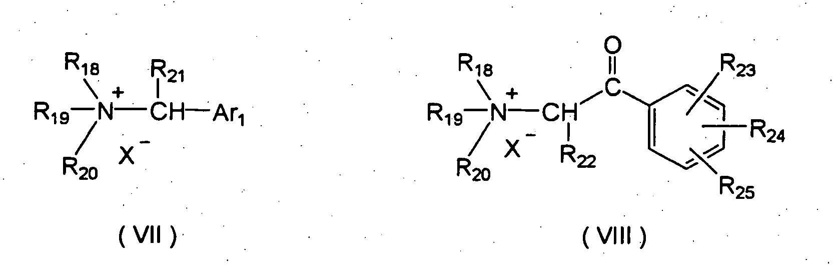

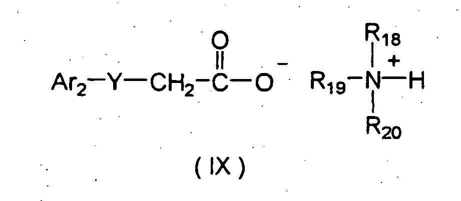

In Formulae (I) to (IX), R₁, R₂, R₁₆, R₁₇, R₁₈, R₁₉, and R₂₀ independently denote a hydrogen atom, an alkyl group, a cycloalkyl group, an aralkyl group, or an aryl group. R₃, R₈, R₂₁, and R₂₂ independently denote a hydrogen atom, an alkyl group, or an aryl group. R₄, R₅, and R₆ independently denote a hydrogen atom, a halogen atom, an alkyl group, a cycloalkyl group, an aralkyl group, an aryl group, an -NO₂ group, or an -OR₇ group, and R₇ denotes an alkyl group. R₉, R₁₀, R₁₁, R₂₃, R₂₄, and R₂₅ independently denote a hydrogen atom, a halogen atom, an alkyl group, a cycloalkyl group, an aralkyl group, or an -OR₇ group. R₁₂ and R₁₃ independently denote an alkyl group, a cycloalkyl group, an aralkyl group, an aryl group, an acyl group, or a -CN group. R₁₄ denotes an alkyl group, a cycloalkyl group, an aralkyl group, an aryl group, or an -N(R₁)(R₂) group. R₁₅ denotes an alkyl group, a cycloalkyl group, an aralkyl group, or an aryl group. Ar₁ and Ar₂ denote aryl groups. Z denotes an atomic group that forms, together with an imide group of Formula (III), a monocyclic or polycyclic aliphatic ring, aromatic ring, or hetero ring. Y denotes an NH group, a sulfur atom, or an oxygen atom. X⁻ denotes a monovalent or polyvalent anion. Furthermore, R₁ and R₂ in Formulae (I) to (IV), two of R₄ to R₆ in Formulae (I) and (II), two of R₉ to R₁₁ in Formula (IV), R₁₂ and R₁₃ in Formula (V), R₁₆ and R₁₇ in Formula (VI), two of R₁₈ to R₂₀ in Formulae (VII) to (IX), Ar₁ and R₂₁ in Formula (VII), and two of R₂₃ to R₂₅ in Formula (VIII) may be bonded together to form an aliphatic ring, an aromatic ring, or a hetero ring.

The alkyl group, cycloalkyl group, aralkyl group, and aryl group denoted by R₁ to R₂₅, Ar₁, and Ar₂, and the atomic group that forms, together with the imide group denoted by Z, a monocyclic or polycyclic aliphatic ring, aromatic ring, or hetero ring may have a substituent described later, and the substituent may further have a substituent.

Preferred examples of the alkyl group include those having 1 to 10 carbons such as a methyl group, an ethyl group, a propyl group, an *n*-butyl group, a sec-butyl group, a hexyl group, an octyl group, and a decyl group. Preferred examples of the cycloalkyl group include those having 3 to 10 carbons such as a cyclopropyl group, a cyclobutyl group, a cyclopentyl group, a cyclohexyl group, a cycloheptyl group, and a norbornyl group. Preferred examples of the aralkyl group include those having 7 to 16 carbons such as a benzyl group, a phenethyl group, and a naphthylmethyl group. Preferred examples of the aryl group include those having 6 to 15 carbons such as a phenyl group, a tolyl group, a methoxyphenyl group, a naphthyl group, and an anthryl group. Preferred examples of the acyl group include those having 2 to 8 carbons such as an acetyl group, a propanoyl group, a butanoyl group, a pentanoyl group, and a benzoyl group. Furthermore, preferred examples of the atomic group that forms, together with the imide group denoted by Z in Formula (III), a monocyclic or polycyclic aliphatic ring, aromatic ring, or hetero ring include an atomic group mainly containing carbon atoms and forming a 4- to 15-membered ring, which may have a substituent, more preferably a 5- to 8-membered ring, which may have a substituent, and an atomic group that may further include an oxygen atom, a nitrogen atom, or a sulfur atom as necessary. X⁻ is a monovalent or polyvalent anion, and preferred examples thereof include halogen anions such as a chloro anion, a bromo anion, or an iodo anion, an alkylsulfonate anion, an arylsulfonate anion, a sulfate anion, a phosphate anion, an alkylphosphonate anion, an arylphosphonate anion, and a borate anion such as BPh₄⁻, BF₄⁻, PF₆⁻, or SbF₆⁻. Preferred examples of the aliphatic ring, aromatic ring, or hetero ring formed by bonding of R₁ and R₂ in Formulae (I) to (IV), two of R₄ to R₆ in Formulae (I) and (II), two of R₉ to R₁₁ in Formula (IV), R₁₂ and R₁₃ in Formula (V), R₁₆ and R₁₇ in Formula (VI), two of R₁₈ to R₂₀ in Formulae (VII) to (IX), Ar₁ and R₂₁ in Formula (VII), and two of R₂₃ to R₂₅ in Formula (VIII) include 4- to 12-membered aliphatic, aromatic, and hetero rings, which may have a substituent, and more preferably 5-to 8-membered rings, which may have a substituent.

Furthermore, examples of the substituent that may be incorporated into the above groups include a straight-chain, branched, or cyclic alkyl group (a methyl group, an ethyl group, a propyl group, an isopropyl group, a *n*-butyl group, a sec-butyl group, a *t*-butyl group, a cyclopropyl group, a cyclopentyl group, a cyclohexyl group, etc.), a straight-chain, branched, or cyclic alkoxy group (a methoxy group, an ethoxy group, a propoxy group, a butoxy group, a hydroxylethoxy group, etc.), the above-mentioned aryl group, a halogen atom (a fluorine atom, a chlorine atom, a bromine atom, or an iodine atom), a hydroxyl group, a carboxyl group, a cyano group, an acyl group (an acetyl group, a propanoyl group, a benzoyl group, etc.), a nitro group, an alkylamino group (the alkyl group being the same as above), a dialkylamino group (the alkyl group being the same as above), an arylamino group (the aryl group being the same as above), and an -S-R₀ group. Here, R₀ denotes the above-mentioned straight-chain, branched, or cyclic alkyl group, or the aryl group. Specific examples of the compounds represented by Formulae (I) to (IX) include compounds (I-1) to (IX-7) below, but the present invention should not be construed as being limited thereto.

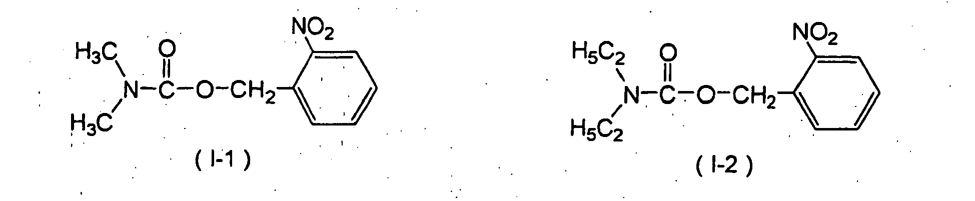

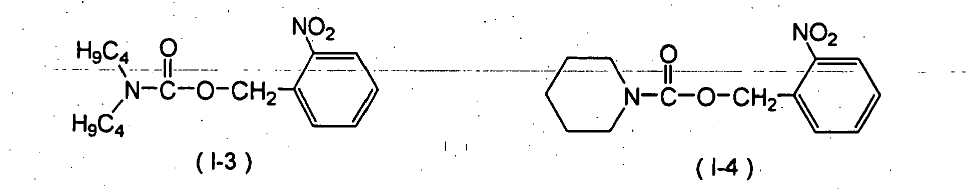

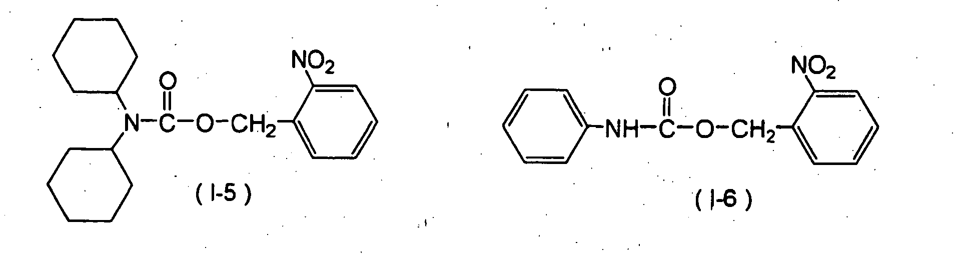

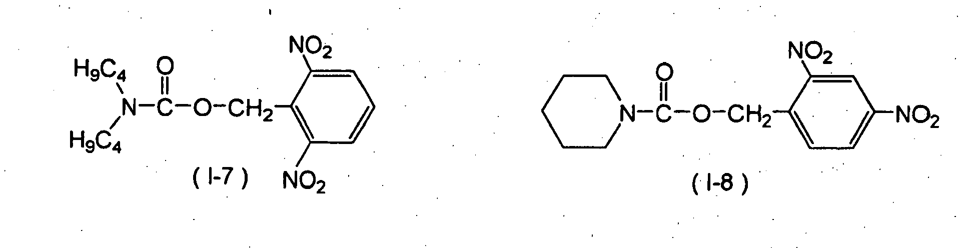

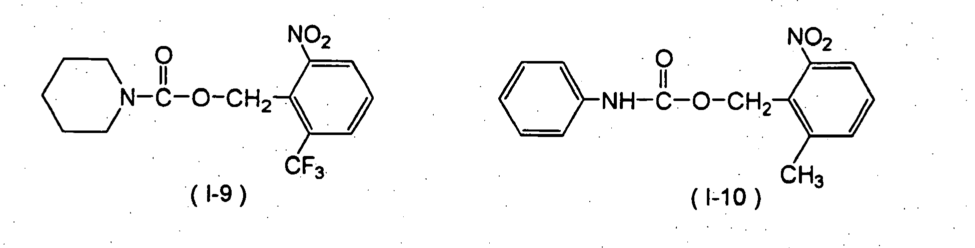

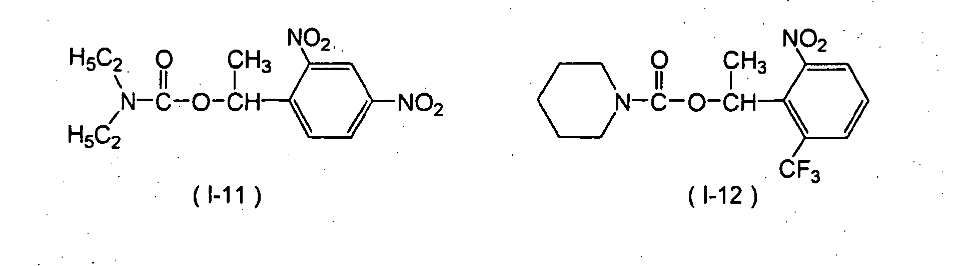

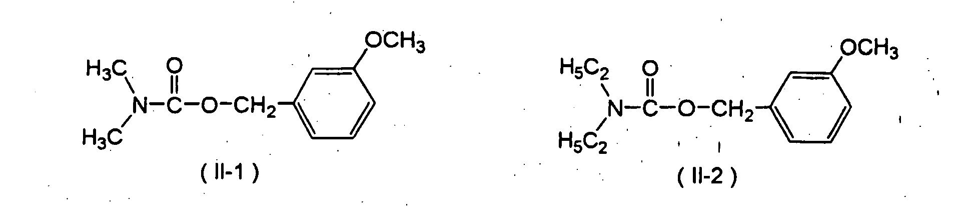

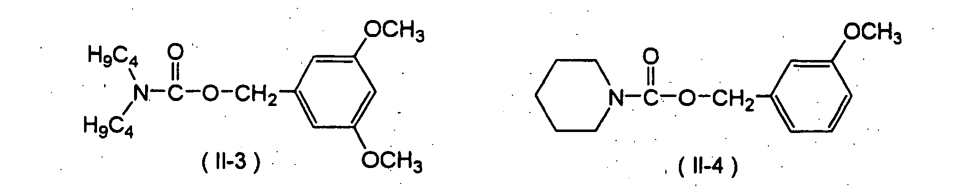

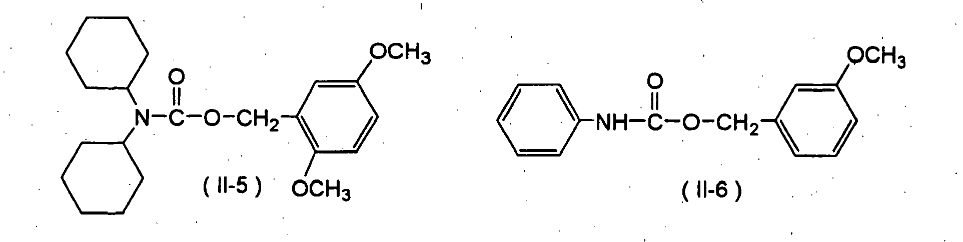

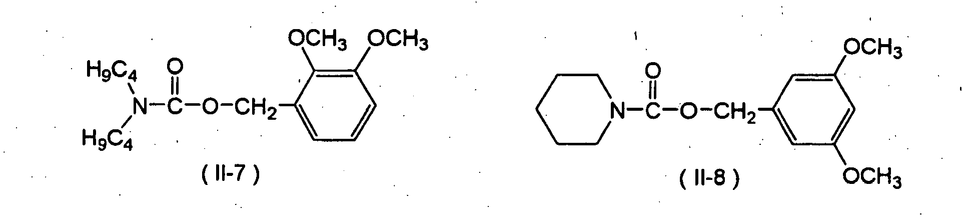

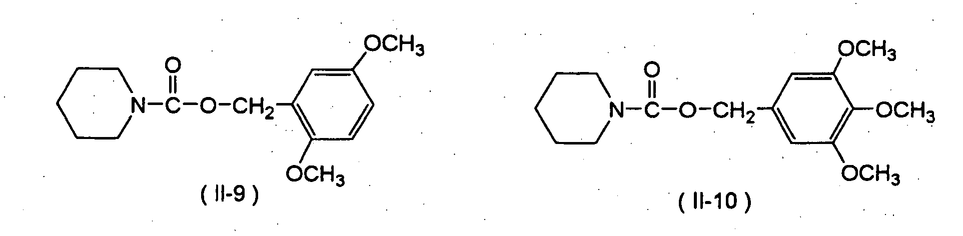

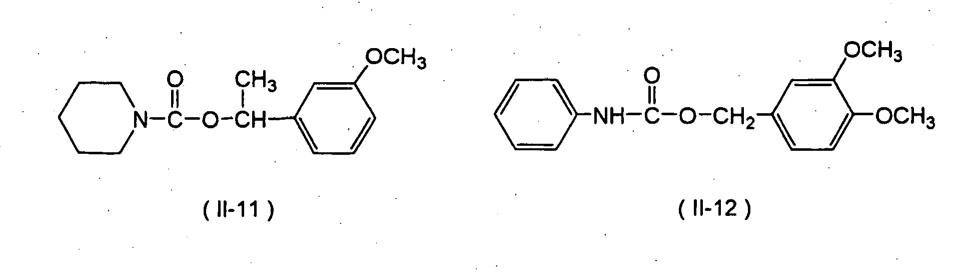

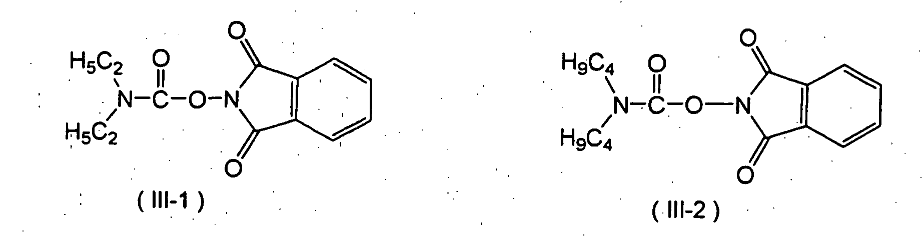

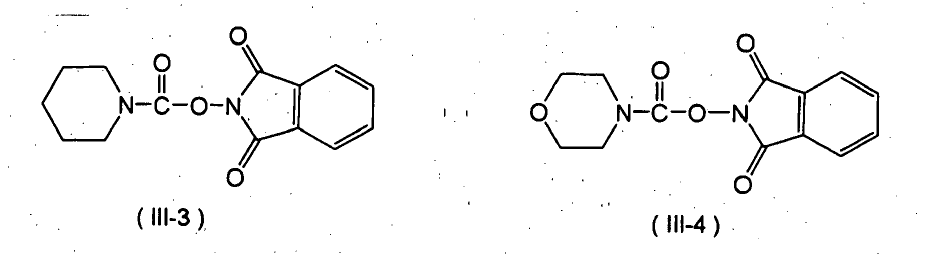

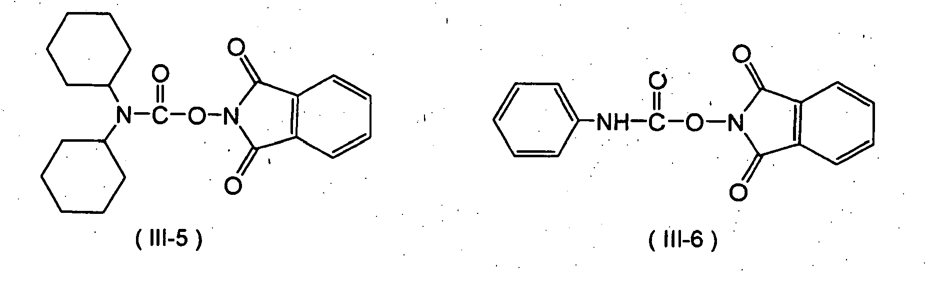

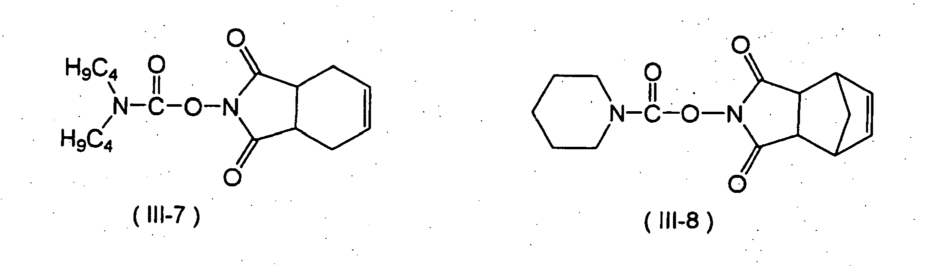

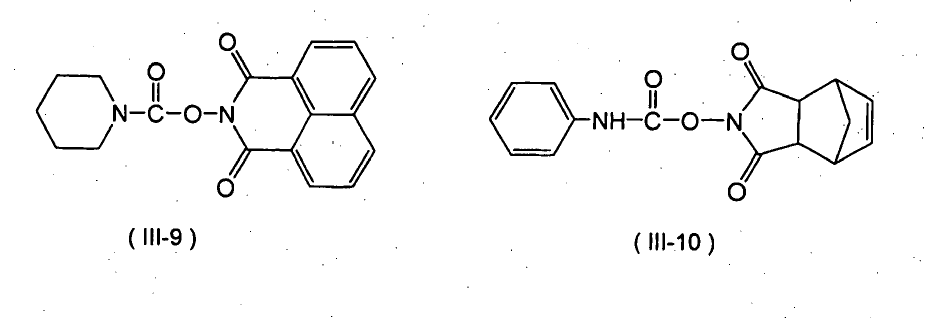

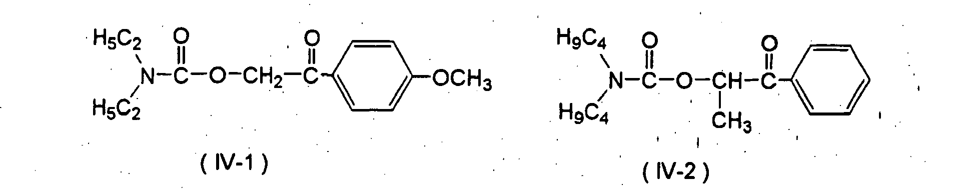

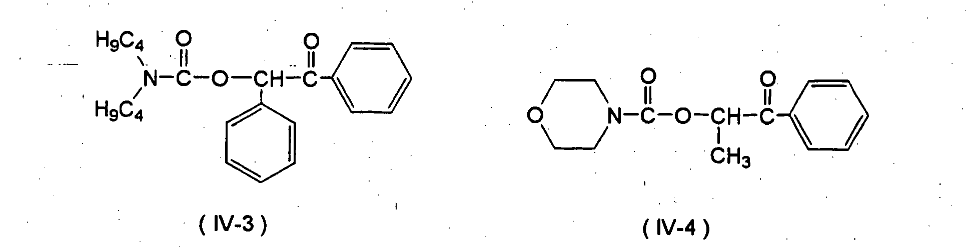

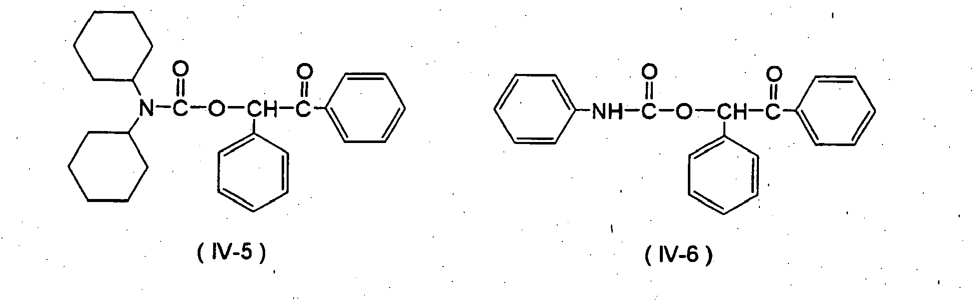

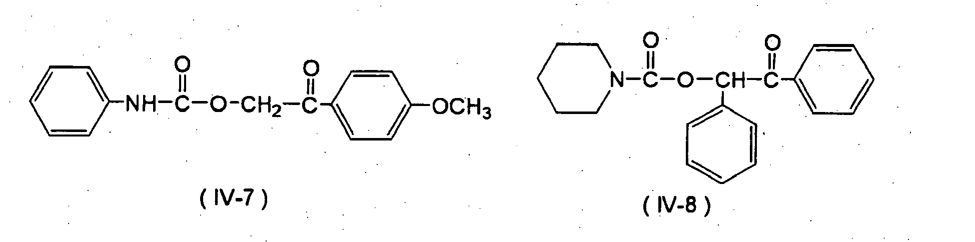

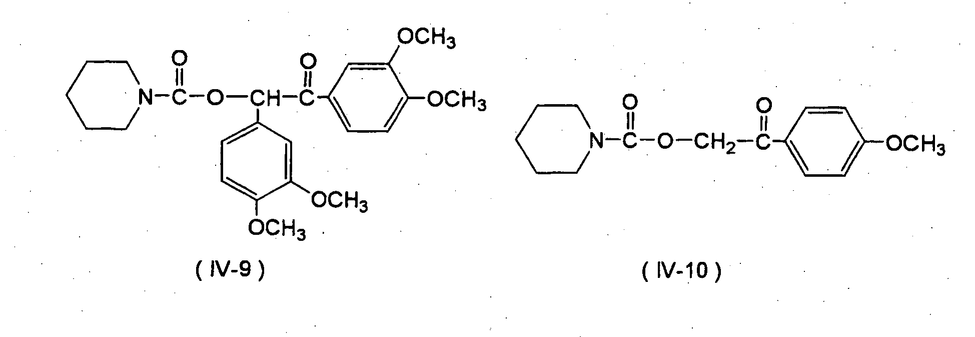

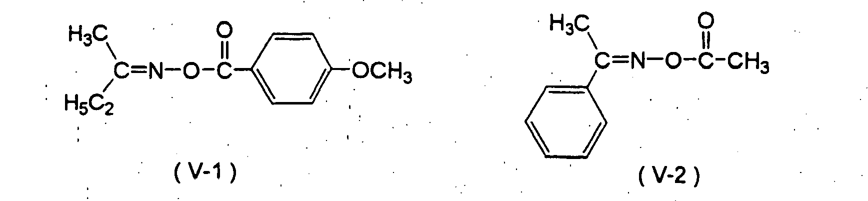

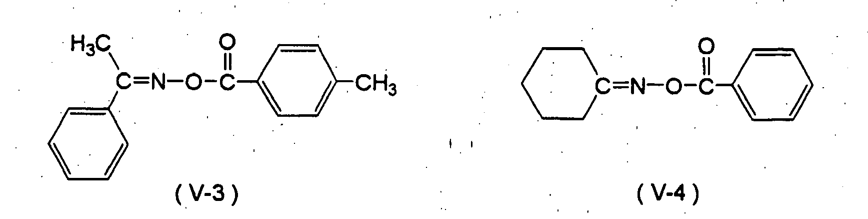

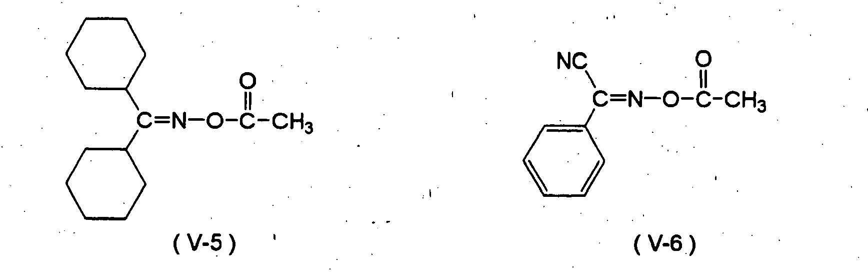

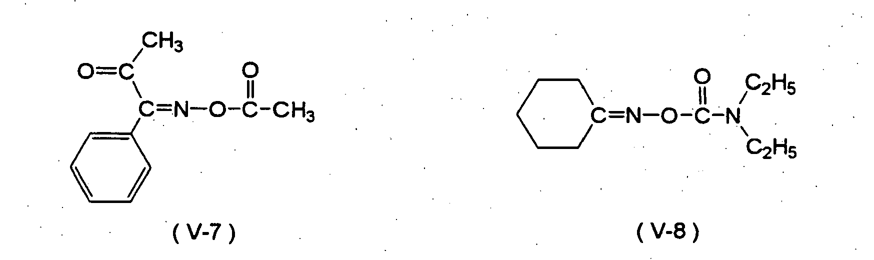

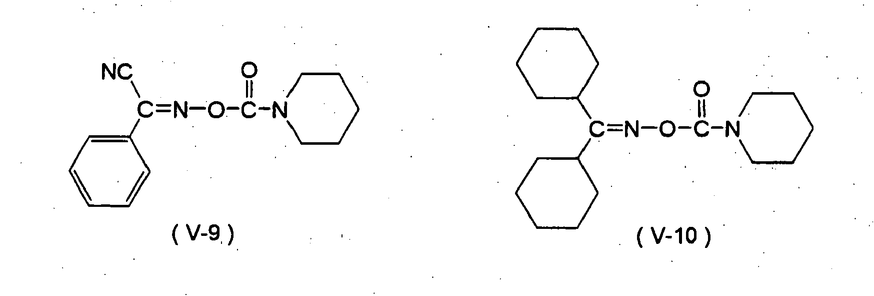

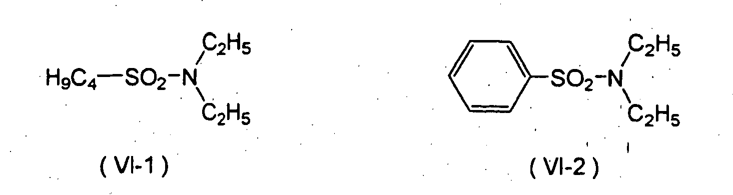

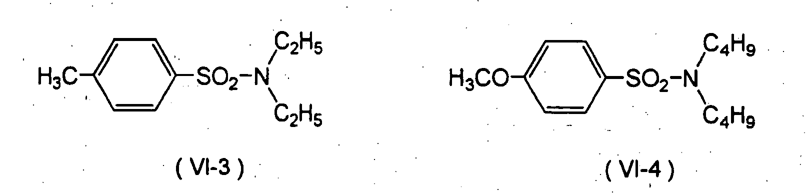

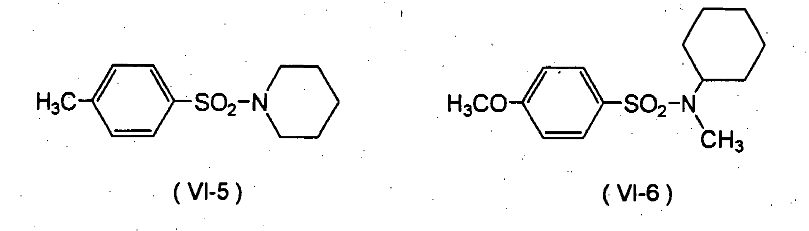

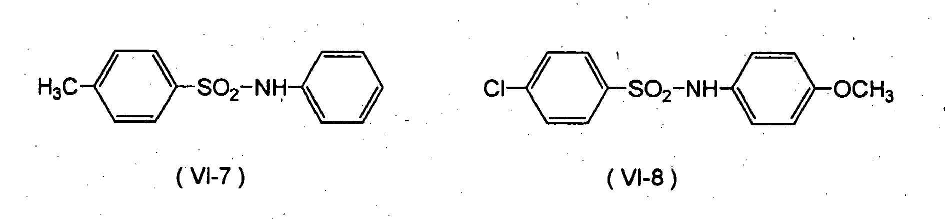

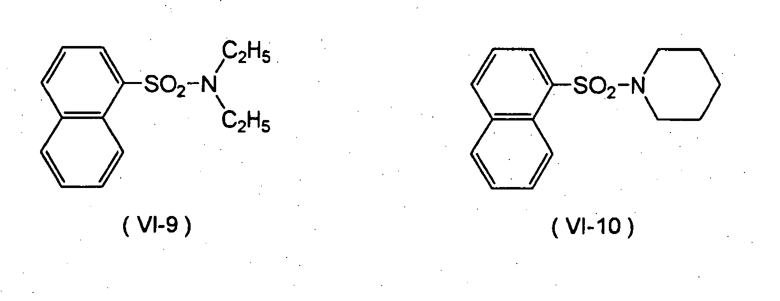

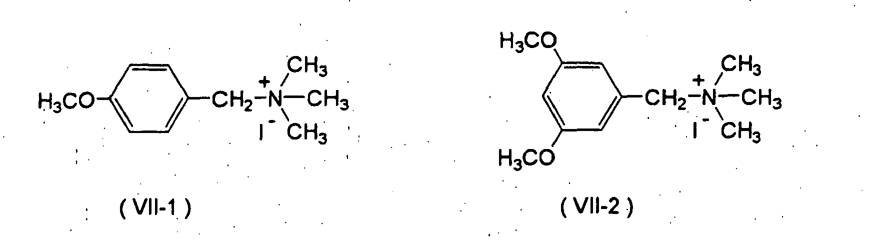

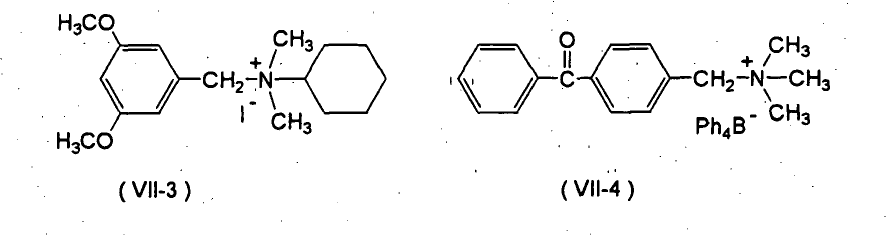

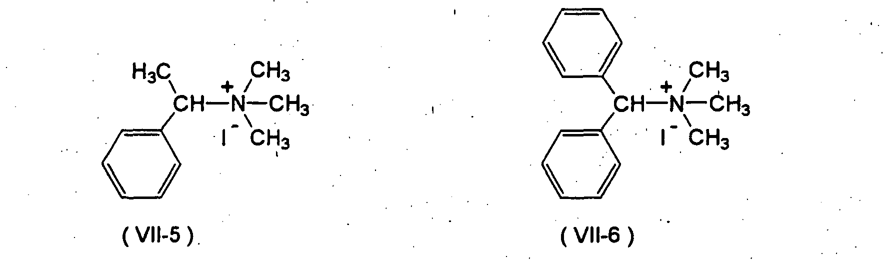

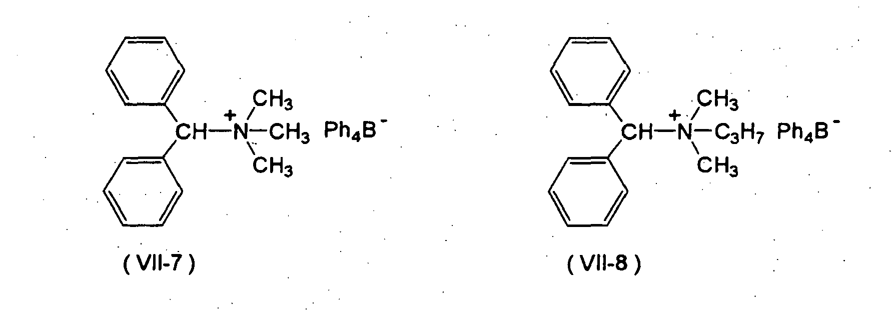

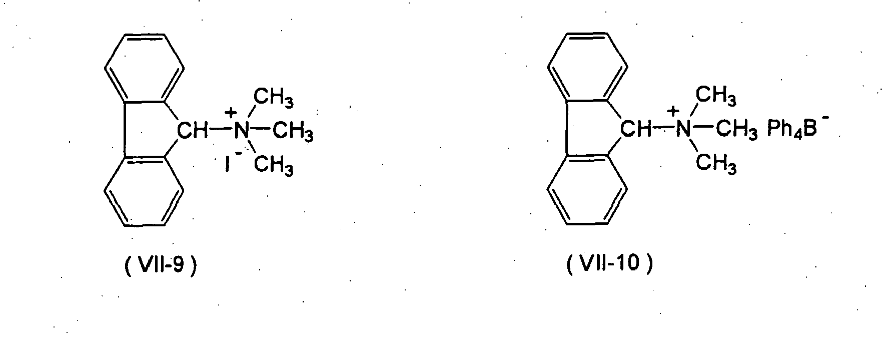

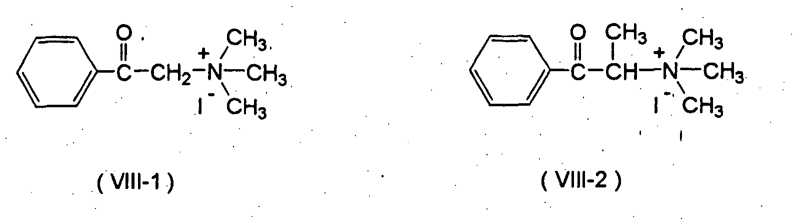

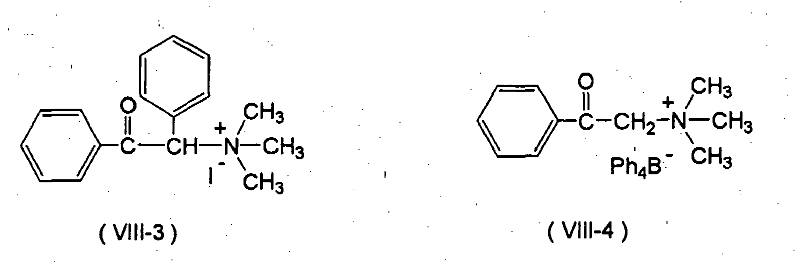

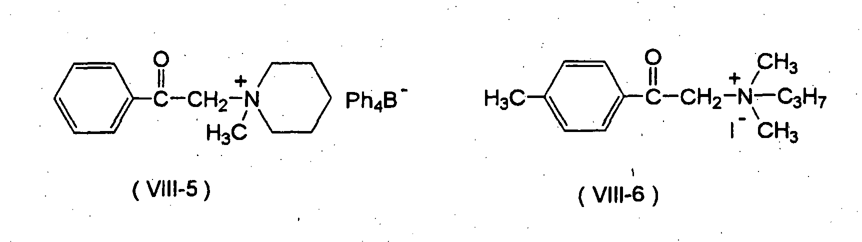

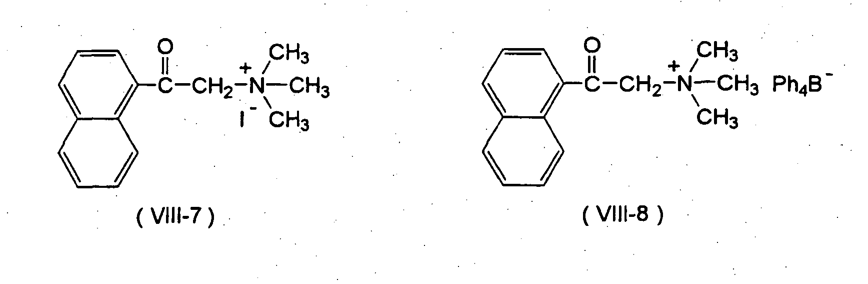

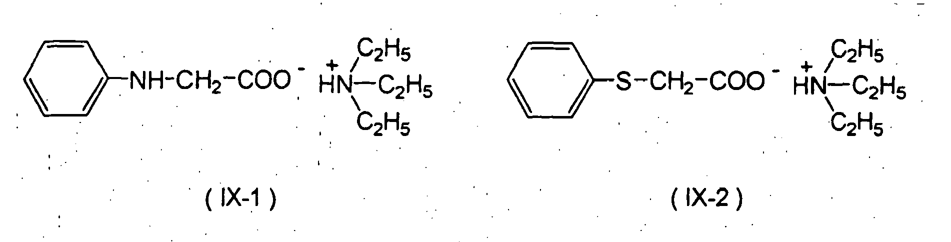

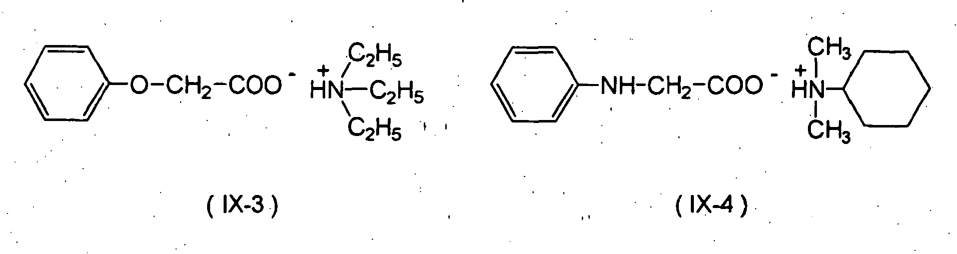

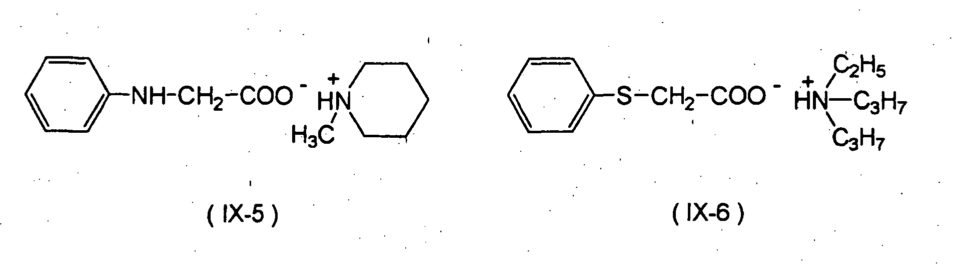

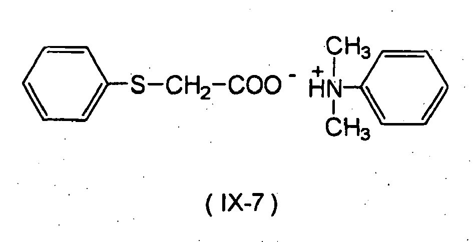

The ink composition of the present invention may contain, in combination with the above-mentioned essential components, various types of additives according to the intended application. These optional components are now explained.

### Colorant (d)

By adding a colorant to the ink composition of the present invention, a visible image may be formed. For example, when an image region of a lithographic printing plate is formed, the colorant is not necessarily added, but from the viewpoint of ease of plate inspection of the lithographic printing plate obtained, it is also preferable to use a colorant.

The colorant that can be used here is not particularly limited, and various types of known coloring materials (pigments, dyes) may be selected as appropriate according to the intended application. For example, when forming an image having excellent weather resistance, a pigment is preferable. As a dye, either a water-soluble dye or an oil-soluble dye may be used, and an oil-soluble dye is preferable.

### Pigment

The pigment is not particularly limited, and it is possible to use any generally commercially available organic pigment or inorganic pigment, a dispersion of a pigment in an insoluble resin, etc. as a dispersion medium, a pigment on the surface of which a resin has been grafted, etc. It is also possible to use resin particles colored with a dye, etc.

Examples of these pigments include pigments described in 'Ganryo no Jiten' (Dictionary of Pigments) Ed. by Seijirou Ito (2000), W. Herbst, K. Hunger 'Industrial Organic Pigments', JP-A-2002-12607, JP-A-2002-188025, JP-A-2003-26978, and JP-A-2003-342503.

Specific examples of the organic pigment and the inorganic pigment that can be used in the present invention include, as those exhibiting a yellow color, monoazo pigments such as Cl Pigment Yellow 1 (Fast Yellow G, etc.) and Cl Pigment Yellow 74, disazo pigments such as Cl Pigment Yellow 12 (Disazo Yellow AAA, etc.) and Cl Pigment Yellow 17, benzidine-free azo pigments such as Cl Pigment Yellow 180, azo lake pigments such as Cl Pigment Yellow 100 (Tartrazine Yellow Lake, etc.), condensed azo pigments such as Cl Pigment Yellow 95 (Azo Condensation Yellow GR, etc.), acidic dye lake pigments such as Cl Pigment Yellow 115 (Quinoline Yellow Lake, etc.), basic dye lake pigments such as CI Pigment Yellow 18 (Thioflavine Lake, etc.), anthraquinone pigments such as Flavanthrone Yellow (Y-24), isoindolinone pigments such as Isoindolinone Yellow 3RLT (Y-110), quinophthalone pigments such as Quinophthalone Yellow (Y-138), isoindoline pigments such as Isoindoline Yellow (Y-139), nitroso pigments such as Cl Pigment Yellow 153 (Nickel Nitroso Yellow, etc.), and metal complex azomethine pigments such as Cl Pigment Yellow 117 (Copper Azomethine Yellow, etc.).

Examples of pigments exhibiting a red or magenta color include monoazo pigments such as Cl Pigment Red 3 (Toluidine Red, etc.), disazo pigments such as Cl Pigment Red 38 (Pyrazolone Red B, etc.), azo lake pigments such as Cl Pigment Red 53:1 (Lake Red C, etc.) and Cl Pigment Red 57:1 (Brilliant Carmine 6B), condensed azo pigments such as Cl Pigment Red 144 (Azo Condensation Red BR, etc.), acidic dye lake pigments such as Cl Pigment Red 174 (Phloxine B Lake, etc.), basic dye lake pigments such as Cl Pigment Red 81 (Rhodamine 6G' Lake, etc.), anthraquinone pigments such as Cl Pigment Red 177 (Dianthraquinonyl Red, etc.), thioindigo pigments such as Cl Pigment Red 88 (Thioindigo Bordeaux, etc.), perinone pigments such as Cl Pigment Red 194 (Perinone Red, etc.), perylene pigments such as Cl Pigment Red 149 (Perylene Scarlet, etc.), quinacridone pigments such as Cl Pigment violet 19 (unsubstituted quinachridone) and CI Pigment Red 122 (Quinacridone Magenta, etc.), isoindolinone pigments such as CI Pigment Red 180 (Isoindolinone Red 2BLT, etc.), and alizarin lake pigments such as Cl Pigment Red 83 (Madder Lake, etc.).

Examples of pigments exhibiting a blue or cyan color include disazo pigments such as Cl Pigment Blue 25 (Dianisidine Blue, etc.), phthalocyanine pigments such as Cl Pigment Blue 15 (Phthalocyanine Blue, etc.) and Cl Pigment Blue 15:3, acidic dye lake pigments such as Cl Pigment Blue 24 (Peacock Blue Lake, etc.), basic dye lake pigments such as Cl Pigment Blue 1 (Victoria Pure Blue BO Lake, etc.), anthraquinone pigments such as Cl Pigment Blue 60 (Indanthrone Blue, etc.), and alkali blue pigments such as Cl Pigment Blue 18 (Alkali Blue V-5:1).

Examples of pigments exhibiting a green color include phthalocyanine pigments such as Cl Pigment Green 7 (Phthalocyanine Green) and Cl Pigment Green 36 (Phthalocyanine Green), and azo metal complex pigments such as Cl Pigment Green 8 (Nitroso Green).

Examples of pigments exhibiting an orange color include isoindoline pigments such as Cl Pigment Orange 66 (Isoindoline Orange) and anthraquinone pigments such as Cl Pigment Orange 51 (Dichloropyranthrone Orange).

Examples of pigments exhibiting a black color include Pigment Black 7 (carbon black), titanium black, and aniline black.

Specific examples of white pigments that can be used include basic lead carbonate (2PbCO₃Pb(OH)₂, also known as silver white), zinc oxide (ZnO, also known as zinc white), titanium oxide (TiO₂, also known as titanium white), and strontium titanate (SrTiO₃, also known as titan strontium white).

Titanium oxide has, compared with other white pigments, a low specific gravity, a high refractive index, and is chemically and physically stable, and therefore has high hiding power and coloring power as a pigment and, furthermore, has excellent durability toward acids, alkalis, and other environments. It is therefore preferable to use titanium oxide as the white pigment. It is of course possible to use another white pigment (which can be any white pigment, in addition to the white pigments cited above) as necessary.

For dispersion of the pigment, for example, a dispersing machine such as a ball mill, a sand mill, an attritor, a roll mill, a jet mill, a homogenizer, a paint shaker, a kneader, an agitator, a Henschel mixer, a colloidal mill, an ultrasonic homogenizer, a pearl mill, or a wet type jet mill may be used.

When carrying out dispersion of the pigment, a dispersant may be added. Examples of the dispersant include hydroxyl group-containing carboxylic acid esters, salts of a long-chain polyaminoamide and a high molecular weight acid ester, high molecular weight polycarboxylic acid salts, high molecular weight unsaturated acid esters, high molecular weight copolymers, modified polyacrylates, aliphatic polycarboxylic acids, naphthalenesulfonic acid formaldehyde condensates, polyoxyethylene alkylphosphate esters, and pigment derivatives. It is also preferable to use a commercial polymeric dispersant such as the Solsperse series manufactured by Zeneca.

Furthermore, as a dispersion adjuvant, it is also possible to use a synergist, depending on the various types of pigment. The dispersant and dispersion adjuvant are preferably used at 1 to 50 parts by weight relative to 100 parts by weight of the pigment.

In the ink composition, as a dispersing medium for various components such as the pigment, a solvent may be added, or the cationically polymerizable compound (a), which is a low molecular weight compound, may be used as a dispersing medium without using a solvent, and since the ink composition of the present invention is a radiation curing type ink, and after the ink is applied on top of a recording medium it is cured, it is preferable not to use a solvent. This is because, if a solvent remains in the cured ink image, the solvent resistance is degraded and the VOC (Volatile Organic Compound) problem of the residual solvent occurs. From this viewpoint, it is preferable to use as a dispersing medium the cationically polymerizable compound (a) and, in particular, it is preferable to select a cationically polymerizable monomer having the lowest viscosity in terms of improvement of dispersion suitability and handling properties of the ink composition.

It is preferable for the average particle size of the pigment to be in the range of 0.02 to 0.4 µm, more preferably 0.02 to 0.1 µm, and yet more preferably, 0.02 to 0.07 µm.

In order to make the average particle size of the pigment particles be in the above-mentioned range, the pigment, the dispersant, and the dispersing medium are selected, and dispersion conditions and filtration conditions are set. By such control of particle size, clogging of a head nozzle can be suppressed, and the storage stability of ink, the ink transparency, and the curing sensitivity can be maintained.

It is preferable to add the colorant at 1 to 20 wt % on a solids content basis of the ink composition, and more preferably 2 to 10 wt %.

### Dye

The dye to be used in the present invention is preferably oil-soluble. Specifically, this means that the solubility in water at 25°C (the weight of a dye that can be dissolved in 100 g of water) is equal to or less than 1 g, preferably equal to or less than 0.5 g, and more preferably equal to or less than 0.1 g. Therefore, the so-called oil-soluble dye, which is insoluble in water, is preferably used.

The dye used in the present invention may preferably be formed by incorporating an oil-solubilizing group into a dye core in order to dissolve a necessary amount thereof in an ink composition.

Examples of the oil-solubilizing group include a long-chain branched alkyl group, a long-chain branched alkoxy group, a long-chain branched alkylthio group, a long-chain branched alkylsulfonyl group, a long-chain branched acyloxy group, a long-chain branched alkoxycarbonyl group, a long-chain branched acyl group, a long-chain branched acylamino group, a long-chain branched alkylsulfonylamino group, a long-chain branched alkylaminosulfonyl group, and an aryl group, aryloxy group, aryloxycarbonyl group, arylcarbonyloxy group, arylaminocarbonyl group, arylaminosulfonyl group, or arylsulfonylamino group containing the long-chain branched substituent above.

Furthermore, a dye may be obtained by converting, using a long-chain branched alcohol, amine, phenol, or aniline derivative, a carboxylic acid or sulfonic acid of a water-soluble dye into an alkoxycarbonyl group, aryloxycarbonyl group, alkylaminosulfonyl group, or arylaminosulfonyl group, which are oil-solubilizing groups.

The above-mentioned oil-soluble dye preferably has a melting point of equal to or less than 200°C, more preferably a melting point of equal to or less than 150°C, and yet more preferably a melting point of equal to or less than 100°C. By using an oil-soluble dye having a low melting point, dye crystallization in the ink composition can be suppressed, and the storage stability of the ink composition is improved.

Furthermore, in order to improve discoloration resistance, in particular, the resistance to an oxidizing material such as ozone, and improve curing properties, it is desirable that the oxidation potential is high. Because of this, as the oil-soluble dye used in the present invention, it is preferable to use those having an oxidation potential of equal to or greater than 1.0 V (vs SCE). The higher the oxidation potential the more preferable it is; those having an oxidation potential of equal to or greater than 1.1 V (vs SCE) are yet more preferable, and those having an oxidation potential of equal to or greater than 1.15V (vs SCE) or greater are particularly preferable.

As a yellow dye, a compound having a structure represented by Formula (Y-I) described in JP-A-2004-250483 is preferable.

Dyes represented by Formulae (Y-II) to (Y-IV) described in paragraph No. (0034) of JP-A-2004-250483 are particularly preferable, and specific examples thereof include compounds described in paragraph Nos. (0060) to (0071) of JP-A-2004-250483. The oil-soluble dye represented by Formula (Y-I) described in this publication may be used not only for a yellow ink but also for any color ink, including a black ink and a red ink.

As a magenta dye, a compound having a structure represented by Formulae (3) and (4) described in JP-A-2002-114930 is preferable, and specific examples thereof include compounds described in paragraph Nos. (0054) to (0073) of JP-A-2002-114930.

Particularly preferred dyes are azo dyes represented by Formulae (M-1) to (M-2) described in paragraph Nos. (0084) to (0122) of JP-A-2002-121414, and specific examples thereof include compounds described in paragraph Nos. (0123) to (0132) of JP-A-2002-121414. The oil-soluble dyes represented by Formulae (3), (4), and (M-1) to (M-2) described in this publication may be used not only for a magenta ink but also for any color ink, including a black ink and a red ink.

Preferred examples of a cyan dye include dyes represented by Formulae (I) to (IV) described in JP-A-2001-181547 and dyes represented by Formulae (IV-1) to (IV-4) described in paragraph Nos. (0063) to (0078) of JP-A-2002-121414, and specific examples thereof include compounds described in paragraph Nos. (0052) to (0066) of JP-A-2001-181547, and paragraph Nos. (0079) to (0081) of JP-A-2002-121414.

Particularly preferred dyes are phthalocyanine dyes represented by Formulae (C-I) and (C-II) described in paragraph Nos. (0133) to (0196) of JP-A-2002-121414, and a phthalocyanine dye represented by Formula (C-II) is more preferable. Specific examples thereof include compounds described in paragraph Nos. (0198) to (0201) of JP-A-2002-121414. The oil-soluble dyes represented by the above-mentioned Formulae (I) to (IV), (IV-1) to (IV-4), (C-I), and (C-11) may be used not only for a cyan ink but also for any color ink, including a black ink and a green ink.

### -Oxidation potential-

The oxidation potential value (Eox) of a dye used in the present invention can be easily measured by one skilled in the art and the method therefor is described in, for example, P. Delahay, 'New Instrumental Methods in Electrochemistry', Interscience Publishers (1954), A. J. Bard et al., 'Electrochemical Methods', John Wiley & Sons (1980), and Akira Fujishima et al., 'Denkikagaku Sokuteihou' (Electrochemical Measurement Methods), Gihodo Shuppan Sha (1984).

More specifically, a test sample is dissolved to give a concentration of 1 x 10⁻² to 1 x 10⁻⁶ mol/L in a solvent such as dimethylformamide or acetonitrile containing a supporting electrolyte such as sodium perchlorate or tetrapropylammonium perchlorate, an oxidation wave when sweeping toward the oxidation side (noble side) using carbon (GC) as a working electrode and a rotating platinum electrode as the counter electrode using cyclic voltammetry or direct current polarographic equipment is approximated to a straight line, and the oxidation potential of the midpoint of a line segment formed between an intersection point of the straight line and a residual current/potential straight line and an intersection point of the straight line and a saturated current straight line (or an intersection point with a straight line parallel to the ordinate passing through the potential peak value) is measured as a value relative to the SCE (saturated calomel electrode). This value sometimes deviates by on the order of tens of millivolts due to the effect of a liquid junction potential, the liquid resistance of the sample solution, or the like, but the reproducibility of the potential can be guaranteed by adding a standard sample (for example, hydroquinone). The support electrolyte and solvent used may be selected appropriately according to the oxidation potential and the solubility of the test sample. The support electrolyte and solvent that can be used here may be referred to in Akira Fujishima et al., 'Denkikagaku Sokuteihou' (Electrochemical Measurement Methods), Gihodo Shuppan Sha (1984), pp. 101 to 118.

### Other components

Various types of additives that are used as necessary are described below.

### Compound having basic nitrogen atom

In the present invention, for the purpose of improving the storage stability of the ink composition, a compound having a basic nitrogen atom (hereinafter, called a specified base component as appropriate) may be added as desired. The compound preferably has a basic nitrogen and has a pKa of the conjugate acid of equal to or greater than 4. The pKa value described here can be defined as the negative of the common logarithm of a dissociation constant Ka in an aqueous solution of a weak electrolyte, that is, pKa = -log₁₀ Ka. As specific examples thereof there can be cited anilines such as 2-chloroaniline, 2-bromoaniline, 4-methylaniline, 3-chloroaniline, 3,5-dibromoaniline, *N*-methylaniline, *N,N-*dimethylaniline, *N,N*-diethylaniline, *N,N*-bis(hydroxyethyl)aniline, 3-nitroaniline, 2-aminobenzoic acid, 4-aminoazobenzene, *N*-phenylaniline, and *N*-phenylglycine, pyridines such as 3-chloropyridine, 3-bromopyridine, 4-hydroxypyridine, 3-carboxypyridine, 2,6-dimethylpyridine, and 2,4,6-trimethylpyridine, cyclic amines such as proline, hydroxyproline, purine, 8-hydroxypurine, *N*-methylpyrazine, thiazole, and tryptophan, aliphatic aminoacids such as arginine, aspartic acid, glutamic acid, *N*-methylglycine, *N*-propylglycine, histidine, cysteine, leucine, isoleucine, ornithine, serine, threonine, methionine, alanine, and methoxyalanine, aliphatic tertiary amines such as trimethylamine, triethylamine, tributylamine, diisopropylethylamine, and trioctylamine, and in addition compounds having a 1,3-diazapropene structure, but as long as the compound has a basic nitrogen atom in the molecular structure the examples are not limited thereto. Yet more preferred examples thereof include compounds represented by Formulae (X) to (XIII).

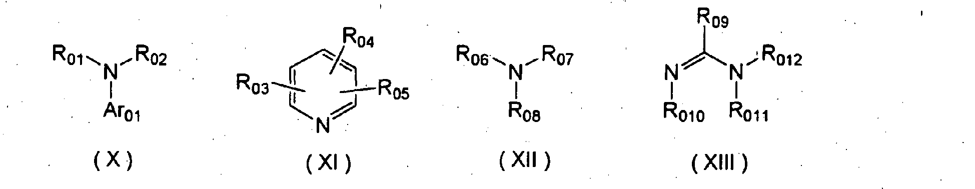

In Formulae (X) to (XIII), R₀₁ and R₀₂ independently denote a hydrogen atom, or an optionally substituted alkyl group, cycloalkyl group, aralkyl group, or aryl group, and Ar₀₁ denotes an optionally substituted aryl group. R₀₃ to R₀₅ independently denote a hydrogen atom, a halogen atom, an optionally substituted alkyl group, cycloalkyl group, aralkyl group, or aryl group, a hydroxyl group, a carboxyl group, a cyano group, a nitro group, an acyl group, or an -N(R₀₁)(R₀₂) group. R₀₆ to R₀₈ and R₀₁₀ to R₀₁₂ independently denote a hydrogen atom, or an optionally substituted alkyl group, cycloalkyl group, or aralkyl group. R₀₉ denotes an optionally substituted alkyl group, cycloalkyl group, aralkyl group, or aryl group, an -N(R₀₁₃)(R₀₁₄) group, or an -OR₀₁₅ group. R₀₁₃ to R₀₁₅ independently denote a hydrogen atom, or an optionally substituted alkyl group, cycloalkyl group, or aralkyl group. Furthermore, two of R₀₁, R₀₂, and Ar₀₁ in Formula (X), two of R₀₃ to R₀₅ in Formula (XI), two of R₀₆ to R₀₈ in Formula (XII), and two of R₀₉ to R₀₁₅ in Formula (XIII) may be bonded together to form an aliphatic ring, an aromatic ring, or a hetero ring. Furthermore, in Formula (X), R₀₁ and A₀₁, and R₀₂ and A₀₁ may form a ring.

A compound having a plurality of the structures represented by Formulae (X) to (XIII) may be used. For example, it may be a compound having a structure in which R₀₆ to R₀₈ of a compound represented by Formula (XII) are bonded directly or via a linking group to R₀₆ to R₀₈ of a compound represented by Formula (XII).

The above-mentioned alkyl group, cycloalkyl group, aralkyl group, aryl group, and a substituent that can be introduced into these groups are the same as those defined for Formulae (I) to (IX). Specific examples thereof include compounds (X-1) to (XIII-12) below, but the present invention should not be construed as being limited thereto.

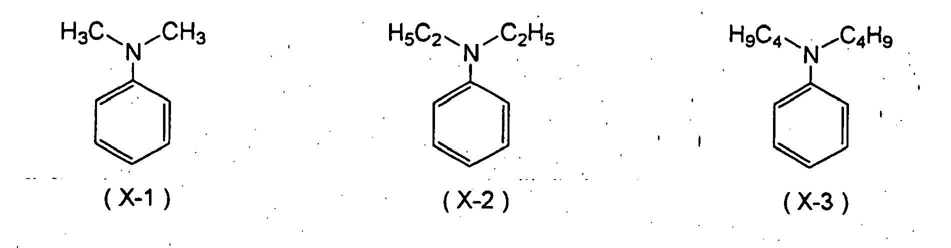

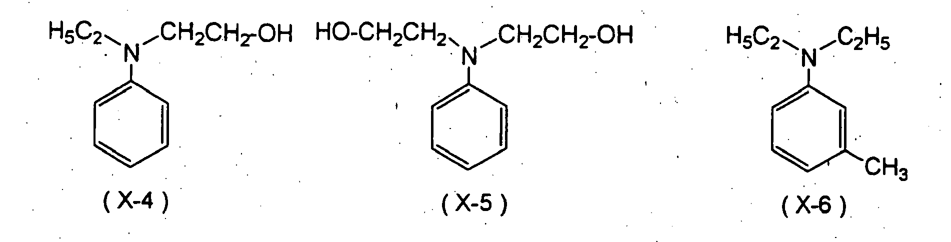

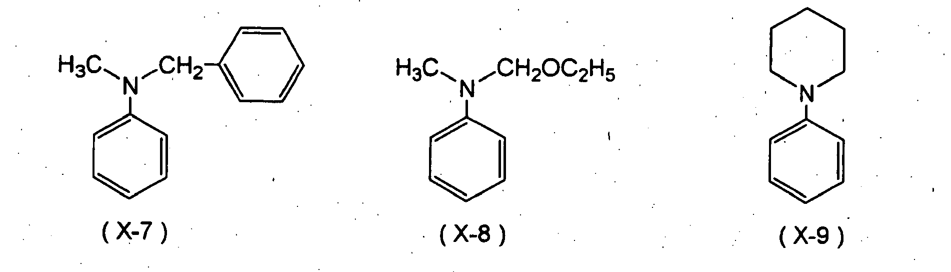

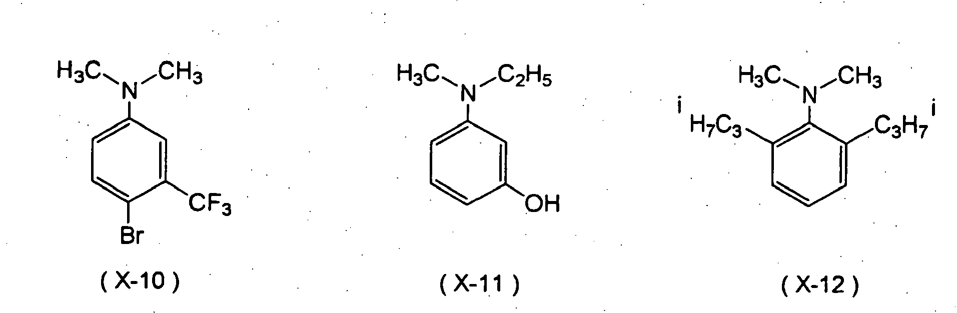

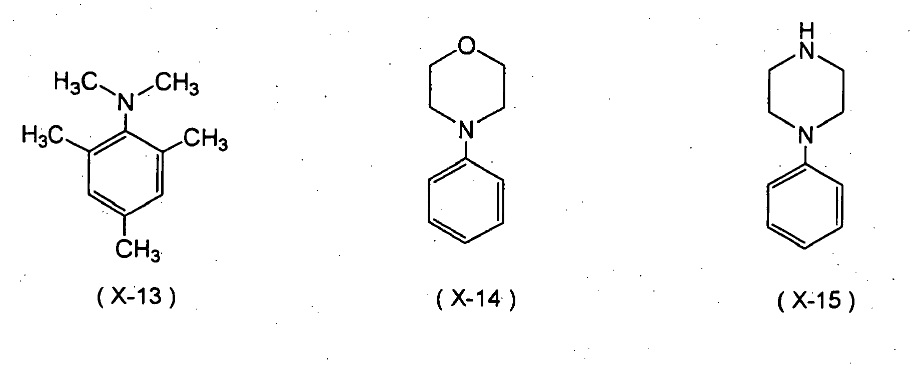

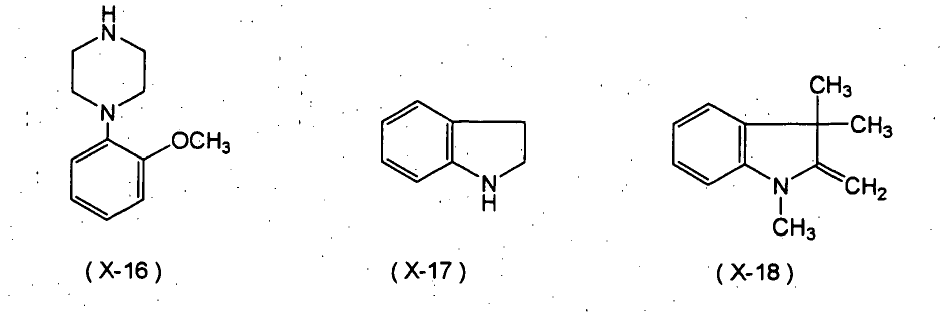

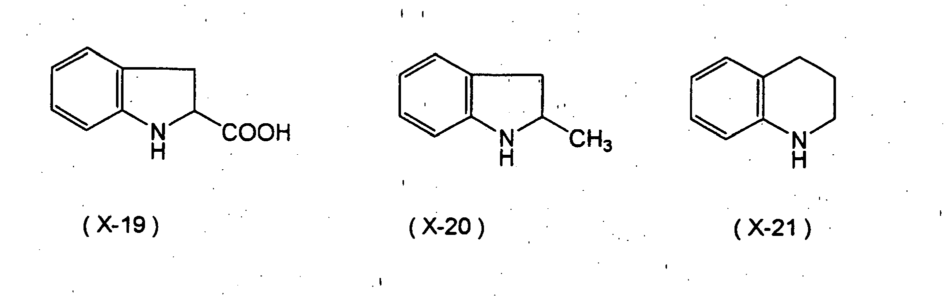

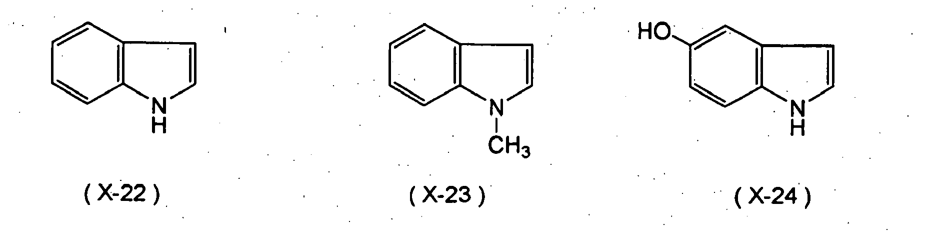

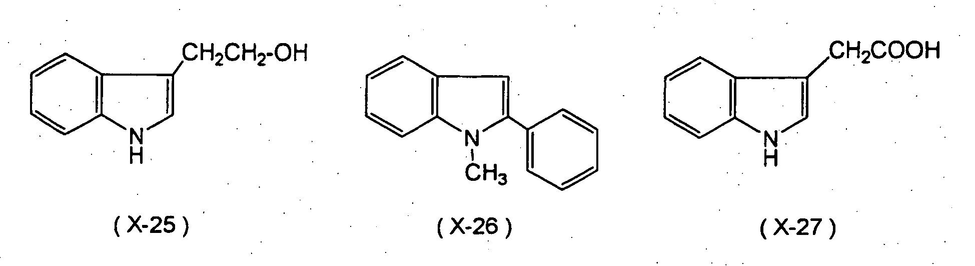

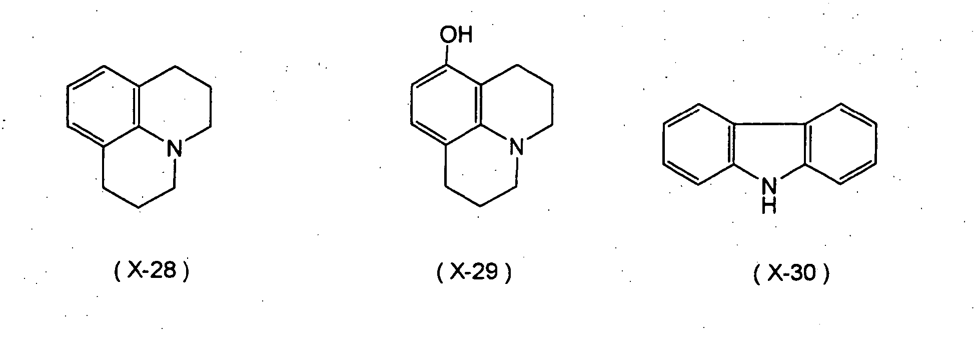

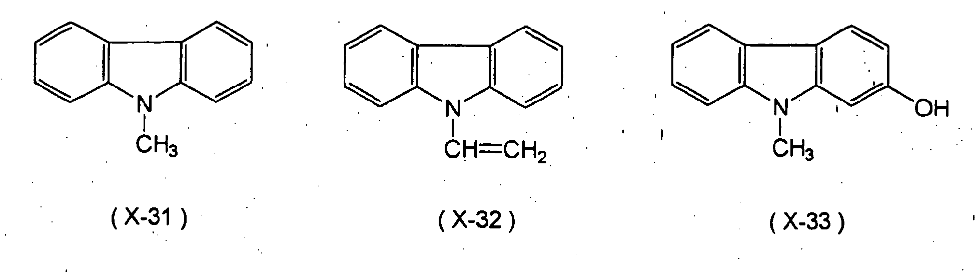

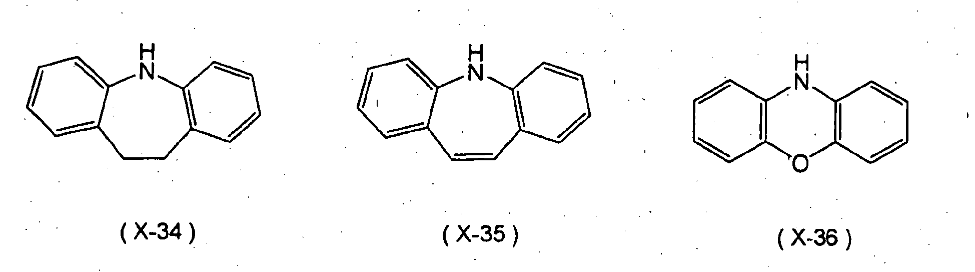

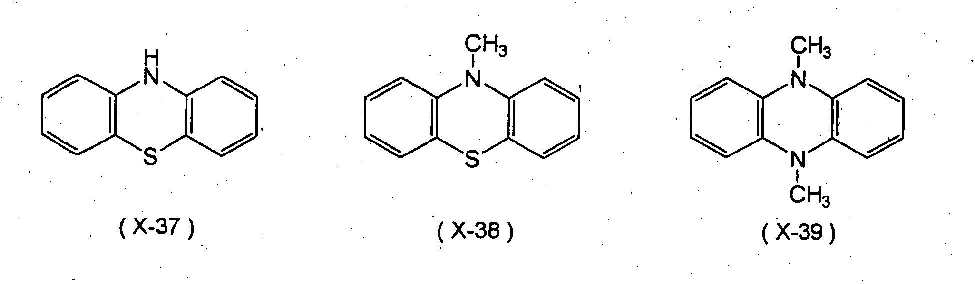

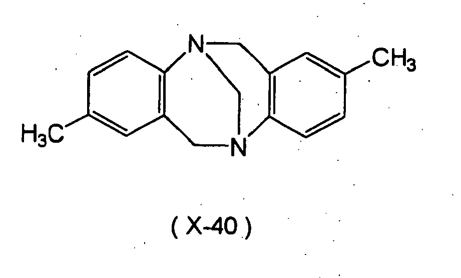

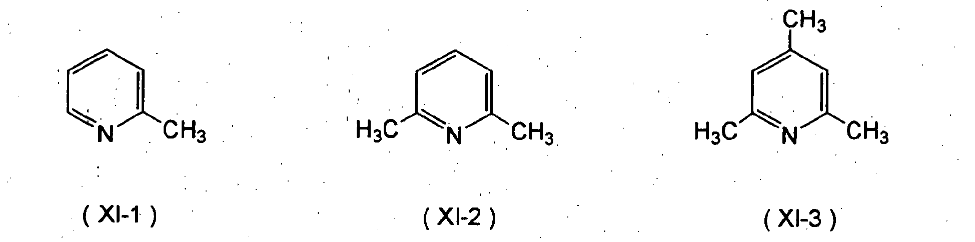

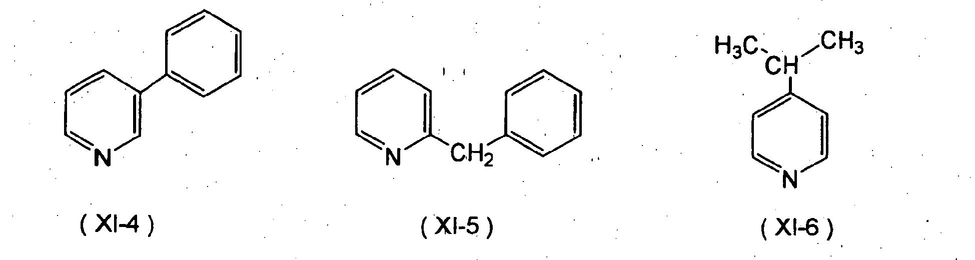

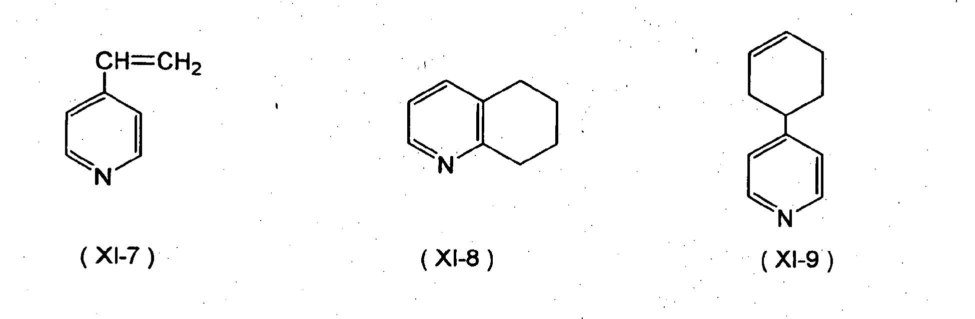

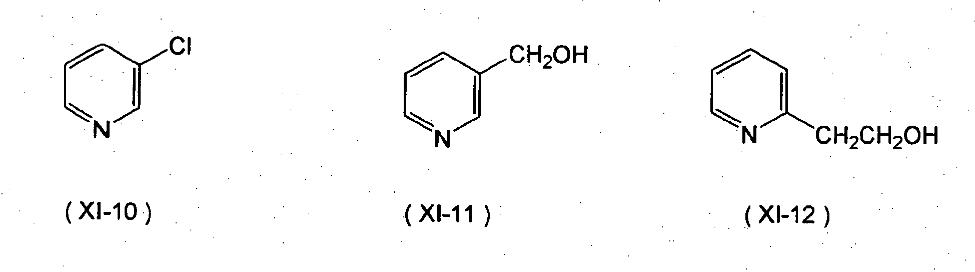

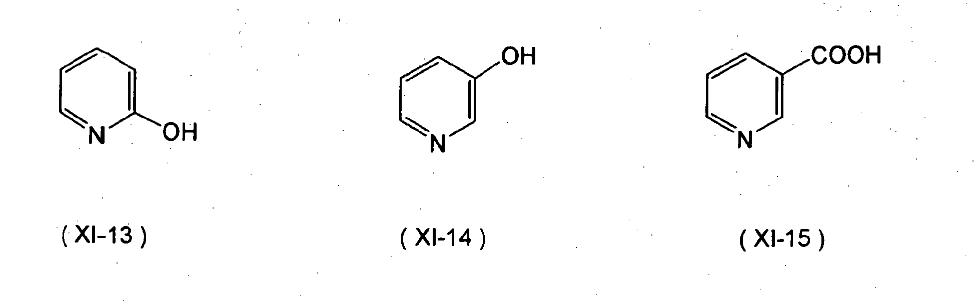

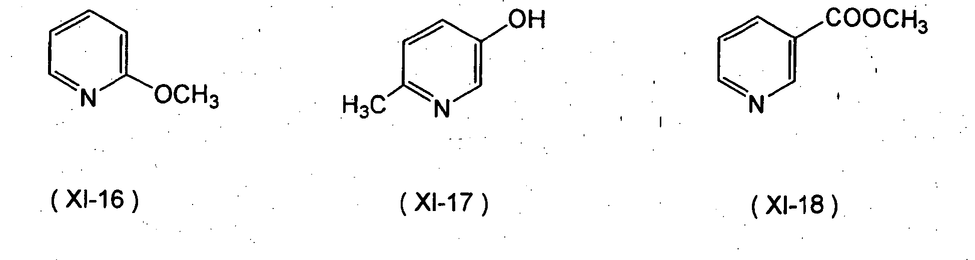

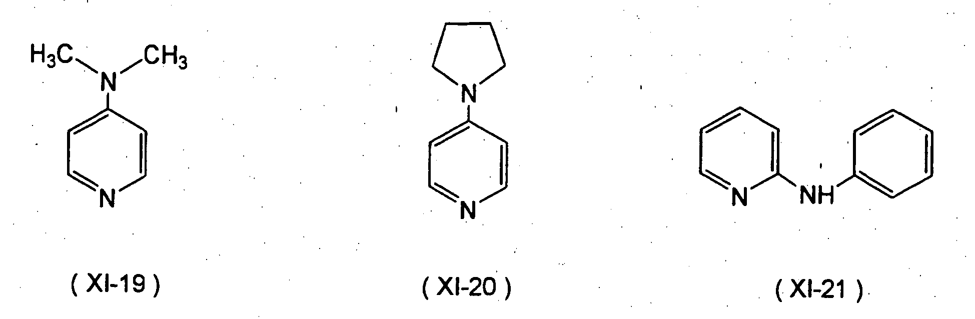

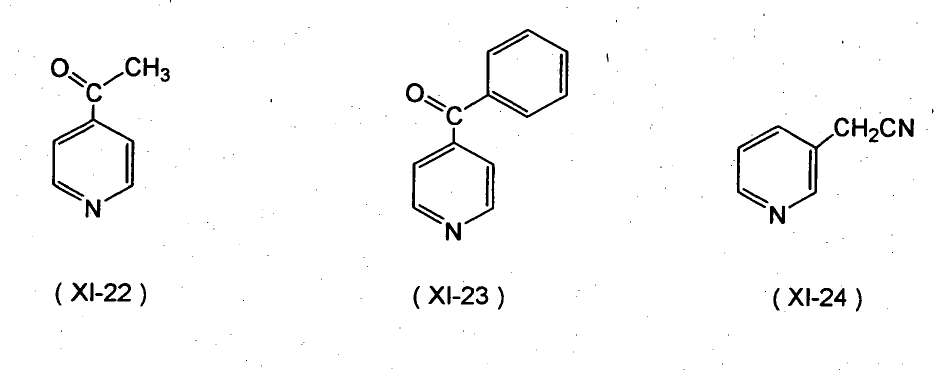

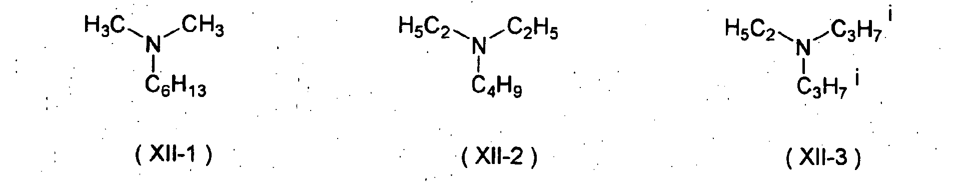

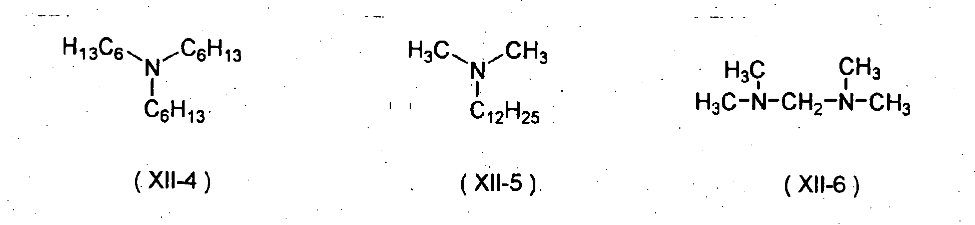

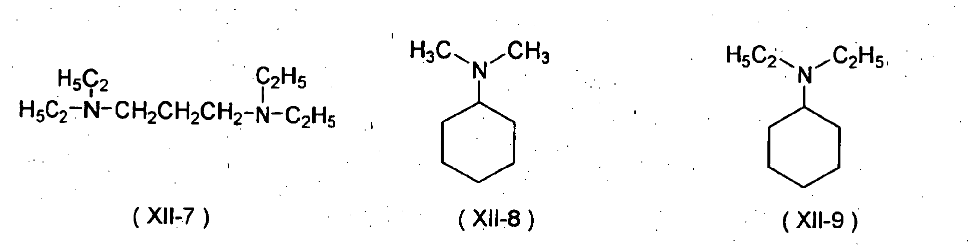

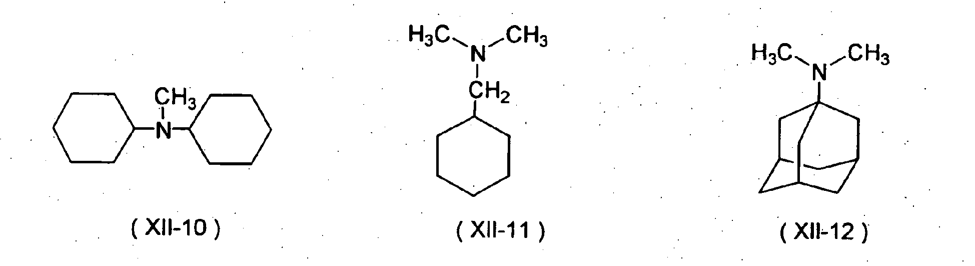

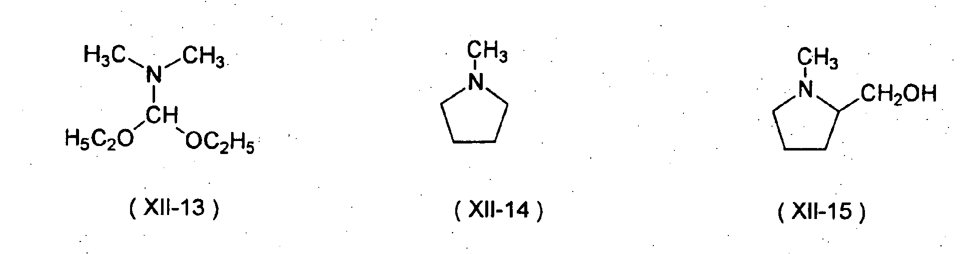

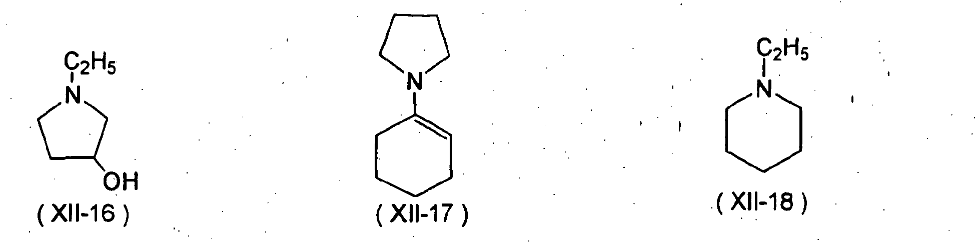

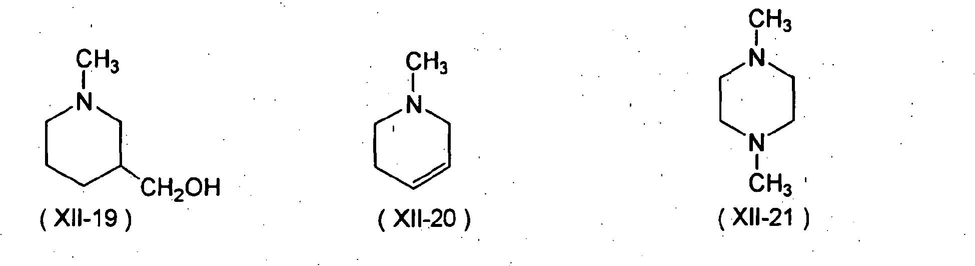

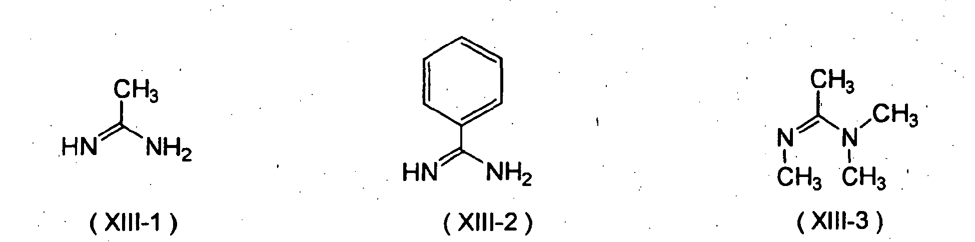

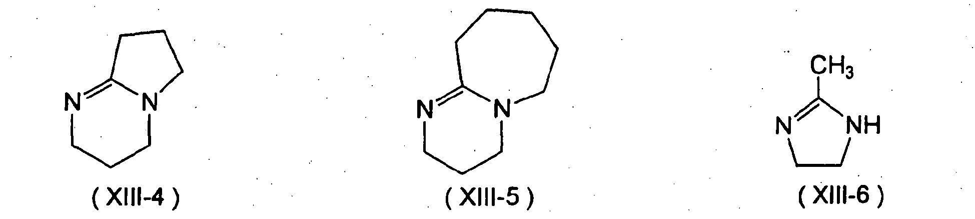

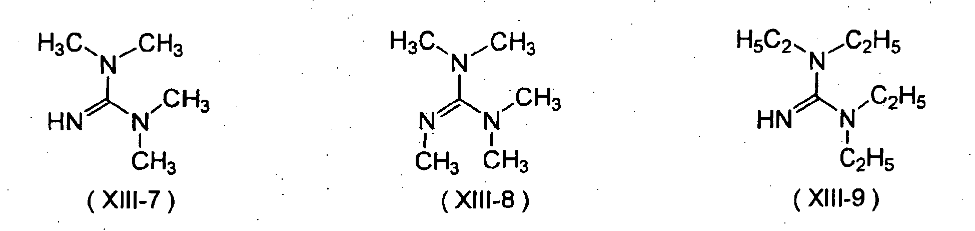

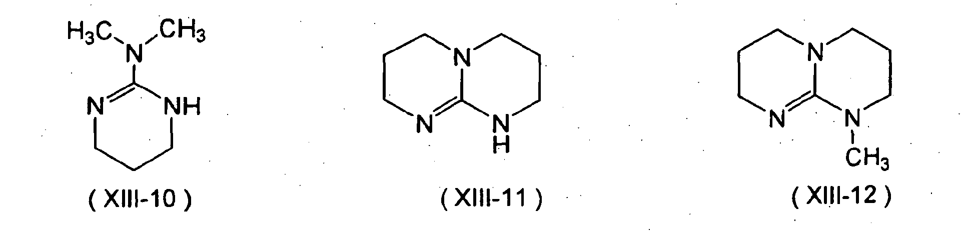

The ink composition of the present invention may contain only one type of specified base component or may contain two or more types in combination. The content of the specified base component in the ink composition is suitably 0.001 to 10 wt % relative to the total solids content of the composition, preferably 0.01 to 7 wt %, and yet more preferably 0.03 to 5 wt %. Furthermore, the proportion used of the compound (b) of the present invention that generates an acid when exposed to radiation is in the range of 0.1 to 50 mol %, and preferably 0.5 to 20 mol %.

### Organic acidic compound having pKa value of 2 to 6

The present invention may as necessary employ an organic acidic compound having a pKa value of 2 to 6. The organic acidic compound having a pKa of 2 to 6 (hereinafter, also simply called an 'organic acidic component') qualitatively corresponds to a weakly acidic organic compound. It is preferable if the pKa is in the above-mentioned range since the ink composition of the present invention has excellent sensitivity and stability over time. Specific compounds include carboxylic acids in particular. Examples thereof include aliphatic or aromatic monocarboxylic acids, dicarboxylic acids, and tricarboxylic acids having 1 to 20 carbons, such as acetic acid, phenylacetic acid, phenoxyacetic acid, methoxypropionic acid, lactic acid, hexanoic acid, heptanoic acid, octanoic acid, palmitic acid, stearic acid, oleic acid, linolenic acid, cyclopropylcarboxylic acid, cyclobutanecarboxylic acid, cyclopentanecarboxylic acid, cyclohexanecarboxylic acid, 1-adamantanecarboxylic acid, 1,3-adamantanedicarboxylic acid, norbornene-2,3-dicarboxylic acid, abietic acid, *trans*-retinoic acid, cyclohexylacetic acid, dicyclohexylacetic acid, adamantaneacetic acid, malonic acid, malonic acid monomethyl ester, fumaric acid, maleic acid, maleic acid monomethyl ester, itaconic acid, crotonic acid, succinic acid, adipic acid, sebacic acid, glycolic acid, diglycolic acid, mandelic acid, tartaric acid, malic acid, arginic acid, cinnamic acid, methoxycinnamic acid, 3,5-dimethoxycinnamic acid, benzoic acid, salicylic acid, 4-hydroxybenzoic acid, gallic acid, 3-nitrobenzoic acid, 3-chlorobenzoic acid, 4-vinylbenzoic acid, *t*-butylbenzoic acid, 1-naphthoic acid, 1-hydroxy-2-naphthoic acid, fluorenone-2-carboxylic acid, 9-anthracenecarboxylic acid, 2-anthraquinonecarboxylic acid, phthalic acid, phthalic acid monomethyl ester, isophthalic acid, terephthalic acid, trimellitic acid, and trimellitic acid monomethyl ester, but the present invention should not be construed as being limited thereto.

When the ink composition of the present invention employs the organic acidic component, the content thereof is preferably 0.001 to 10 wt % relative to the total solids content of the ink composition, and more preferably 0.01 to 7 wt %, and yet more preferably 0.05 to 5 wt %. Furthermore, when the specified base component is used, the molar ratio of the specified base component to the organic acidic component (specified base component) / (organic acidic component) is preferably 0.1 to 4, and more preferably 0.3 to 2.

### UV absorber

A UV absorber may be used from the viewpoint of improving the wether resistance of an image obtained and preventing discoloration.

The UV absorbers include benzotriazole compounds described in JP-A-58-185677, JP-A-61-190537, JP-A-2-782, JP-A-5-197075 and JP-A-9-34057; benzophenone compounds described in JP-A-46-2784, JP-A-5-194483 and US Pat. No. 3,214,463; cinnamic acid compounds described in JP-B-48-30492, JP-B-56-21141 and JP-A-10-88106; triazine compounds described in JP-A-4-298503, JP-A-8-53427, JP-A-8-239368, JP-A-10-182621 and JP-W-8-501291 (the term "JP-W" as used herein means an unexamined published international patent application); compounds described in Research Disclosure No. 24239; and compounds represented by stilbene and benzoxazole compounds, which absorb ultraviolet rays to emit fluorescence, the so-called fluorescent brightening agents.

The amount thereof added is appropriately selected according to the intended application, and it is generally on the order of 0.5 to 15 wt % on the basis of the solids content in the ink composition.

### Sensitizer

The ink composition of the present invention may contain a sensitizer as necessary for the purpose of improving the acid generating efficiency of the photo-acid generator and increasing the photosensitive wavelength. Any sensitizer may be used as long as the photo-acid generator is sensitized by virtue of an electron transfer mechanism or an energy transfer mechanism. Preferred examples thereof include aromatic polycondensed compounds such as anthracene, 9,10-dialkoxyanthracene, pyrene, and perylene, aromatic ketone compounds such as acetophenone, benzophenone, thioxanthone, and Michler's ketone, and heterocyclic compounds such as phenothiazine and *N*-aryloxazolidinone. The amount thereof added is appropriately selected according to the intended application, and it is generally used at 0.01 to 1 mol % relative to the photo-acid generator (b), and preferably 0.1 to 0.5 mol %.

### Antioxidant

In order to improve the stability of the ink composition, an antioxidant may be added. Examples of the antioxidant include those described in Laid-open European Patent Nos. 223739, 309401, 309402, 310551, 310552, and 459416, Laid-open German Patent No. 3435443, JP-A-54-48535, JP-A-62-262047, JP-A-63-113536, JP-A-63-163351, JP-A-2-262654, JP-A-2-71262, JP-A-3-121449, JP-A-5-61166, JP-A-5-119449, and US Pat. Nos. 4,814,262 and 4,980,275.

The amount thereof added is appropriately selected according to the intended application, and it is generally on the order of 0.1 to 8 wt % on the basis of the solids content in the ink composition.

### Antifading agent

The ink composition of the present invention may employ various organic and metal complex antifading agents. The organic antifading agents include hydroquinones, alkoxyphenols, dialkoxyphenols, phenols, anilines, amines, indanes, chromans, alkoxyanilines, and heterocycles, and the metal complex antifading agents include nickel complexes and zinc complexes. More specifically, there can be used compounds described in patents cited in Research Disclosure, No. 17643, Items VII-I to J, ibid., No.15162, ibid., No.18716, page 650, left-hand column, ibid., No. 36544, page 527, ibid., No. 307105, page 872, and ibid., No. 15162, and compounds contained in general formulae and compound examples of typical compounds described in JP-A-62-21572, pages 127 to 137.

The amount thereof added is appropriately selected according to the intended application, and it is generally on the order of 0.1 to 8 wt % on the basis of the solids content in the ink composition.

### Conductive salt

The ink composition of the present invention may contain, for the purpose of controlling discharge properties, a conductive salt such as potassium thiocyanate, lithium nitrate, ammonium thiocyanate, or dimethylamine hydrochloride.

### Solvent

It is also effective to add a trace amount of organic solvent to the ink composition of the present invention in order to improve the adhesion to a recording medium.

Examples of the solvent include ketone-based solvents such as acetone, methyl ethyl ketone, and diethyl ketone, alcohol-based solvents such as methanol, ethanol, 2-propanol, 1-propanol, 1-butanol, and *tert*-butanol, chlorine-based solvents such as chloroform and methylene chloride, aromatic-based solvents such as benzene and toluene, ester-based solvents such as ethyl acetate, butyl acetate, and isopropyl acetate, ether-based solvents such as diethyl ether, tetrahydrofuran, and dioxane, and glycol ether-based solvents such as ethylene glycol monomethyl ether and ethylene glycol dimethyl ether.

In this case, it is effective if the amount thereof added is in a range that does not cause problems with the solvent resistance or the VOC, and the amount is preferably in the range of 0.1 to 5 wt % relative to the total amount of the ink composition, and more preferably 0.1 to 3 wt %.

### High molecular weight compound

The ink composition may contain various types of high molecular weight compounds in order to adjust film physical properties. Examples of the high molecular weight compounds include acrylic polymers, polyvinylbutyral resins, polyurethane resins, polyamide resins, polyester resins, epoxy resins, phenol resins, polycarbonate resins, polyvinylformal resins, shellac, vinylic resins, acrylic resins, rubber-based resins, waxes, and other natural resins. They may be used in a combination of two or more types. Among these, a vinylic copolymer obtained by copolymerization of an acrylic monomer is preferable. Furthermore, as a copolymer component of the high molecular weight compound, a copolymer containing as a structural unit a 'carboxyl group-containing monomer', an 'alkyl methacrylate ester', or an 'alkyl acrylate ester' may preferably be used.

### Surfactant

As a surfactant, those described in JP-A-62-173463 and JP-A-62-183457 can be cited. Examples thereof include anionic surfactants such as dialkylsulfosuccinic acid salts, alkylnaphthalenesulfonic acid salts, and fatty acid salts, nonionic surfactants such as polyoxyethylene alkyl ethers, polyoxyethylene alkyl allyl ethers, acetylene glycols, and polyoxyethylene / polyoxypropylene block copolymers, and cationic surfactants such as alkylamine salts and quaternary ammonium salts. Instead of the surfactant, an organofluoro compound may be used. The organofluoro compound is preferably hydrophobic. Examples of the organofluoro compound include fluorine-based surfactants, oil-like fluorine-based compounds (e.g. a fluorine oil), and solid fluorine compounds resin (e.g. tetrafluoroethylene resin), and those described in JP-B-57-9053 (8th to 17th columns) and JP-A-62-135826.

In addition to the above, the composition may contain as necessary, for example, a leveling additive, a matting agent, a wax for adjusting film physical properties, or a tackifier in order to improve the adhesion to a recording medium such as polyolefin or PET, the tackifier not inhibiting polymerization.

Specific examples of the tackifier include high molecular weight tacky polymers described on pp. 5 and 6 of JP-A-2001-49200 (e.g. a copolymer formed from an ester of (meth)acrylic acid and an alcohol having an alkyl group with 1 to 20 carbons, an ester of (meth)acrylic acid and an alicyclic alcohol having 3 to 14 carbons, or an ester of (meth)acrylic acid and an aromatic alcohol having 6 to 14 carbons), and a low molecular weight tackifying resin having a polymerizable unsaturated bond.

The ink composition of the present invention preferably has an ink viscosity of 7 to 30 mPa·s at the discharge temperature while taking into consideration the discharge properties, and yet more preferably 7 to 20 mPa·s, and it is preferably set in the above-mentioned range by adjusting the component ratio as appropriate. The ink viscosity at 25°C to 30°C is preferably 35 to 500 mPa·s, and more preferably 35 to 200 mPa·s. By setting the viscosity at room temperature at a high value, even when a porous recording medium is used, ink penetration into the recording medium can be prevented, the amount of uncured monomer can be reduced, and the odor can be reduced; furthermore, dot spread when an ink droplet lands can be suppressed, and as a result the image quality is improved. When the ink viscosity at 25°C to 30°C is in the above-mentioned range, the effect in preventing spread can be exhibited sufficiently, and delivery of the ink solution is good.

The surface tension of the ink composition of the present invention is preferably 20 to 30 mN/m, and yet more preferably 23 to 28 mN/m. When recording is carried out on various types of recording medium such as polyolefin, PET, coated paper, and uncoated paper, from the viewpoint of spread and penetration, it is preferably at least 20 mN/m, and from the viewpoint of wettability it is preferably not more than 30 mN/m.

The ink composition of the present invention thus prepared is suitably used as an inkjet recording ink. The ink composition is printed on a recording medium using an inkjet printer, and subsequently the printed ink composition is cured by irradiating with radiation.

Since an image area of a printed material obtained using the ink is cured by irradiation with radiation such as ultraviolet rays, the strength of the image area is excellent, and it can be used for various types of application, in addition to formation of an image using an ink, such as formation of an ink accepting layer (image area) of a lithographic printing plate.

### Inkjet recording method and inkjet recording device

An inkjet recording method and an inkjet recording device that are desirably employed in the present invention are now explained.

The inkjet recording method of the present invention is an inkjet recording method comprising a step (a) of discharging an ink composition onto a recording medium, and a step (b) of irradiating the discharged ink composition with radiation so as to cure the ink composition, wherein the ink composition of the present invention is used.

Furthermore, the printed material of the present invention is a printed material recorded using the inkjet recording method.

In the inkjet recording method, it is preferable to heat the ink composition to 40°C to 80°C so as to reduce the viscosity of the ink composition to 7 to 30 mPa·s, and then carry out discharge; in accordance with the use of this method, a high discharge stability can be achieved. In general, since the radiation curing type ink composition has a higher viscosity than that of a water-based ink, variation in viscosity due to a change in temperature when printing is large. This viscosity variation of the ink composition directly has a large influence on the droplet size and droplet discharge speed, and since this causes a degradation in image quality, it is necessary to maintain the ink composition temperature at as uniform a level as possible when printing. The control range of the ink composition temperature is preferably set at ±5°C, more preferably ±2°C, and yet more preferably ±1°C.

The inkjet recording device is equipped with means for stabilizing the ink composition temperature, and a section that is to be maintained at a constant temperature includes an ink tank (a middle tank if there is a middle tank) and all pipes and members up to a nozzle discharge surface.

The method for controlling the temperature is not particularly restricted, and it is preferable to control heating according to the ink composition flow rate and the environmental temperature by providing, for example, a plurality of temperature sensors for each pipe section. Furthermore, a head heating unit is preferably thermally shielded or insulated so that the device main body is not influenced by the external temperature. In order to reduce the printer warm-up time required for heating, or in order to reduce the thermal energy loss, it is preferable for there to be thermal insulation from other sections and also for the heat capacity of the entire heating unit to be reduced.

Conditions for irradiation with radiation are now explained. A basic irradiation method is disclosed in JP-A-60-132767. Specifically, a light source is provided on either side of a head unit, and the head and the light sources are made to scan by a shuttle system. Irradiation is carried out after a certain time has elapsed from when the ink has landed. Curing is completed using another light source that is not driven. WO99/54415 discloses, as an irradiation method, a method employing an optical fiber and a method in which a collimated light source is incident on a mirror surface provided on a head unit side face, and a recording part is irradiated with UV light. In the present invention, these irradiation methods may be used.

The radiation with which irradiation is carried out is not particularly restricted as long as energy that can decompose the compounds (b) and (c) can be provided, and it is actinic radiation such as X rays, ultraviolet rays, visible light, or an electron beam, but it is particularly preferable to use ultraviolet rays at a wavelength of 230 nm to 420 nm. As a light source, a mercury lamp with or without an electrode, a metal halide lamp, a xenon lamp, or a light-emitting diode having the same wavelength region (UV-LED) may be used. When the UV-LED is used, it is used as a multi array in which a plurality thereof are arranged along a straight line or in three dimensions according to the energy power of a light-emitting chip.

Furthermore, in the present invention, it is preferable to heat the ink composition to a constant temperature and set the time from landing to irradiation at 0.01 to 0.5 sec., and preferably 0.01 to 0.3 sec., and it is yet more preferable to apply radiation after 0.01 to 0.15 sec. By controlling the time from landing to irradiation in this way so that it is very short, it becomes possible to prevent the landed ink from spreading before curing. Furthermore, since the ink composition can be irradiated before penetrating deep into a porous recording medium where a light source cannot reach, it is possible to suppress the amount of unreacted monomer remaining, and as a result the odor can be reduced. By using the above-mentioned inkjet recording method and the ink composition of the present invention, a large synergistic effect can be exhibited. In particular, by using an ink composition having an ink viscosity at 25°C of 35 to 500 mP·s, a large effect can be obtained. By employing such a recording method, it is possible to maintain a uniform dot diameter for landed ink even for various types of recording media having different surface wettability, thereby improving the image quality. In order to obtain a color image, it is preferable to superimpose colors in order from those with a low lightness. If an ink having a low lightness is superimposed over another, it is difficult for radiation to reach the lower ink, the curing sensitivity is inhibited, the amount of residual monomer increases, the odor occurs, and the adhesion easily deteriorates. Furthermore, although it is possible to discharge all colors and then irradiate them at the same time, it is preferable to irradiate one color at a time from the viewpoint of promoting curing.

The inkjet recording device used in the present invention is not particularly restricted, and a commercial inkjet recording device may be used. That is, in the present invention, recording on a recording medium may be carried out using a commercial inkjet recording device.

### Recording medium

The recording medium to which the ink composition of the present invention can be applied is not particularly limited, and papers such as ordinary uncoated paper and coated paper, various types of non-absorbent resin material used as so-called flexible packaging, and resin films formed by molding the material into a film may be used, and examples of various types of plastic films include PET film, OPS film, OPP film, ONy film, PVC film, PE film, and TAC film. Other examples of plastic that can be used as a recording medium material include polycarbonate, acrylic resin, ABS, polyacetal, PVA, and rubber. Furthermore, metal and glass may be used as a recording medium.

Since the ink composition of the present invention has little thermal shrinkage during curing and has excellent adhesion to a substrate (recording medium), even for a film for which curling and deformation of the film easily occur due to ink curing shrinkage or heat generation during a curing reaction such as, for example, PET film, OPS film, OPP film, ONy film, or PVC film, which are thermally shrinkable, a high precision image can be formed advantageously.

### Lithographic printing plate

Suitable examples of applications of the ink composition of the present invention include application to a lithographic printing plate.

A process for producing a lithographic printing plate of the present invention comprises a step (a) of discharging the ink composition of the present invention onto a hydrophilic support, and a step (b) of irradiating the discharged ink composition with radiation so as to cure the ink composition, thus forming a hydrophobic image on the hydrophilic support by curing the ink composition.

Furthermore, the lithographic printing plate of the present invention is a lithographic printing plate produced by the above-mentioned process for producing a lithographic printing plate.

By discharging the ink composition of the present invention onto a hydrophilic support using an inkjet recording device, etc. and then irradiating the ink with radiation so as to cure it to form a hydrophobic image, a hydrophobic ink-receiving region is formed imagewise on the surface of the hydrophilic support. By supplying an ink and a water-based component, the water-based component is retained by a region exposed on the hydrophilic support, the ink is retained on the hydrophobic image, and a printing step can be carried out in this state.

Since the ink composition of the present invention exhibits excellent curing properties on exposure to radiation, the lithographic printing plate of the present invention employing the above has an image area having excellent plate life. Furthermore, by using an inkjet recording device for forming an image area, a high precision lithographic printing plate image area can be formed directly according to digital data.

The ink composition used in production of a lithographic printing plate may employ the above-mentioned ink composition of the present invention as it is.

### Support

A support that is preferably used when preparing a lithographic printing plate of the present invention is now explained.

The support used in the lithographic printing plate of the present invention is not particularly limited, and a dimensionally stable sheet-form support may be used. When a material forming the support has a hydrophilic surface, it may be used as it is, or the surface of the sheet-form material forming the support may be subjected to a hydrophilization treatment.

Examples of materials forming the support include paper, paper laminated with a plastic (e.g. polyethylene, polypropylene, polystyrene, etc.), a metal sheet (e.g. aluminum, zinc, copper, etc.), a plastic film (e.g. cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, etc.), and paper or plastic film on which the above-mentioned metal is laminated or vapor-deposited. Preferred examples of the support include a polyester film and aluminum sheet. Among these, aluminum sheet is particularly preferable since the dimensional stability is good and it is relatively inexpensive.

The aluminum sheet is a pure aluminum sheet, an alloy sheet containing aluminum as a main component and a small amount of a different element, or a thin film of aluminum or an aluminum alloy laminated with a plastic. Examples of the different element contained in the aluminum alloy include silicon, iron, manganese, copper, magnesium, chromium, zinc, bismuth, nickel, and titanium. The content of the different element in the alloy is preferably equal to or less than 10 wt %. In the present invention, a pure aluminum sheet is preferable, but since it is difficult to produce completely pure aluminum because of the refining technique, a trace amount of a different element may be contained. The composition of the aluminum sheet is not specified, and a known generally used material may be utilized as appropriate.

The support preferably has a thickness of 0.1 to 0.6 mm, and more preferably 0.15 to 0.4 mm.

Prior to the aluminum sheet being used, it is preferably subjected to a surface treatment such as a surface roughening treatment or an anodizing treatment. Surface treatment makes it easy to improve the hydrophilicity and ensure that there is good adhesion between an image recording layer and the support. Prior to the aluminum sheet being subjected to the surface roughening treatment, it may be subjected as desired to a degreasing treatment using a surfactant, an organic solvent, an aqueous alkaline solution, etc. in order to remove rolling oil on the surface.

The surface roughening treatment for the aluminum sheet surface may be carried out by various types of methods, and examples thereof include a mechanical surface roughening treatment, an electrochemical surface roughening treatment (a surface roughening treatment involving dissolving the surface electrochemically), and a chemical surface roughening treatment (a surface roughening treatment involving selectively dissolving the surface chemically).

As a method for the mechanical surface roughening treatment, a known method such as a ball grinding method, a brush grinding method, a blast grinding method, or a buff grinding method may be used. It is also possible to use a transfer method in which an irregular shape is transferred using a roller provided with irregularities in an aluminum rolling stage.

As a method for the electrochemical surface roughening treatment, for example, a method in which alternating current or direct current is applied in an electrolyte solution containing an acid such as hydrochloric acid or nitric acid can be cited. It is also possible to employ a method as described in JP-A-54-63902 in which a mixed acid is used.

The aluminum sheet subjected to a surface roughening treatment is subjected as necessary to an alkali etching treatment using an aqueous solution of potassium hydroxide, sodium hydroxide, etc.; furthermore, after neutralization, it may be subjected to an anodizing treatment as desired in order to improve the abrasion resistance.

As an electrolyte that may be used for the anodizing treatment of the aluminum sheet, various types of electrolytes that form a porous oxide film may be used. In general, sulfuric acid, hydrochloric acid, oxalic acid, chromic acid, or a mixed acid thereof may be used. The concentration of the electrolyte may be determined as appropriate according to the type of electrolyte.

Conditions for the anodizing treatment depend on the type of electrolyte used and cannot be specified, but in general the electrolyte solution concentration is 1 to 80 wt %, the solution temperature is 5°C to 70°C, the current density is 5 to 60 A/dm², the voltage is 1 to 100V, and the electrolysis time is 10 sec. to 5 min. The amount of anodized film formed is preferably 1.0 to 5.0 g/m², and more preferably 1.5 to 4.0 g/m². It is preferable for it to be in this range since good plate life and good scratch resistance of a non-image area of a lithographic printing plate can be obtained.

As the support that can be used in the present invention, a substrate that has been subjected to the above-mentioned surface treatment and has an anodized film may be used as it is, but in order to further improve the adhesion to an upper layer, and the hydrophilicity, the contamination resistance, the thermal insulation, etc., the substrate may appropriately be subjected as necessary to a treatment for enlarging micropores of the anodized film, a sealing treatment, or a surface hydrophilization treatment involving immersion in an aqueous solution containing a hydrophilic compound, which are described in JP-A-2001-253181 or JP-A-2001-322365. These enlarging and sealing treatments are not limited to those described therein, and any conventionally known methods may be employed.

### Sealing treatment

The sealing treatment may be vapor sealing, a treatment with an aqueous solution containing an inorganic fluorine compound such as a single treatment with fluorozirconic acid or a treatment with sodium fluoride, vapor sealing with added lithium chloride, or a sealing treatment with hot water.

Among these, the sealing treatment with an aqueous solution containing an inorganic fluorine compound, the sealing treatment with vapor, and the sealing treatment with hot water are preferable.

### Hydrophilization treatment

A hydrophilization treatment used in the present invention is an alkali metal silicate method as described in US Pat. Nos. 2,714,066, 3,181,461, 3,280,734, and 3,902,734. In this method, a support is immersed in an aqueous solution of sodium silicate, etc. or subjected to electrolysis. Other than the above, there are a method described in JP-B-36-22063 in which the support is treated with potassium fluorozirconate, and a method as described in US Pat. Nos. 3,276,868, 4,153,461, and 4,689,272 in which the support is treated with polyvinyl phosphonate.

The support of the present invention preferably has a center line average roughness of 0.10 to 1.2 µm. In this range, good adhesion to an image recording layer, good plate life, and good contamination resistance can be obtained.

In accordance with the present invention, it is possible to provide an inkjet recording ink composition that cures with high sensitivity when exposed to radiation, can form a high quality image, has excellent adhesion to a recording medium, and has good storage stability, and an inkjet recording method employing the ink composition.

Furthermore, a printed material obtained using the ink composition having excellent storage stability and capable of curing with high sensitivity when exposed to ultraviolet rays has high image quality, excellent strength for an image area, and has suppressed degradation of image quality and deterioration of a substrate over time. Similarly, in accordance with use of the ink composition of the present invention, there is exhibited the effect that a lithographic printing plate having high plate life and high image quality can be produced based on digital data.

### EXAMPLES

The present invention is explained more specifically below by reference to Examples, but the present invention should not be construed as being limited to the modes of these Examples.

### Example 1

### Preparation of pigment dispersion

Pigment dispersions 1 of each of yellow, magenta, cyan, and black were prepared according to the method below. Dispersion conditions were appropriately adjusted so that the average particle size of the pigment particles in each case was in the range of 0.2 to 0.3 µm using a known dispersing device, and subsequently they were filtered using a filter while heating.

### Yellow pigment dispersion 1

| | |
|---|---|
| CI Pigment Yellow 12 | 10 parts by weight |
| Polymeric dispersant (Solsperse series, manufactured by Zeneca) | 5 parts by weight |
| Stearyl acrylate | 85 parts by weight |

### Magenta pigment dispersion 1

| | |
|---|---|
| CI Pigment Red 57:1 | 15 parts by weight |
| Polymeric dispersant (Solsperse series, manufactured by Zeneca) | 5 parts by weight |
| Stearyl acrylate | 80 parts by weight |

### Cyan pigment dispersion 1

| | |
|---|---|
| CI Pigment Blue 15:3 | 20 parts by weight |
| Polymeric dispersant (Solsperse series, manufactured by Zeneca) | 5 parts by weight |
| Stearyl acrylate | 75 parts by weight |

### Black pigment dispersion 1

| | |
|---|---|
| CI Pigment Black 7 | 20 parts by weight |
| Polymeric dispersant (Solsperse series, manufactured by Zeneca) | 5 parts by weight |
| Stearyl acrylate | 75 parts by weight |

### Preparation of ink

Color inks were prepared using the corresponding dispersions 1 prepared above in accordance with the method described below.

### Yellow ink 1

| | |
|---|---|
| Cationically polymerizable compound (a) | |
| Celloxide 2021 (an epoxy compound, manufactured by Daicel-UCB Co., Ltd.) | 35 parts by weight |
| OXT-221 (an oxetane compound, manufactured by Toagosei Co., Ltd.) | 55 parts by weight |
| Photo-acid generator (b) | |
| Compound example (b-27) / (b-32) = 1/2 | 5 parts by weight |
| Photo-base generator (c) | |
| Compound example (II-8) | 1.5 parts by weight |
| Colorant (the above pigment dispersion) | |
| Yellow pigment dispersion 1 | 5 parts by weight |

### Magenta ink 1

| | |
|---|---|
| Cationically polymerizable compound (a) | |
| Celloxide 2021 (epoxy compound, manufactured by Daicel-UCB Co., Ltd.) | 35 parts by weight |
| OXT-221 (oxetane compound, manufactured by Toagosei Co., Ltd.) | 55 parts by weight |
| Photo-acid generator (b) | |
| Compound example (b-3) | 5 parts by weight |
| Photo-base generator (c) | |
| Compound example (III-7) | 1.5 parts by weight |
| Colorant (the above pigment dispersion) | |
| Magenta pigment dispersion 1 | 5 parts by weight |

### Cyan ink 1

| | |
|---|---|
| Cationically polymerizable compound (a) | |
| Celloxide 2021 (epoxy compound, manufactured by Daicel-UCB Co., Ltd.) | 35 parts by weight |
| OXT-221 (oxetane compound, manufactured by Toagosei Co., Ltd.) | 55 parts by weight |
| Photo-acid generator (b) | |
| Compound example (b-75) | 5 parts by weight |
| Photo-base generator (c) | |
| Compound example (VII-4) | 1.5 parts by weight |
| Colorant (the pigment dispersion above) | |
| Cyan pigment dispersion 1 | 5 parts by weight |

### Black ink 1

| | |
|---|---|
| Cationically polymerizable compound (a) | |
| Celloxide 2021 (epoxy compound, manufactured by Daicel-UCB Co., Ltd.) | 35 parts by weight |
| OXT-221 (oxetane compound, manufactured by Toagosei Co., Ltd.) | 55 parts by weight |
| Photo-acid generator (b) | |
| Compound example (b-10) | 5 parts by weight |
| Photo-base generator (c) | |
| Compound example (IX-7) | 1.5 parts by weight |
| 9,10-Dimethoxyanthracene | 0.5 parts by weight |
| Colorant (the pigment dispersion above) | |
| Black pigment dispersion 1 | 5 parts by weight |

### Inkjet image recording (evaluation of multicolor image)

Subsequently, recording was carried out on a recording medium using a commercial inkjet recording device having a piezo system inkjet nozzle. The ink supply system comprised a main tank, a supply pipe, an ink supply tank immediately before an inkjet head, a filter, and a piezo system inkjet head, and a section from the ink supply tank to the inkjet head was thermally insulated and heated. Temperature sensors were provided on the ink supply tank and in the vicinity of the nozzle of the inkjet head, and the temperature was controlled so that the nozzle section was always at 70°C ±2°C. The piezo system inkjet head was driven so as to discharge a multisize dot of 8 to 30 pL at a resolution of 720 x 720 dpi. The exposure system, the main scanning speed, and the discharge frequency were adjusted so that, after landing, UV-A light was focused to give an exposure area illumination intensity of 100 mW/cm², and irradiation started 0.1 sec. after the ink landed on the recording medium. Furthermore, the exposure time was made variable, and exposure energy was applied. Here, dpi referred to in the present invention denotes the number of dots per 2.54 cm.

The inks of each color prepared above were discharged at an environmental temperature of 25°C in the order black → cyan → magenta → yellow, and irradiation with ultraviolet rays was carried out after each color was discharged. As an energy level that could completely cure the inks so that tackiness disappeared when touched by hand, the total exposure energy per color was 300 mJ/cm² for all the colors. As recording media, a grained aluminum support, a transparent biaxially stretched polypropylene film whose surface had been treated so as to impart printability, a soft vinyl chloride sheet, a cast coat paper, and a commercial recycled paper were used, each color image was recorded, and an image having high resolution without dot spreading was obtained in all cases. Furthermore, for high quality paper, the ink did not penetrate to the reverse side, the ink was sufficiently cured, and there was hardly any odor due to unreacted monomer. Moreover, the ink recorded on the film had sufficient flexibility, the ink did not crack when bent, and there was no problem in an adhesion test involving peeling with cellophane tape.

### Examples 2 to 13, Comparative Examples 1 and 2

### Preparation of ink

### Magenta inks 2 to 15

| | |
|---|---|
| Cationically polymerizable compound (a) 1 | 90 parts by weight |
| Photo-acid generator (b) | 5 parts by weight |
| Photo-base generator (c) | 1.5 parts by weight |
| Specified base component as necessary | 0.03 parts by weight |
| Sensitizer as necessary | 0.5 parts by weight |
| Colorant (the magenta pigment dispersion 1 above) | 5 parts by weight |

The compounds for each component used in Examples 2 to 13 (magenta inks 2 to 13) and Comparative Examples 1 and 2 (magenta inks 14 and 15) are shown in Table 1 below.

Details of the cationically polymerizable compound, organic acidic component, and sensitizer described in Table 1 are as follows.
Cationically polymerizable compound (1): Celloxide 2021 (epoxy, manufactured by Daicel-UCB Co., Ltd.) / OXT-221 (oxetane, manufactured by Toagosei Co., Ltd.) = 35/55 mixture
Cationically polymerizable compound (2): Celloxide 3000 (epoxy, manufactured by Daicel-UCB Co., Ltd.) / OXT-211 (oxetane, manufactured by Toagosei Co., Ltd.) = 50/40 mixture
Cationically polymerizable compound (3): bisphenol A - diglycidyl ether / OXT-221 (oxetane, manufactured by Toagosei Co., Ltd.) = 40/50 mixture
Cationically polymerizable compound (4): Celloxide 2021 (epoxy, manufactured by Daicel-UCB Co., Ltd.) / OXT-101 (oxetane, manufactured by Toagosei Co., Ltd.) = 55/35 mixture
Sensitizer (5): 9,10-dimethoxyanthracene
Sensitizer (6): pyrene

In Comparative Example 2, as the specified base component, 0.03 parts by weight of octylamine (II) was added.

For the ink compositions prepared in the above-mentioned Examples and Comparative Examples, the ink viscosity at the discharge temperature was in the range of 7 to 20 mPa·s.

### Inkjet image recording (single color image evaluation)

A magenta image was printed by the same method as described in Example 1 using the magenta inks 2 to 15 prepared above.

### 1. Inkjet image evaluation

Subsequently, with regard to each of images thus formed, the sensitivity required for curing, penetration into commercial recycled paper, ink spread on a grained aluminum support, adhesion, plate life, and storage stability were evaluated in accordance with the methods described below.

### 2. Curing sensitivity measurement

The exposure energy intensity (mJ/cm²) when a feeling of tackiness disappeared on the image surface after irradiation with ultraviolet rays was defined as the curing sensitivity. The smaller the value, the higher the sensitivity.

### 3. Storage stability evaluation

After storing the prepared ink at 75%RH and 60°C for 3 days, the ink viscosity at the discharge temperature was measured, and an increase in the ink viscosity was expressed as a viscosity ratio (after storage / before storage). When the viscosity was unchanged and the ratio was close to 1.0, the storage stability was good, and if the ratio exceeded 1.5, clogging might undesirably be caused during discharge.

### 4. Evaluation of durability of inkjet image recording

The ink thus prepared was discharged onto a grained aluminum support and a surface-treated transparent biaxially stretched polypropylene film, and cured by irradiation with ultraviolet rays, and an image thus obtained was allowed to stand under a fluorescent lamp (300 Lux) / room temperature for 1 week, then stored at 75%RH / 60°C for 3 days, and subjected to measurement of adhesion. The durability after image recording was evaluated by the degree of degradation of adhesion.
Good: no change over time in the adhesion was observed after image recording
Fair: slight image peeling was observed.
Poor: degradation in adhesion was obvious due to the image peeling.

### 5. Evaluation of penetration into commercial recycled paper

Penetration was evaluated in accordance with the criteria below with respect to an image printed on commercial recycled paper.
Good: little penetration, no odor due to residual monomer.
Fair: slight penetration, slight odor due to residual monomer.
Poor: ink obviously penetrated to the reverse side, strong odor due to residual monomer.

### 6. Evaluation of ink spread on grained aluminum support

With respect to an image printed on a grained aluminum support, ink spread was evaluated in accordance with the criteria below.
Good: no spread between adjacent dots.
Fair: dots slightly spread.
Poor: dots spread and image was obviously blurred.

### 7. Evaluation of adhesion to grained aluminum support

With regard to the printed images formed above, a completely undamaged sample and a sample whose printed surface was crosshatched with 11 cuts in both lengthwise and widthwise directions at intervals of 1 mm in accordance with JIS K 5400 to give 100 1 mm squares were prepared, cellophane tape was affixed to the surface of each sample and peeled off quickly at an angle of 90 degrees, and the condition of the remaining printed image that had not been peeled off was evaluated in accordance with the criteria below.
Good: printed image was not peeled off at all in the crosshatch test.
Fair: the ink was slightly peeled off in the crosshatch test, but unless the ink surface was damaged little was peeled off.
Poor: easily peeled off by cellophane tape under both conditions.

### Evaluation as lithographic printing_plate

An image was formed on the grained aluminum support prepared above by printing using the ink composition of the present invention. This was evaluated as a lithographic printing plate.

### a. Evaluation of image

The lithographic printing plate prepared using the ink composition of the present invention was mounted on a Heidel KOR-D machine and printing was carried out by supplying an ink (sheet-feed VALUES-G magenta (manufactured by Dainippon Ink and Chemicals, Inc.) and dampening solution (Ecolity 2 (manufactured by Fuji Photo Film Co., Ltd.). After printing 100 sheets, the printed material was visually evaluated in accordance with the criteria below.
Good: image obtained had no white spots in the image area, and no contamination on the non-image area.
Fair: a few white spots were observed in the image area and/or slight contamination was observed in the non-image area.
Poor: white spots in the image area and/or contamination in the non-image area were observed at a level that caused problems in actual use.

### b. Evaluation of plate life

Printing was continued, and the number of prints completed was compared as an index for the plate life (the number obtained for Comparative Example 1 was defined as 100). The larger the number, the longer the plate life, which is preferable.

These evaluation results are given in Table 1.

**Table 1**

| Example | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Comp Ex. 1 | Comp Ex. 2 |
|---|---|---|---|---|---|---|---|---|---|---|---|---|---|---|
| Cationically polymerizable compound (a) | (1) | (1) | (1) | (2) | (2) | (2) | (3) | (3) | (3) | (4) | (4) | (4) | (4) | (4) |
| Photo-acid generator (b) | b-3 | b-5 | b-29 | b-40 | b-59 | b-74 | b-12 | b-24 | b-80 | b-82 | b-39 | b-3 | b-3 | b-3 |
| Photo-base generator (c) | II-3 | I-9 | III-5 | II-10 | IV-6 | V-10 | II-6 | VII-7 | VIII-5 | IV-9 | VI-4 | IX-4 | None | None |
| Specified base component | None | None | X-5 | None | XII-12 | None | XI-3 | None | None | XIII-5 | None | None | None | (II)* |
| Sensitizer | None | None | (5) | None | (6) | None | None | (5) | None | (6) | None | None | None | None |
| Penetration into recycled paper | Good | Good | Good | Good | Good | Fair | Good | Good | Good | Good | Fair | Good | Fair | Fair |
| Spread on aluminum support | Good | Fair | Good | Good | Good | Good | Good | Fair | Good | Good | Good | Good | Fair | Fair |
| Adhesion to aluminum support | Good | Good | Good | Good | Good | Good | Good | Good | Good | Good | Good | Good | Good | Good |
| Change over time of image adhesion | Good | Good | Good | Good | Good | Good | Good | Good | Good | Good | Good | Good | Poor | Fair |
| Curing sensitivity (mJ/cm²) | 280 | 300 | 320 | 300 | 310 | 320 | 350 | 260 | 300 | 300 | 350 | 320 | 400 | 500 |
| Ink storage stability | 1.2 | 1.2 | 1.1 | 1.2 | 1.1 | 1.2 | 1.1 | 1.2 | 1.2 | 1.1 | 1.2 | 1.2 | 1.8 | 1.3 |
| Image evaluation of lithographic printing plate | Good | Good | Good | Good | Good | Good | Good | Good | Good | Good | Good | Good | Good | Good |
| Plate life | 120 | 130 | 130 | 110 | 120 | 120 | 130 | 120 | 110 | 120 | 110 | 120 | 100 | 90 |

| | | | | | | | | | | | | | | |
|---|---|---|---|---|---|---|---|---|---|---|---|---|---|---|
| *: in Comp. Ex. 2, as a specified base component, 0.03 parts by weight of octylamine (II) was added. Cationically polymerizable compound (1): Celloxide 2021 (epoxy, manufactured by Daicel-UCB Co., Ltd.) / OXT-221 (oxetane, manufactured by Toagosei Co., Ltd.) = 35/55 mixture Cationically polymerizable compound (2): Celloxide 3000 (epoxy, manufactured by Daicel-UCB Co., Ltd.) / OXT-211 (oxetane, manufactured by Toagosei Co., Ltd) = 50/40 mixture Cationically polymerizable compound (3): Bisphenol A - diglycidyl ether / OXT-221 (oxetane, manufactured by Toagosei Co., Ltd.) = 40/50 mixture Cationically polymerizable compound (4): Celloxide 2021 (epoxy, manufactured by Daicel-UCB Co., Ltd.) / OXT-101 (oxetane, manufactured by Toagosei Co., Ltd.) = 55/35 mixture Sensitizer (5): 9,10-dimethoxyanthracene Sensitizer (6): pyrene | | | | | | | | | | | | | | |

It can be seen from Table 1 that the ink composition of the present invention cured with high sensitivity when exposed to radiation, formed a high quality image in terms of image formation properties on paper, and had good storage stability. In this way, in the present invention, curing sensitivity, suppression of spreading on a non-penetrable support, and ink storage stability are achieved at the same time.

It can also be seen that the ink composition of Comparative Example 1, which did not contain the photo-base generator (c), had a problem with storage stability, and the penetration properties into recycled paper, spreading on an aluminum support, and curing sensitivity were all slightly poorer. It was also observed that, in Comparative Example 2, in which octylamine was used instead of the photo-base generator (c) used in the Examples, octylamine being a relatively basic compound that does not have the function of generating a compound having a basic nitrogen atom when exposed to radiation, although the storage stability was improved, the curing sensitivity was greatly degraded.

Furthermore, it was found that a lithographic printing plate on which an image was formed using the ink composition of the present invention could form a high quality image, and had good plate life.

## Claims

1. An ink composition comprising:
a cationically polymerizable compound (a);
a compound (b) that generates an acid when exposed to radiation; and
a compound (c) that generates a compound having a basic nitrogen atom when exposed to radiation
selected from the group consisting of ultraviolet rays, visible light and an electron beam,
wherein the compound (c) that generates a compound having a basic nitrogen atom when exposed to radiation is at least one selected from the group consisting of compounds represented by Formulae (I) to (IX) below; 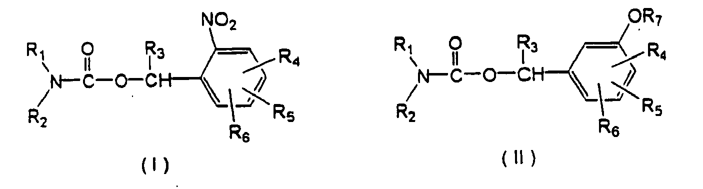 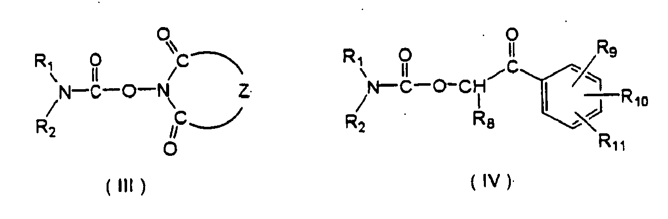 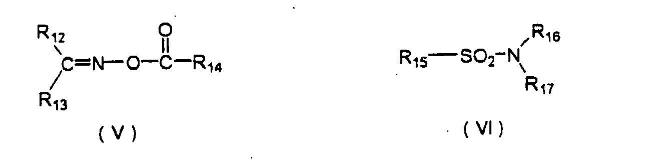 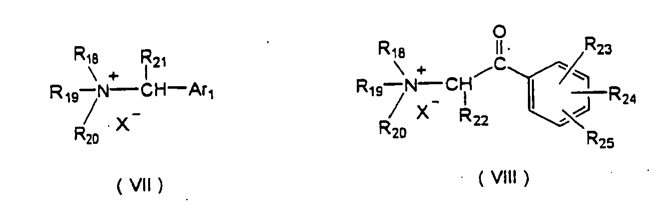 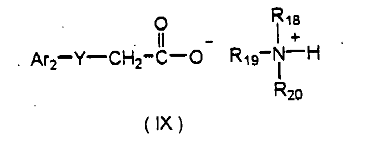 (in Formulae (I) to (IX), R₁, R₂, R₁₆, R₁₇, R₁₈, R₁₉, and R₂₀ independently denote a hydrogen atom, an alkyl group, a cycloalkyl group, an aralkyl group, or an aryl group, R₃, R₈, R₂₁, and R₂₂ independently denote a hydrogen atom, an alkyl group, or an aryl group, R₄, R₅, and R₆ independently denote a hydrogen atom, a halogen atom, an alkyl group, a cycloalkyl group, an aralkyl group, an aryl group, an -NO₂ group, or an -OR₇ group, R₇ denotes an alkyl group, R₉, R₁₀, R₁₁, R₂₃, R₂₄, and R₂₅ independently denote a hydrogen atom, a halogen atom, an alkyl group, a cycloalkyl group, an aralkyl group, or an -OR₇ group, R₁₂ and R₁₃ independently denote an alkyl group, a cycloalkyl group, an aralkyl group, an aryl group, an acyl group, or a -CN group, R₁₄ denotes an alkyl group, a cycloalkyl group, an aralkyl group, an aryl group, or an -N(R₁)(R₂) group, R₁₅ denotes an alkyl group, a cycloalkyl group, an aralkyl group, or an aryl group, Ar₁ and Ar₂ denote aryl groups, Z denotes an atomic group that, together with an imide group in Formula (III), forms a monocyclic or polycyclic aliphatic ring, aromatic ring, or hetero ring, Y denotes an NH group, a sulfur atom, or an oxygen atom, X⁻ denotes a monovalent or polyvalent anion and, furthermore, R₁ and R₂ in Formulae (I) to (IV), two of R₄ to R₆ in Formulae (I) and (II), two of R₉ to R₁₁ in Formula (IV), R₁₂ and R₁₃ in Formula (V), R₁₆ and R₁₇ in Formula (VI), two of R₁₈ to R₂₀ in Formulae (VII) to (IX), Ar₁ and R₂₁ in Formula (VII), and two of R₂₃ to R₂₅ in Formula (VIII) may be bonded together to form an aliphatic ring, an aromatic ring, or a hetero ring).

2. The ink composition according to Claim 1, wherein the efficiency of the compound (b) in generating an acid when exposed to radiation is higher than the efficiency of the compound (c) in generating a compound having a basic nitrogen atom when exposed to radiation.

3. The ink composition according to Claim 1 or Claim 2, wherein it further comprises a colorant (d).

4. The ink composition according to Claim 3, wherein the colorant (d) is a pigment or an oil-soluble dye.

5. The ink composition according to any one of Claim 1 to Claim 4, wherein it is for inkjet use.

6. An inkjet recording method comprising:
a step (a) of discharging an ink composition onto a recording medium; and
a step (b) of irradiating the discharged ink composition with radiation so as to cure the ink composition,
the ink composition being the ink composition according to any one of Claim 1 to Claim 5.

7. A printed material recorded by the inkjet recording method according to Claim 6.

8. A process for producing a lithographic printing plate, the process comprising:
a step (a) of discharging the ink composition according to any one of Claim 1 to Claim 5 onto a hydrophilic support; and
a step (b) of irradiating the discharged ink composition with radiation so as to cure the ink composition, thus forming a hydrophobic image on the hydrophilic support by curing the ink composition.

9. A lithographic printing plate produce by the lithographic printing plate production process according to Claim 8.

## Patentansprüche

1. Tintenzusammensetzung umfassend:
eine kationisch polymerisierbare Verbindung (a);
eine Verbindung (b), die eine Säure bei Bestrahlung erzeugt; und
eine Verbindung (c), die eine Verbindung mit einem basischen Stickstoffatom bei Bestrahlung erzeugt,
die aus der Gruppe ausgewählt ist, die aus UV-Strahlen, sichtbarem Licht und einem Elektronenstrahl besteht,
worin die Verbindung (c), die eine Verbindung mit einem basischen Stickstoffatom bei Bestrahlung erzeugt, mindestens eine ist, die aus der Gruppe ausgewählt ist, die aus Verbindungen der nachstehenden Formeln (I) bis (IX) besteht: 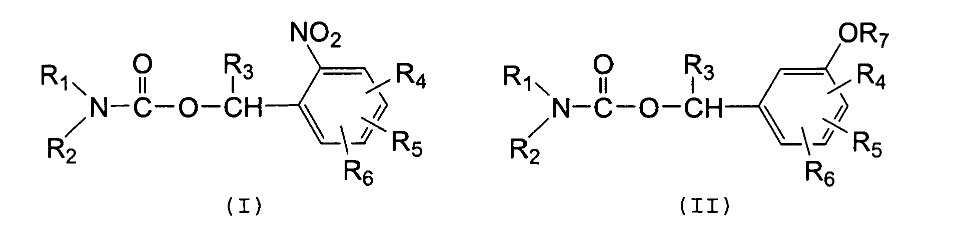 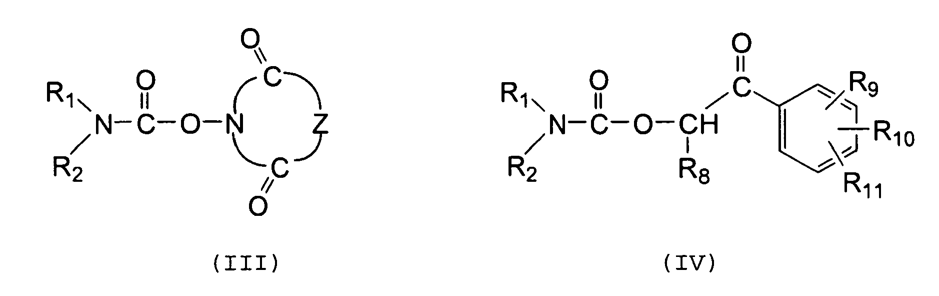 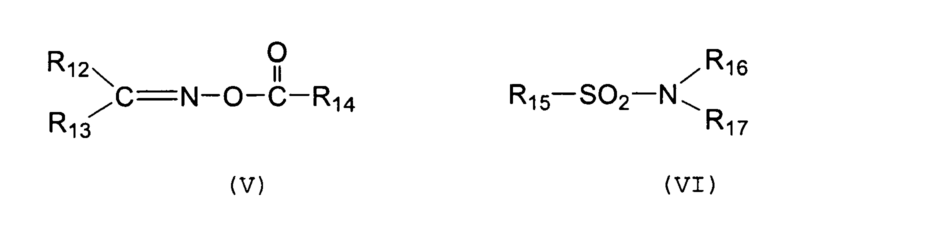 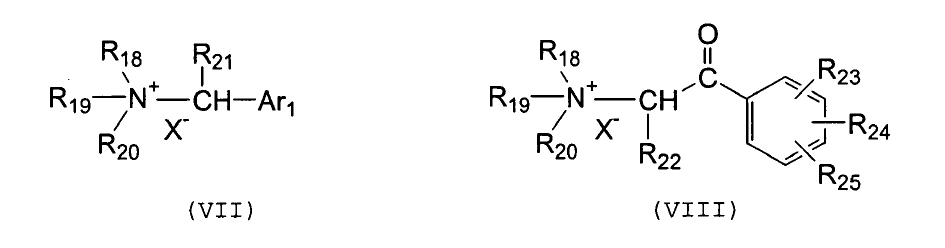 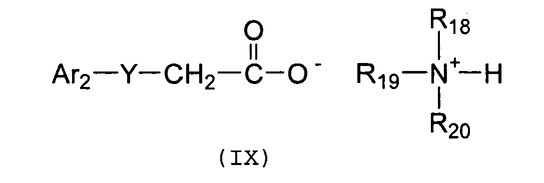 (In Formeln(I) bis (IX) bezeichnen R₁, R₂, R₁₆, R₁₇, R₁₈, R₁₉ und R₂₀ unabhängig ein Wasserstoffatom, eine Alkylgruppe, eine Cycloalkylgruppe, eine Aralkylgruppe oder eine Arylgruppe, R₃, R₈, R₂₁ und R₂₂ bezeichnen unabhängig ein Wasserstoffatom, eine Alkylgruppe oder eine Arylgruppe, R₄, R₅ und R₆ bezeichnen unabhängig ein Wasserstoffatom, ein Halogenatom, eine Alkylgruppe, eine Cycloalkylgruppe, eine Aralkylgruppe, eine Arylgruppe, eine -NO₂-Gruppe oder eine -OR₇-Gruppe, R₇ bezeichnet eine Alkylgruppe, R₉, R₁₀, R₁₁, R₂₃, R₂₄ und R₂₅ bezeichnen unabhängig ein Wasserstoffatom, ein Halogenatom, eine Alkylgruppe, eine Cycloalkylgruppe, eine Aralkylgruppe oder eine -OR₇-Gruppe, R₁₂ und R₁₃ bezeichnen unabhängig eine Alkylgruppe, eine Cycloalkylgruppe, eine Aralkylgruppe, eine Arylgruppe, eine Acylgruppe oder eine -CN-Gruppe, R₁₄ bezeichnet eine Alkylgruppe, eine Cycloalkylgruppe, eine Aralkylgruppe, eine Arylgruppe oder eine -N(R₁)(R₂)-Gruppe, R₁₅ bezeichnet eine Alkylgruppe, eine Cycloalkylgruppe, eine Aralkylgruppe oder eine Arylgruppe, Ar₁ und Ar₂ bezeichnen Arylgruppen, Z bezeichnet eine Atomgruppe, die, zusammen mit einer Imidgruppe der Formel (III), einen monocyclischen oder polycyclischen aliphatischen Ring, aromatischen Ring oder Heteroring bildet, Y bezeichnet eine NH-Gruppe, ein Schwefelatom oder ein Sauerstoffatom, X- bezeichnet ein einwertiges oder mehrwertiges Anion und, darüber hinaus, können R₁ und R₂ in Formeln (I) bis (IV)zwei aus R₄ bis R₆ in Formeln (I) und (II), zwei aus R₉ bis R₁₁ in Formel (IV), R₁₂ und R₁₃ in Formel (V), R₁₆ und R₁₇ in Formel (VI), zwei aus R₁₈ bis R₂₀ in Formeln (VII) bis (IX) Ar₁ und R₂₁ in Formel (VII) und zwei aus R₂₃ bis R₂₅ in Formel (VIII) aneinander unter Bildung eines aliphatischen Rings, eines aromatischen Rings oder eines Heterorings gebunden sein.)

2. Tintenzusammensetzung gemäß Anspruch 1, worin die Effizienz der Verbindung (b) beim Erzeugen einer Säure unter Bestrahlung höher ist als die Effizienz der Verbindung (c) beim Erzeugen einer Verbindung mit einem basischen Stickstoffatom unter Bestrahlung.

3. Tintenzusammensetzung gemäß Anspruch 1 oder 2, worin diese ferner einen Farbstoff (d) umfaßt.

4. Tintenzusammensetzung gemäß Anspruch 3, worin der Farbstoff (d) ein Pigment oder ein öllöslicher Farbstoff ist.

5. Tintenzusammensetzung gemäß einem der Ansprüche 1 bis 4, worin diese zur Tintenstrahlverwendung ist.

6. Tintenstrahl-Aufzeichnungsverfahren umfassend:
einen Schritt (a) zum Entladen einer Tintenzusammensetzung auf ein Aufzeichnungsmedium und
einen Schritt (b) zum Bestrahlen der entladenen Tintenzusammensetzung durch Strahlung, um so die Tintenzusammensetzung zu härten,
wobei die Tintenzusammensetzung die Tintenzusammensetzung gemäß einem der Ansprüche 1 bis 5 ist.

7. Bedrucktes Material, das durch das Tintenstrahl-Aufzeichnungsverfahren gemäß Anspruch 6 aufgezeichnet wurde.

8. Verfahren zur Herstellung einer lithographischen Druckplatte, wobei das Verfahren umfaßt:
einen Schritt (a) zum Entladen der Tintenzusammensetzung gemäß einem der Ansprüche 1 bis 5 auf einen hydrophilen Träger und
einen Schritt (b) zum Bestrahlen der entladenen Tintenzusammensetzung durch Strahlung, um so die Tintenzusammensetzung zu härten,
wobei so ein hydrophobes Bild auf dem hydrophilen Träger durch Härten der Tintenzusammensetzung gebildet wird.

9. Flachdruckplatte, die durch das Flachdruckplatten-Herstellungsverfahren gemäß Anspruch 8 hergestellt wurde.

## Revendications

1. Composition d'encre comprenant :
un composé (a) pouvant être polymérisé de manière cationique ;
un composé (b) qui produit un acide quand il est exposé à un rayonnement ; et
un composé (c) qui produit un composé ayant un atome d'azote de base quand il est exposé à un rayonnement sélectionné à partir du groupe constitué par les rayons ultra-violets, la lumière visible et un faisceau d'électrons,
dans laquelle le composé (c) qui produit un composé ayant un atome d'azote de base quand il est exposé à un rayonnement est au moins un composé sélectionné dans le groupe constitué par les composés représentés par les formules (I) à (IX) ci-dessous : 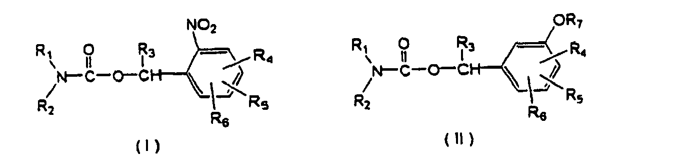 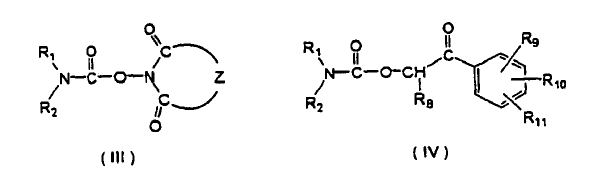 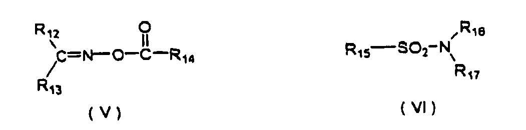 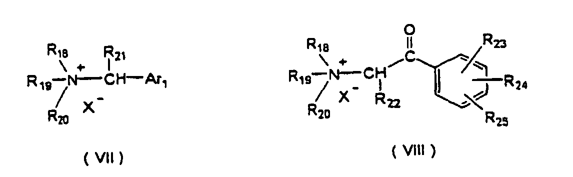 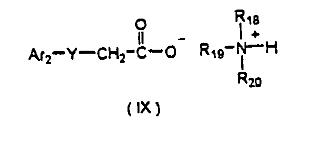 (dans les formules (I) à (IX), R₁, R₂, R₁₆, R₁₇, R₁₈, R₁₉ et R₂₀ désignent indépendamment un atome d'hydrogène, un groupe alkyle, un groupe cycloalkyle, un groupe aralkyle, ou un groupe aryle, R₃, R₈, R₂₁ et R₂₂ désignent indépendamment un atome d'hydrogène, un groupe alkyle, ou un groupe aryle, R₄, R₅ et R₆ désignent indépendamment un atome d'hydrogène, un atome d'halogène, ou un groupe alkyle, un groupe cycloalkyle, un groupe aralkyle, un groupe aryle, un groupe -NO₂, ou un groupe -OR₇, R₇ désigne un groupe alkyle, R₉, R₁₀, R₁₁, R₂₃, R₂₄ et R₂₅ désignent indépendamment un atome d'hydrogène, un atome d'halogène, un groupe alkyle, un groupe cycloalkyle, un groupe aralkyle, ou un groupe -OR7, R₁₂ et R₁₃ désignent indépendamment un groupe alkyle, un groupe cycloalkyle, un groupe aralkyle, un groupe aryle, un groupe acyle, ou un groupe -CN, R₁₄ désigne un groupe alkyle, un groupe cycloalkyle, un groupe aralkyle, un groupe aryle, ou un groupe -N(R₁)(R₂), R₁₅ désigne un groupe alkyle, un groupe cycloalkyle, un groupe aralkyle, ou un groupe aryle, Ar₁ et Ar₂ désignent des groupes aryle, Z désigne un groupe atomique qui, en même temps qu'avec un groupe imide dans la formule (III), forment un composé cyclique aliphatique monocyclique ou polycyclique, un composé cyclique aromatique, ou un composé hétéro cyclique, Y désigne un groupe NH, un atome de soufre, ou un atome d'oxygène, X- désigne un anion monovalent ou polyvalent et, en outre, R₁ et R₂ dans les formules (I) à (IV), deux de R₄ à R₆ dans les formules (I) et (II), deux de R₉ à R₁₁ dans la formule (IV), R₁₂ et R₁₃ dans la formule (V), R₁₆ et R₁₇ dans la formule (VI), deux de R₁₈ à R₂₀ dans les formules (VII) à (IX), Ar₁ et R₂₁ dans la formule (VII), et deux de R₂₃ à R₂₅ dans la formule (VIII) peuvent être liés ensemble pour former un composé cyclique aliphatique, un composé cyclique aromatique, ou un composé hétéro cyclique).

2. Composition d'encre selon la revendication 1, dans laquelle l'efficacité du composé (b) dans la production d'un acide quand il est exposé à un rayonnement est supérieure à l'efficacité du composé (c) lors de la production d'un composé ayant un atome d'azote de base quand il est exposé à un rayonnement.

3. Composition d'encre selon la revendication 1 ou la revendication 2, dans laquelle elle comprend en outre un colorant (d).

4. Composition d'encre selon la revendication 3, dans laquelle le colorant (d) est un pigment ou une teinture soluble dans l'huile.

5. Composition d'encre selon l'une quelconque des revendications 1 à 4, dans laquelle elle est utilisée dans un dispositif à jet d'encre.

6. Procédé d'enregistrement à jet d'encre comprenant :
une étape (a) consistant à décharger une composition d'encre sur un support d'enregistrement ; et
une étape (b) consistant à irradier la composition d'encre déchargée par un rayonnement de façon à cuire la composition d'encre,
la composition d'encre étant la composition d'encre selon l'une quelconque des revendications 1 à 5.

7. Matière imprimée enregistrée par le procédé d'enregistrement à jet d'encre selon la revendication 6.

8. Processus pour produire une plaque d'impression lithographique, le processus comprenant :
une étape (a) consistant à décharger la composition d'encre selon l'une quelconque des revendications 1 à 5 sur un support hydrophile ; et
une étape (b) consistant à irradier la composition d'encre déchargée par un rayonnement de façon à cuire la composition d'encre, formant ainsi une image hydrophobe sur le support hydrophile en cuisant la composition d'encre.

9. Plaque d'impression lithographique produite par le processus de production de plaque d'impression lithographique selon la revendication 8.
